(19) **Europäisches Patentamt / European Patent Office / Office européen des brevets**

(11) **EP 2 023 168 A1**

(12) **EUROPEAN PATENT APPLICATION**
published in accordance with Art. 153(4) EPC

(43) Date of publication:
**11.02.2009 Bulletin 2009/07**

(51) Int Cl.:
**G02B 5/30** (2006.01)

(21) Application number: **07737123.5**

(22) Date of filing: **27.04.2007**

(86) International application number:
**PCT/JP2007/000467**

(87) International publication number:
**WO 2007/129464 (15.11.2007 Gazette 2007/46)**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK RS**

(30) Priority: **01.05.2006 JP 2006127961**
**16.10.2006 JP 2006281810**
**26.12.2006 JP 2006350171**
**28.12.2006 JP 2006354137**
**19.02.2007 JP 2007037693**

(71) Applicants:
• **Mitsui Chemicals, Inc.**
**Tokyo 105-7117 (JP)**
• **SHARP CORPORATION**
**Osaka 545 (JP)**

(72) Inventors:
• **KAWAMOTO, Satoshi**
**Sodegaura-shi, Chiba 299-0265 (JP)**

• **TAKAHASHI, Eiichi**
**Sodegaura-shi, Chiba 299-0265 (JP)**
• **KIZU, Kouichi**
**Sodegaura-shi, Chiba 299-0265 (JP)**
• **TAKAOKA, Toru**
**Sodegaura-shi, Chiba 299-0265 (JP)**
• **TSUGAWA, Michio**
**Sodegaura-shi, Chiba 299-0265 (JP)**
• **SEKI, Ryouichi**
**Sodegaura-shi, Chiba 299-0265 (JP)**
• **SHICHIJYO, Shiro**
**Sodegaura-shi, Chiba 299-0265 (JP)**
• **YAMADA, Yoshikazu**
**Sodegaura-shi, Chiba 299-0265 (JP)**
• **SAKAI, Akira**
**Seika-cho, Souraku-gun, Kyoto 6190232 (JP)**

(74) Representative: **HOFFMANN EITLE**
**Patent- und Rechtsanwälte**
**Arabellastrasse 4**
**81925 München (DE)**

(54) **METHOD OF COMPENSATING WAVELENGTH DEPENDENCE OF BIREFRINGENCE OF OPTICAL PART, OPTICAL PART, AND DISPLAY OBTAINED WITH THESE**

(57) The present invention is to provide a method of compensating the wavelength dependence of birefringence of an optical part (B) which comprises using a film (a) made of a (co)polymer (α) obtained from at least one olefin selected among 4-methyl-1-pentene, 3-methyl-1-pentene, and 3-methyl-1-butene as a (co)monomer ingredient.

Fig. 4

P2
A2
L
A1
C
P1

1100

**Description**

TECHNICAL FIELD

The present invention relates to a technique for compensating the wavelength dependence of birefringence of various optical parts.

BACKGROUND ART

With the development of various display devices in recent years, importance of various optical parts such as a retardation plate, a polarizing plate, an anti-reflection film and the like has been increased. When a liquid crystal display element is described as an example, the liquid crystal display element modulates the polarizing state of light at a liquid crystal cell and the light is filtered at a polarizing film, whereby light and dark of display is controlled and images are displayed.

Herein, since the circularly polarized light component that cannot be filtered at a polarizing film is contained in the light passing through the liquid crystal cell so that the contrast of the display might be worsened in some cases. Then, before the light passing through the liquid crystal cell is incident on the polarizing film, the light passes through the retardation plate, whereby such a circularly polarized light is compensated for improving the contrast of the liquid crystal display element, which has been widely carried out.

In Patent Document 1 (Japanese Patent Laid-open No. 1992-284402), there has been disclosed a technique on a retardation compensation sheet obtained by stretching and orienting a polymer mainly composed of 4-methylpentene-1. According to the technique as disclosed in this Document, it is possible to provide a good liquid crystal display having a high contrast ratio in a wide temperature range.

Furthermore, many of optical parts actively utilize birefringence of a material constituting the element for the purpose of controlling polarized light or the like. For example, a retardation plate or the like can be cited. Further, even in an optical part which does not actively utilize birefringence, performance of the element is affected by the birefringence of the material constituting the element because of the light having a high polarization degree passing through or the like. For example, a polarizing plate protective film or the like can be cited.

In Patent Document 2 (Japanese Patent Laid-open No. 2000-275433), there has been disclosed a technique employing a material of polymethylpentene for a polarizing plate protective film which is laminated on a polarizing film. According to this Document, since polymethylpentene is used and has a smaller photo-elastic coefficient as compared to TAC (triacetylcellulose) or PC (polycarbonate), its birefringence is not changed and a excellent display in color non-uniformity or contrast is obtained when a polarizing plate laminated with this polymethylpentene is inserted into the liquid crystal display. Furthermore, it is possible to provide a polarizing plate which is excellent in moisture resistance and heat resistance as compared to TAC. Furthermore, since generation of carbon degraded products is suppressed during melt molding and those appearance quality is excellent even if molded by an extrusion molding method are obtained as compared to a norbornene based resin, such plates can be produced with good productivity.

Herein, whether the birefringence of a material constituting the element is actively used or not, the birefringence of a material constituting the element is preferably stabilized by controlling it to a desired value.

For example, in the optical part using light in a wide wavelength range such as white light or the like, the wavelength dependence of birefringence of the optical part becomes a problem. When the birefringence of the optical part is greatly changed by the wavelength, an optical part which suitably functions in one wavelength range does not function in other wavelength range. As a result, it is difficult to use the optical part in a wide wavelength range. A display element such as a liquid crystal display or the like using almost entire range of visible light is particularly greatly affected by such a problem, so there occurs undesirable phenomenon such as coloring or the like in some cases. Accordingly, to set the magnitude of birefringence with respect to the wavelength to a desired value has a practically high technical value.

However, in general, the birefringence of a material constituting the optical part has the wavelength dependence, and large birefringence is usually exhibited as the wavelength is shorter. For this reason, when the light passing through the optical part is constructed with two or more wavelengths, the light is affected by the birefringence which is different at each wavelength.

For example, when a retardation plate is used in a wide wavelength range such as white light or the like, from the viewpoint of such a wavelength dependence of birefringence, it is preferable that the retardation caused by the birefringence is small as the wavelength is shorter. Then, there has been reviewed a technique for compensating the wavelength dependence of birefringence of a material constituting the optical part by using a film exhibiting small birefringence as the wavelength is shorter.

However, in the usual optical material, since the birefringence is large as the wavelength is shorter, it is difficult to achieve such a retardation plate with one piece of film, the retardation plate must be constituted with two or more pieces of films. For this reason, there has been room for improvement from the viewpoints of a complicated constitution, an increase in the cost, a decrease in the optical use efficiency or the like.

As an optical film material having birefringence exceptionally exhibiting reverse wavelength dispersion, that is, having small birefringence as the wavelength is shorter, there are resins as described in Patent Documents 3 to 7.

In Patent Document 3 (Japanese Patent Laid-open No. 1998-68816), there has been disclosed a technique for laminating a 1/4 wavelength plate with a 1/2 wavelength plate at a specific angle and using the laminate as a 1/4 wavelength plate having a small retardation caused by birefringence as the wavelength is shorter. However, in this technique, since the configuration of the 1/4 wavelength plate becomes complicated, it is disadvantageous from the viewpoint of the cost of a raw material or production, in addition thereto, a thickness of the 1/4 wavelength plate becomes thick, the weight or the thickness of the display device using this plate might be excessive in some cases.

In order to realize an optical film having a small retardation caused by birefringence as the wavelength is shorter with a simpler constitution, there has been proposed the use of an optical film composed of cellulose acetate (Patent Document 4 (Japanese Patent Laid-open No. 2000-137116)), polycarbonate containing a fluorene skeleton (Patent Document 5 (Japanese Patent Laid-open No. 2002-156528)), a hydride of styrene polymer (Patent Document 6 (International Publication Pamphlet No. 01/81957)) and the like.

Furthermore, as the optical film material having small birefringence as the wavelength is shorter, in addition, a resin is described in Patent Document 7 (International Publication Pamphlet No. 03/32060). However, there has been room for improvement of the resin described in the Document from the viewpoint of the stability of optical properties.

Patent Document 1: Japanese Patent Laid-open No. 1992-284402
Patent Document 2: Japanese Patent Laid-open No. 2000-275433
Patent Document 3: Japanese Patent Laid-open No. 1998-68816
Patent Document 4: Japanese Patent Laid-open No. 2000-137116
Patent Document 5: Japanese Patent Laid-open No. 2002-156528
Patent Document 6: International Publication Pamphlet No. 01/81957
Patent Document 7: International Publication Pamphlet No. 03/032060
Patent Document 8: Japanese Patent Laid-open No. 1984-206418
Patent Document 9: Japanese Patent Laid-open No. 1994-145248
Patent Document 10: Japanese Patent Laid-open No. 1997-268243
Patent Document 11: Japanese Patent Laid-open No. 1999-124479
Patent Document 12: Japanese Patent Laid-open No. 2004-177785
Patent Document 13: Japanese Patent Laid-open No. 2003-105022

DISCLOSURE OF THE INVENTION

However, in the aforementioned various resins proposed as a material of an optical film having a small retardation as the wavelength is shorter have some technical assignments as described below and the like: optical properties due to water absorption might be unstable; the high cost might be involved and the production procedure might become complicated due to complex chemical structures; the weight of a display element might be increased because of high density; stricter countermeasures are needed at the time of disposal because of an aromatic ring contained in the resin. Thus, its solution has been in demand.

(First Invention)

The first invention relates to:

[1] a method of compensating the wavelength dependence of birefringence of an optical part (B) which comprises using a film (a) made of a (co)polymer ($\alpha$) obtained from at least one olefin selected among 4-methyl-1-pentene, 3-methyl-1-pentene and 3-methyl-1-butene as a (co)monomer ingredient;
[2] the method as set forth in [1], in which said film (a) is laminated to said optical part (B), and the wavelength dependence of the laminate of said optical part (B) and said film (a) on the retardation (angle conversion) caused by the birefringence is smaller than that of said optical part (B) alone;
[3] the method as set forth in [1], in which a polarizing plate (P) is further used, said film (a) is arranged between said optical part (B) and said polarizing plate (P), and an optical part other than said film (a) having the in-plane retardation is not practically present between said optical part (B) and said polarizing plate (P);
[4] the method as set forth in [1], in which said optical part (B) is a light-transmitting film (b1);
[5] the method as set forth in [4], in which said film (a) and said light-transmitting film (b1) are directly laminated or laminated through an adhesive layer;

[6] the method as set forth in [4] or [5], in which said light-transmitting film (b1) is a polarizing plate protective film;

[7] the method as set forth in [4] or [5], in which said light-transmitting film (b1) is a retardation plate;

[8] the method as set forth in [4] or [5], in which said light-transmitting film (b1) is an optical compensation film;

[9] the method as set forth in [1], in which said optical part (B) is a liquid crystal panel (b2);

[10] the method as set forth in [9], in which said film (a) and said liquid crystal panel (b2) are directly laminated or laminated through an adhesive layer;

[11] the method as set forth in any one of [1] to [10], in which the in-plane retardation $R_{550}$ at a wavelength of 550 nm of said film (a) satisfies the following condition,

$$|R_{550}| < 30 \ (nm);$$

[12] the method as set forth in any one of [1] to [10], in which the in-plane retardation $R_{550}$ at a wavelength of 550 nm of said film (a) satisfies the following condition,

$$30 \ (nm) \leq |R_{550}| < 300 \ (nm);$$

[13] a display device obtained by using the method as set forth in any one of [1] to [12];

[14] an optical part comprising at least one layer of the film (a) made of a (co)polymer ($\alpha$) obtained from at least one olefin selected among 4-methyl-1-pentene, 3-methyl-1-pentene and 3-methyl-1-butene as a (co)monomer ingredient;

[15] the optical part as set forth in [14], wherein said optical part is a retardation plate;

[16] an elliptical polarizing plate or a circular polarizing plate, comprising the optical part as set forth in [15] and a polarizing plate;

[17] the elliptical polarizing plate or the circular polarizing plate as set forth in [16], further comprising an adhesive resin layer;

[18] the optical part as set forth in [14], wherein the optical part is an anti-reflection film, a transparent conductive substrate, a diffusion sheet, a light collection sheet, an optical compensation film or a polarizing plate;

[19] the optical part as set forth in any one of [14], [15] and [18], wherein the in-plane retardation $R_{550}$ at a wavelength of 550 nm of said film (a) satisfies the following condition,

$$|R_{550}| < 30 \ (nm);$$

[20] the optical part as set forth in any one of [14], [15] and [18], wherein the in-plane retardation $R_{550}$ at a wavelength of 550 nm of said film (a) satisfies the following condition,

$$30 \ (nm) \leq |R_{550}| < 300 \ (nm);$$

[21] a display device comprising the optical part as set forth in any one of [14], [15] and [18];

[22] an optical film comprising a (co)polymer ($\alpha$) obtained from at least one olefin selected among 4-methyl-1-pentene, 3-methyl-1-pentene and 3-methyl-1-butene as a (co)monomer ingredient, satisfying the following condition,

$$R(450)/R(590) \leq 0.95$$

wherein, in the above formula, R(450) and R(590) each represent the in-plane retardation at wavelengths of 450 nm and 590 nm of said optical film;

[23] the optical film as set forth in [22], satisfying the following condition,

$$R(450)/R(590) \leq 0.85;$$

[24] the optical film as set forth in [22] or [23], further satisfying the following condition,

$$|R_{50}(590)| \leq 200 \text{ nm}$$

wherein, in the above formula, $R_{50}(590)$ represents the in-plane retardation at a wavelength of 590 nm per a thickness of 50 $\mu$m;

[25] an optical film comprising an organic polymer, wherein the in-plane retardation $R_{50}(590)$ at a wavelength of 590 nm per a thickness of 50 $\mu$m satisfies the following condition (1-1), and the in-plane retardations R(450) and R(590) at wavelengths of 450 nm and 590 nm satisfy the following condition (1-2),

$$10 \text{ nm} \leq |R_{50}(590)| \leq 20 \text{ nm} \quad (1-1)$$

$$R(450)/R(590) \leq 0.95 \qquad (1-2);$$

[26] the optical film as set forth in [25], comprising a (co)polymer ($\alpha$) obtained from at least one olefin selected among 4-methyl-1-pentene, 3-methyl-1-pentene and 3-methyl-1-butene as a (co)monomer ingredient;

[27] the optical film as set forth in [25] or [26], wherein the in-plane retardation $R_{550}$ at a wavelength of 550 nm satisfies the following condition,

$$|R_{550}| < 30 \text{ (nm)};$$

[28] the optical film as set forth in [25] or [26], wherein the in-plane retardation $R_{550}$ at a wavelength of 550 nm satisfies the following condition,

$$30 \text{ (nm)} \leq |R_{550}| < 300 \text{ (nm)}$$

[29] a copolymer of 4-methyl-1-pentene with $\alpha$-olefin having not less than 10 and not more than 14 carbon atoms other than said 4-methyl-1-pentene, wherein the proportion of the structural unit derived from said $\alpha$-olefin to the total copolymer is from not less than 1 and not more than 9 % by mole;

[30] a film comprising the copolymer as set forth in [29];

[31] the film as set forth in [30], wherein the film is formed by a melt extrusion molding method and then obtained by stretching and aligning;

[32] the film as set forth in [30] or [31], wherein the film is used for optical purposes;

[33] the film as set forth in any one of [30] to [32], wherein the film is a retardation plate;

[34] the film as set forth in [33], wherein the retardation $R_{50}(590)$ at a wavelength of 590 nm per a thickness of 50 $\mu$m of said retardation plate satisfies the following condition,

$$R_{50}(590) \leq -22 \text{ nm};$$

[35] the film as set forth in [33] or [34], wherein said retardation plate is a retardation film satisfying the following characteristics,

$$R(450)/R(590) \leq 0.9$$

wherein, in the above formula, R(450) and R(590) each represent the in-plane retardation at wavelengths of 450 nm and 590 nm of said retardation film; and

[36] the film as set forth in any one of [30] to [34], wherein the film is a polarizing protective film or an optical compensation film.

(Second Invention)

The second invention provides:

(1) a laminated polarizing plate in which a film (b) containing a polymer having a structural unit derived from at least one selected among 4-methyl-1-pentene, 3-methyl-1-pentene and 3-methyl-1-butene is directly or indirectly laminated on one surface of a polarizer (a) and a film (c) containing a polymer having a structural unit derived from cyclic olefin is directed or indirectly laminated on the other surface of said polarizer (a), wherein the retardation R(590) at a wavelength of 590 nm of said film (b) satisfies the relationship of the following formula (2-1),

$$R(590) \geq 5 \ (nm) \qquad (2-1);$$

(2) the laminated polarizing plate as set forth in (1), wherein the retardation R(450) at a wavelength of 450 nm of said film (b) and the retardation R(590) at a wavelength of 590 nm satisfy the relationship of the following formula (2-2),

$$R(450)/R(590) \leq 1 \qquad (2-2);$$

(3) the laminated polarizing plate as set forth in (1), wherein said polarizer (a) comprises iodine and/or dichroic dye, and a polyvinyl alcohol resin;

(4) a liquid crystal display element having the laminated polarizing plate as set forth in any one of (1) to (3), and a liquid crystal cell;

(5) the liquid crystal display element as set forth in (4), wherein said film (b) is arranged at a side of said liquid crystal cell on the basis of said polarizer (a); and

(6) a display device having the laminated polarizing plate as set forth in any one of (1) to (3) and/or the liquid crystal display element as set forth in (4) or (5).

(Third Invention)

The third invention relates to:

[1] a laminate comprising:

first and second polarizing films,
a liquid crystal cell L arranged between said first and second polarizing films, and
a plurality of retardation films containing at least two pieces of retardation films A and at least one piece of retardation film C arranged between said first and second polarizing films,
wherein at least one piece of said retardation film C is arranged adjacent to said first or second polarizing film, two pieces of said retardation films A and said liquid crystal cell L are arranged in the order of A, L and A, said retardation films A satisfy any of the following formulae (3-1) and (3-2), and at the same time said retardation film C satisfies the following formula (3-3),

$$nx > ny \geq nz \qquad (3-1)$$

$$nz \geq nx > ny \qquad (3-2)$$

$$nx \geq ny > nz \qquad (3-3)$$

wherein, in the above formulae (3-1) to (3-3), nx is the maximum in-plane refractive index of the retardation film; ny is the refractive index in the direction orthogonal to the direction in which the maximum in-plane refractive index of the retardation film occurs; and nz is the vertical refractive index of the retardation film;

[2] the laminate as set forth in [1], wherein said liquid crystal cell L, said retardation film C and two pieces of said retardation films A are arranged in the order of C, A, L and A;

[3] the laminate as set forth in [1], wherein said retardation film comprises two pieces of said retardation films C, and said liquid crystal cell L, two pieces of said retardation films C and two pieces of said retardation films A are arranged in the order of C, A, L, A and C;

[4] the laminate as set forth in any one of [1] to [3], wherein the in-plane retardation Re(450) at a wavelength of 450 nm of at least one piece of said retardation film A, the in-plane retardation Re(550) at a wavelength of 550 nm and the in-plane retardation Re(650) at a wavelength of 650 nm satisfy the relationships of,

$$Re(450)/Re(550) < 1 \qquad (3-4)$$

and

$$Re(650)/Re(550) > 1 \qquad (3-5);$$

[5] the laminate as set forth in [4], wherein the in-plane retardation Re (450) at a wavelength of 450 nm of said retardation film A, the in-plane retardation Re(550) at a wavelength of 550 nm and the in-plane retardation Re(650) at a wavelength of 650 nm satisfy the relationship of $0.70 \leq Re(450)/Re(550) < 0.90$;

[6] the laminate as set forth in any one of [1] to [5], wherein the absolute value of the in-plane retardation Re(550) at a wavelength of 550 nm of at least one piece of said retardation film A is within the range of $10 \text{ nm} \leq |Re(550)| \leq 80 \text{ nm}$;

[7] the laminate as set forth in any one of [1] to [6], wherein the retardations K(450), K(550) and K(650) in the thickness direction at wavelengths of 450 nm, 550 nm and 650 nm of at least one piece of said retardation film C satisfy the relationships of,

$$K(450)/K(550) \geq 1 \qquad (3-6)$$

and

$$K(650)/K(550) \leq 1 \qquad (3-7);$$

[8] the laminate as set forth in any one of [1] to [7], wherein said retardation film A comprises a layer containing a 4-methyl-1-pentene (co)polymer;

[9] a liquid crystal display element comprising the laminate as set forth in any one of [1] to [8];

[10] a retardation film used as said retardation film A in the laminate as set forth in any one of [1] to [8], satisfying any of said formulae (3-1) and (3-2);

[11] the retardation film as set forth in [10], wherein the absolute value of the in-plane retardation Re(550) at a wavelength of 550 nm satisfies the relationship of $10 \text{ nm} \leq |Re(550)| \leq 80 \text{ nm}$; and

[12] the retardation film as set forth in [10] or [11], comprising a 4-methyl-1-pentene (co)polymer.

(Fourth Invention)

The fourth invention relates to:

[1] a laminate comprising:

first and second polarizing films,
a liquid crystal cell L arranged between said first and second polarizing films, and
a plurality of retardation films containing a retardation film A1, a retardation film A2 and a retardation film C1 arranged between said first and second polarizing films,
wherein said retardation film A1, said retardation film A2, said retardation film C1 and said liquid crystal cell L are arranged in the order of L, A1, C1 and A2, said retardation film A1 and said retardation film A2 each independently satisfy any of the following formulae (4-1) and (4-2), and at the same time said retardation film C1 satisfies the following formula (4-3),

$$nx > ny \geq nz \qquad (4-1)$$

$$nz \geq nx > ny \qquad (4-2)$$

$$nx \geq ny > nz \qquad (4-3)$$

wherein, in the above formulae (4-1) to (4-3), nx is the maximum in-plane refractive index of the retardation film; ny is the refractive index in the direction orthogonal to the direction in which the maximum in-plane refractive index of the retardation film occurs; and nz is the vertical refractive index of the retardation film;

[2] the laminate as set forth in [1], wherein said retardation film further comprises a retardation film C2,
said retardation film A1, said retardation film A2, said retardation film C1, said retardation film C2 and said liquid crystal cell L are arranged in the order of L, A1, C1, A2 and C2, and
said retardation film C2 satisfies the following formula (4-8),

$$nz > nx \geq ny \qquad (4-8);$$

[3] the laminate as set forth in [1] or [2], wherein the in-plane retardation Re(450) at a wavelength of 450 nm of said retardation film A1 or said retardation film A2, the in-plane retardation Re(550) at a wavelength of 550 nm and the in-plane retardation Re(650) at a wavelength of 650 nm satisfy the relationships of,

$$Re(450)/Re(550) < 1 \quad (4-4)$$

and

$$Re(650)/Re(550) > 1 \quad (4-5);$$

[4] the laminate as set forth in any one of [1] to [3], wherein the absolute value of the in-plane retardation Re(550) at a wavelength of 550 nm of said retardation film A1 or said retardation film A2 is within the range of 10 nm ≤ |Re(550)| ≤ 80 nm;

[5] the laminate as set forth in any one of [1] to [4], wherein the retardations K(450), K(550) and K(650) in the thickness direction at wavelengths of 450 nm, 550 nm and 650 nm of said retardation film C1 or said retardation film C2 satisfy the relationships of,

$$K(450)/K(550) \geq 1 \quad (4-6)$$

and

$$K(650)/K(550) \leq 1 \quad (4-7);$$

[6] the laminate as set forth in any one of [1] to [5], wherein said retardation film A1 or said retardation film A2 comprises a layer containing a 4-methyl-1-pentene (co)polymer;

[7] a liquid crystal display element comprising the laminate as set forth in any one of [1] to [6];

[8] a retardation film used as said retardation film A1 or said retardation film A2 in the laminate as set forth in any one of [1] to [6], satisfying any of said formulae (4-1) and (4-2);

[9] the retardation film as set forth in [8], wherein the absolute value of the in-plane retardation Re(550) at a wavelength of 550 nm satisfies the relationship of 10 nm ≤ |Re(550)| ≤ 80 nm; and

[10] the retardation film as set forth in [8] or [9], comprising a 4-methyl-1-pentene (co)polymer.

EFFECT OF INVENTION

According to the first invention, an optical film having a small retardation as the wavelength is shorter is obtained.

Furthermore, according to the first invention, it is possible to provide a material excellent in a balance of other optical properties such as transparency and the like, exhibiting birefringence sufficient for various optical applications including a retardation plate and the birefringence exhibiting reverse wavelength dispersion, and the use.

BRIEF DESCRIPTION OF THE DRAWINGS

The above and other objects, features and advantages will be further apparent from the following detailed description of the preferred embodiments in conjunction with the accompanying drawings.

Fig. 1 is a view illustrating the constitution of a polarizing plate according to an embodiment.
Fig. 2 is a view illustrating the constitution of a liquid crystal display device according to an embodiment.
Fig. 3 is a view illustrating the wavelength dependence of a retardation of a film composed of 4-methyl-1-pentene according to an Example.
Fig. 4 is a cross-sectional view schematically illustrating the constitution of a laminate according to an embodiment.
Fig. 5 is a cross-sectional view schematically illustrating the constitution of a laminate according to an embodiment.
Fig. 6 is a view schematically illustrating the constitution of a liquid crystal display element according to an embodiment.
Fig. 7 is a view explaining a method for compensating light according to an embodiment.
Fig. 8 is a view explaining a method for compensating light according to an embodiment.
Fig. 9 is a perspective view illustrating the constitution of a laminate according to an Example.
Fig. 10 is a view illustrating the evaluation results of a laminate according to an Example.
Fig. 11 is a perspective view illustrating the constitution of a laminate according to an Example.
Fig. 12 is a view explaining a method for compensating light according to an Example.
Fig. 13 is a view illustrating the evaluation results of a laminate according to an Example.
Fig. 14 is a perspective view illustrating the constitution of a laminate according to an Example.
Fig. 15 is a view illustrating wavelength dispersion of a retardation film A of a laminate according to an Example.
Fig. 16 is a view illustrating the evaluation results of a laminate according to an Example.
Fig. 17 is a view illustrating wavelength dispersion of a retardation film A of a laminate according to an Example.
Fig. 18 is a view illustrating the evaluation results of a laminate according to an Example.
Fig. 19 is a view explaining a method for compensating light according to an Example.
Fig. 20 is a view explaining a method for compensating light according to an Example.

Fig. 21 is a view explaining a conventional method for compensating light.

Fig. 22 is a view explaining a conventional method for compensating light.

Fig. 23 is a view explaining a conventional method for compensating light.

Fig. 24 is a cross-sectional view schematically illustrating the constitution of a laminate according to an embodiment.

Fig. 25 is a view explaining a method for compensating light according to an embodiment.

Fig. 26 is a cross-sectional view schematically illustrating the constitution of a laminate according to an embodiment.

Fig. 27 is a view explaining a method for compensating light according to an embodiment.

Fig. 28 is a view schematically illustrating the constitution of a liquid crystal display element according to an embodiment.

Fig. 29 is a perspective view illustrating the constitution of a laminate according to an Example.

Fig. 30 is a view illustrating the evaluation results of a laminate according to an Example.

Fig. 31 is a perspective view illustrating the constitution of a laminate according to an Example.

Fig. 32 is a view explaining a method for compensating light according to an Example.

Fig. 33 is a view illustrating the evaluation results of a laminate according to an Example.

Fig. 34 is a perspective view illustrating the constitution of a laminate according to an Example.

Fig. 35 is a view illustrating wavelength dispersion of a retardation film A of a laminate according to an Example.

Fig. 36 is a view illustrating the evaluation results of a laminate according to an Example.

Fig. 37 is a perspective view illustrating the constitution of a laminate according to an Example.

Fig. 38 is a view illustrating the evaluation results of a laminate according to an Example.

Fig. 39 is a view explaining a conventional method for compensating light.

Fig. 40 is a view explaining a conventional method for compensating light.

Fig. 41 is a view explaining a conventional method for compensating light.

Fig. 42 is a view illustrating the relationship between the wavelength and the absolute value of a retardation of a film according to an Example.

Fig. 43 is a view illustrating the relationship between the wavelength and the absolute value of a retardation of a film according to an Example.

REFERENCE NUMBERS IN THE DRAWINGS

| 1 | backlight side polarizing film |
| 2 | light emitting side polarizing film |
| 3 | first retardation film C |
| 4 | first retardation film A |
| 5 | liquid crystal cell |
| 6 | second retardation film A |
| 7 | second retardation film C |
| 13 | liquid crystal cell |
| 15 | first retardation film C |
| 101 | protective film |
| 102 | hard coat layer |
| 103 | second polarizing plate protective film |
| 104 | polarizer |
| 105 | first polarizing plate protective film |
| 106 | adhesive layer |
| 107 | release film |
| 114 | polarizing plate |
| 115 | retardation plate |
| 116 | optical compensation film |
| 117 | liquid crystal panel |
| 118 | retardation plate |
| 119 | polarizing plate |
| 120 | backlight unit |
| 1100 | laminate |
| 1120 | laminate |
| 2110 | laminate |
| 2120 | laminate |

A  retardation film
A1  retardation film
A2  retardation film
C  retardation film
C1  retardation film
C2  retardation film
L  liquid crystal cell
P1  polarizing film
P2  polarizing film

BEST MODE FOR CARRYING OUT THE INVENTION

Embodiments of each invention will be described below.

(First Invention)

The inventors of the first invention have conducted an extensive study and as a result, have found that a film composed of a specific olefin based (co) polymer has the desired wavelength dependence of birefringence and at the same time, it is easy to realize the stability, low cost, lightweightness and low environmental load with the film, thus contributing to solving the above objects.

In the first invention, unless otherwise particularly mentioned, birefringence and retardation are respectively in-plane birefringence and retardation.

Furthermore, in the first invention, the in-plane retardation R and retardation Rth in the thickness direction are respectively represented by the following formulae,

$$\mathrm{In\text{-}plane\ retardation\ R = (n_X - n_Y) \cdot d}$$

$$\mathrm{Retardation\ in\ the\ thickness\ direction\ Rth = |(n_X + n_Y)/2 - n_Z| \cdot d}$$

Incidentally, herein, $n_X$, $n_Y$ and $n_Z$ are refractive indexes in the respective axial directions of the X-axis in which the in-plane refractive index is the greatest, the Y-axis perpendicular to the X-axis in the plane and the Z-axis in the thickness direction of the film, while the film thickness of the film is taken as d. Further, the retardation is measured under conditions of a temperature of 23 degree centigrade and a relative humidity of 50%.

(First Embodiment)

This embodiment relates to a method of compensating the wavelength dependence of birefringence. Specifically, using a film (a) made of a (co) polymer ($\alpha$) obtained from at least one olefin selected among 4-methyl-1-pentene, 3-methyl-1-pentene and 3-methyl-1-butene as a (co)monomer ingredient, the wavelength dependence of birefringence of an optical part (optical element) (B) is compensated.

Firstly, the film (a) and a method for producing the film, and the (co)polymer ($\alpha$) will be described hereinafter.

(Film (a))

The film (a) used for the above compensation method is made of a specific (co)polymer ($\alpha$) obtained from at least one olefin selected among 4-methyl-1-pentene, 3-methyl-1-pentene and 3-methyl-1-butene as a (co)monomer ingredient.

Herein, "made of" refers to both a case in which the entire film (a) is constructed with a (co)polymer ($\alpha$) and a case in which a part of the film (a) is constructed with a (co)polymer ($\alpha$).
Accordingly, the film (a) may or may not contain a component other than the (co)polymer ($\alpha$).

The content of the (co) polymer ($\alpha$) in the film (a) is, for example, not less than 20 % by weight and preferably not less than 50 % by weight from the viewpoint of further improvement of heat resistance. Furthermore, the content of the (co)polymer ($\alpha$) in the film (a) is not more than 100 % by weight and preferably not more than 98 % by weight from the viewpoint of further improvement of mechanical characteristics.

Hereinafter, the components constituting the film (a) will be described in further detail.

The in-plane retardation $R_{550}$ at a wavelength of 550 nm of the film (a) satisfies, for example, the following condition,

$$|R_{550}| < 30 \ (nm)$$

Meanwhile, the in-plane retardation $R_{550}$ at a wavelength of 550 nm of the film (a), may satisfy, for example, the following condition,

$$30 \ (nm) \leq |R_{550}| < 300 \ (nm)$$

((Co)polymer ($\alpha$))

A specific (co) polymer ($\alpha$) used for the film (a) is obtained from at least one olefin selected among 4-methyl-1-pentene, 3-methyl-1-pentene and 3-methyl-1-butene as a (co)monomer ingredient.
Examples of this specific olefin based (co)polymer ($\alpha$) include a homopolymer of 3-methyl-1-butene, 3-methyl-1-pentene or 4-methyl-1-pentene or a copolymer thereof, and other copolymerizable monomers, for example, a copolymer with styrene, acrylonitrile, vinyl chloride, vinyl acetate, acrylate ester, methacrylate ester and the like, or a blend of the above components or other thermoplastic resins or synthetic rubbers, a block copolymer, a graft copolymer and the like.
Of the structural units of the (co)polymer ($\alpha$), the structural unit derived from 4-methyl-1-pentene, 3-methyl-1-pentene and 3-methyl-1-butene is usually from not less than 20 and not more than 100 % by mole, preferably from 50 to 100 % by mole and further preferably from not less than 80 and not more than 100 % by mole in total.
When the content of the structural unit derived from 4-methyl-1-pentene, 3-methyl-1-pentene or 3-methyl-1-butene is excessively high, for example, mechanical characteristics might be worsened. When the content is excessively small, for example, heat resistance might be worsened. As such, desired optical characteristics might not be achieved or the like. When the content of the structural unit derived from 4-methyl-1-pentene, 3-methyl-1-pentene or 3-methyl-1-butene is within the above range, it is preferable because a resin excellent in a balance of various characteristics such as transparency, heat resistance and the like is obtained.
Of (co)polymers ($\alpha$), preferably used is a 4-methyl-1-pentene (co)polymer because it is excellent in transparency, peeling property and the like, and suitable for the use in combination with an optical element (an optical part).
Further, a 3-methyl-1-pentene (co)polymer and a 3-methyl-1-butene (co)polymer are excellent in heat resistance, and are preferable from the viewpoints of the degree of freedom of the process, the degree of freedom of use condition and the like.
Hereinafter, each copolymer will be explained in further detail.

(4-methyl-1-pentene (co)polymer)

The 4-methyl-1-pentene (co) polymer used as a (co) polymer ($\alpha$) is specifically a homopolymer of 4-methyl-1-pentene or a copolymer of 4-methyl-1-pentene with ethylene or other $\alpha$-olefin having not less than 3 and not more than 20 carbon atoms, for example, propylene, 1-butene, 1-hexene, 1-octene, 1-decene, 1-tetradecene, 1-octadecene and the like.
The 4-methyl-1-pentene (co)polymer usually contains a structural unit derived from 4-methyl-1-pentene in an amount of not less than 85 % by mole and preferably not less than 90 % by mole.
The constituent component which is not derived from 4-methyl-1-pentene constituting the 4-methyl-1-pentene (co)polymer is not particularly limited and various monomers capable of performing copolymerization with 4-methyl-1-pentene can be suitably used. However, from the viewpoints of the easiness of acquisition, copolymerization characteristics and the like, ethylene or $\alpha$-olefin having not less than 3 and not more than 20 carbon atoms can be preferably used. Of these, preferably used is $\alpha$-olefin having not less than 7 and not more than 20 carbon atoms, and particularly preferably used are 1-decene, 1-dodecene, 1-tetradecene, 1-hexadecene and 1-octadecene from the fact that characteristics of the retardation obtained as the wavelength is shorter are more stably exhibited.
The melt flow rate (MFR) of the 4-methyl-1-pentene (co)polymer used as a (co)polymer ($\alpha$) measured in accordance with ASTM D1238 under conditions of a load of 5 kg and a temperature of 260 degrees centigrade is decided in many ways depending on the use, but it is usually from not less than 1 and not more than 50 g/10 min., preferably from not less than 2 and not more than 40 g/10 min. and further preferably from not less than 5 and not more than 30 g/10 min. When the melt flow rate of the 4-methyl-1-pentene (co)polymer is excessively small, for example, melt extrusion molding might be difficult. When it is excessively high, for example, the flowing of the resin extruded from a T-die in melt extrusion molding is fast so that it might be difficult to have a uniform film thickness on a cast roll. When the melt flow rate of the 4-methyl-1-pentene (co)polymer is within the above range, the film formability and the appearance of the obtained resin are good.

Meanwhile, the melting point of the 4-methyl-1-pentene (co)polymer is, for example not less than 100 degrees centigrade and preferably not less than 150 degrees centigrade from the viewpoint of further improvement of heat resistance. The melting point of the 4-methyl-1-pentene (co)polymer is, for example, not more than 240 degrees centigrade and preferably not more than 200 degrees centigrade from the viewpoint of further improvement of moldability in melt extrusion molding.

A method for preparing a 4-methyl-1-pentene (co) polymer will be described below.
The method for preparing a 4-methyl-1-pentene (co) polymer is not particularly limited, and the 4-methyl-1-pentene (co) polymer can be prepared by using a known catalyst such as a Ziegler-Natta catalyst, a metallocene catalyst or the like. For example, in accordance with the method described in Patent Document 8 (Japanese Patent Laid-open No. 1984-206418), the 4-methyl-1-pentene (co)polymer can be obtained by polymerizing 4-methyl-1-pentene with the aforementioned ethylene or $\alpha$-olefin in the presence of a catalyst.

(3-methyl-1-pentene (co)polymer)

The 3-methyl-1-pentene (co) polymer used as a (co) polymer ($\alpha$) is a homopolymer of 3-methyl-1-pentene or a copolymer. When it is a copolymer, the preferable type of comonomer, the content of comonomer, MFR, the melting point and the like are the same as those for the above 4-methyl-1-pentene (co)polymer.

The 3-methyl-1-pentene (co)polymer can be prepared in accordance with a conventionally known method, and it can be prepared, for example, by the method described in Patent Document 9 (Japanese Patent Laid-open No. 1994-145248).

(3-methyl-1-butene (co)polymer)

The 3-methyl-1-butene (co)polymer used as a (co)polymer ($\alpha$)is a homopolymer of 3-methyl-1-butene or a copolymer. When it is a copolymer, the preferable type of comonomer, the content of comonomer, MFR, the melting point and the like are the same as those for the above 4-methyl-1-pentene (co)polymer.

The 3-methyl-1-butene (co)polymer can be prepared in accordance with a conventionally known method, and it can be prepared, for example, by the method described in Patent Document 9.

(Components constituting film (a) other than (co)polymer ($\alpha$))

The film (a) used in this embodiment may contain various components other than the aforementioned (co)polymer ($\alpha$). The components other than the (co)polymer ($\alpha$) may be various resins or various rubbers other than the (co)polymer ($\alpha$). As various resins, resins particularly excellent in transparency are preferred, and there can be used, for example, various polyolefins such as cyclic olefin (co)polymer, polycarbonate, polystyrene, a cellulose acetate resin, a fluorinated resin, polyester, an acrylic resin and the like. As various rubbers, there can be used olefin based rubber, styrene based rubber and the like.

Meanwhile, to the film (a) used in this embodiment, there can be added various compounding ingredients used by adding usual polyolefin such as an anti-static agent, an anti-oxidant, a heat stabilizer, a release agent, a weathering stabilizer, a rust prevention agent, a slipping agent, a nucleating agent, a pigment, a dye, an inorganic filler (silica or the like) and the like, or other special compounding ingredients in the ranges, in which the object of the first invention is not damaged.

(Method for preparing film (a))

Next, a method for preparing a film (a) will be explained.
The film (a) is obtained from, for example, the aforementioned (co)polymer ($\alpha$) and optionally the other components constituting film (a).

Further specifically, the film (a) can be properly prepared in accordance with a conventionally known method, and it can be molded into a film, for example, by a known method such as a method involving mixing the (co)polymer ($\alpha$) with other components using a V-blender, a ribbon blender, a Henschel mixer or a tumbler blender, a method involving mixing using the aforementioned blender and then melt kneading with a single screw extruder, a multi-screw extruder, a kneader, a banbury mixer or the like for granulating or pulverizing, and then press molding, extrusion molding, inflation molding and the like, a solution casting method or the like. For more efficient production, preferably used are a solution casting method, an inflation molding method and an extrusion molding method.

Furthermore, by stretching the obtained film, physical properties such as birefringence, its angle dependence, its temperature dependence and the like can be optically adjusted to a desired value, and a film further provided with mechanical strength can also be made. A stretching ratio may be suitably selected according to desired optical properties or the like, but it is usually not less than 1.5 times and preferably not less than 2 times from the viewpoint that uniform stretching or desired birefringence are further surely obtained. Furthermore, a stretching ratio of the film is usually not more than 10 times and preferably not more than 5 times from the viewpoint of making the production process easy.

Meanwhile, the film is formed by a melt extrusion molding method and then oriented by stretching, whereby the film can be further effectively and stably produced. when melt extrusion molding is carried out, specifically, molding is carried out using a single screw extruder at a predetermined cylinder temperature and a predetermined cast roll temperature, and then stretch-molding is conducted using a drawing machine at not less than a glass transition temperature (Tg), at a temperature of not more than 200 degrees centigrade and preferably not more than 180 degrees centigrade only at predetermined magnifications (preferably not more than 5 times and particularly preferably not more than 3 times) at a predetermined stretching rate. From the viewpoint that the degree of crystallization and the crystal size are not increased, it is preferable that a stretching ratio is rather small, and the stretching rate is rather high. Furthermore, stretching may be any of uniaxial stretching, biaxial stretching or the like. From the viewpoint that the degree of crystallization and the crystal size are not increased, more preferably used is biaxial stretching rather than uniaxial stretching.

Incidentally, at this time, a raw sheet-like film is once prepared at the time of melt extrusion molding, the raw sheet may be supplied to the stretch-molding apparatus again or melt extrusion molding and stretch-molding may be continuously carried out.

Furthermore, when a film is obtained by melt extrusion molding, it may be pressure compressed between rolls of the extruder, and transparency of the thus-obtained film can be more heightened.

The thickness of the film (a) may be properly set depending on the purpose of use, particularly the birefringence of the optical part (B) and its wavelength dependence, and is not particularly limited. However, it is usually from not less than 10 and not more than 200 $\mu$m and preferably from not less than 20 and not more than 100 $\mu$m. When the film (a) is too thin, easiness of handling might be reduced. When it is too thick, it might be difficult to be dealt with by the roll, the length per roll might be shortened, and the like. When the thickness of the film (a) is within the above range, the productivity of the film is excellent, pinholes or the like are not generated during molding the film, and sufficient strength is further obtained as well; therefore, such a thickness is preferable. Indeed, the reason why the optical design usually takes priority is as described above.

Incidentally, there is no particular upper limit in the thickness of the film, and those conventionally called a sheet in the present Technical Field are also included. Furthermore, it is preferable that the thickness is capable of being used for the optical use.

Hereinafter, a method of compensating the wavelength dependence of birefringence of the optical part (B) which involves using the film (a) will be described.

(Method of compensating wavelength dependence of birefringence of optical part (B))

In this embodiment, using the film (a) made of the (co)polymer ($\alpha$) obtained from at least one olefin selected among 4-methyl-1-pentene, 3-methyl-1-pentene and 3-methyl-1-butene as a (co)monomer ingredient, the wavelength dependence of birefringence of the optical part (B) is compensated. Specifically, the optical part (B) and the film (a) are laminated, and the wavelength dependence of birefringence of the laminate is adjusted, whereby the wavelength dependence of birefringence of the laminate of the optical part (B) and the film (a) approaches the ideal state rather than the wavelength dependence of birefringence of the optical part (B) alone. That is, the wavelength dependence approaches a state in which the birefringence is directly proportional to the wavelength, or a state in which the retardation (angle conversion) caused by the birefringence is constant regardless of the wavelength.

Herein, the wavelength dependence of birefringence means that the magnitude of birefringence is different depending on the wavelength in the visible light region. Specifically, the magnitude of the wavelength dependence of birefringence is represented by the difference between the magnitude of birefringence at 450 nm and the magnitude of birefringence at 590 nm.

The film (a) made of a (co) polymer ($\alpha$) is capable of, as described above, optimizing the wavelength dependence of birefringence according to the method in this embodiment, since the birefringence represents reverse wavelength dispersion when the optical part (B) is used alone.

Incidentally, in Patent Document 1 described above in the Background Art, the optical part has enhanced characteristics of birefringence by using a polymer of 4-methyl-1-pentene, but the method in this embodiment is different in the following points.

Namely, Patent Document 1 relates to a technique for the purpose of eliminating coloring due to the birefringence of an STN liquid crystal, but the wavelength dependence is not paid attention to. As in this document, when both of an STN liquid crystal having positive wavelength dispersion of birefringence and a retardation compensation sheet oriented by stretching a polymer mainly composed of 4-methyl-1-pentene are only laminated, even though the birefringence at a specific wavelength of from 500 to 600 nm is removed, the wavelength dependence of birefringence of the laminate is rather magnified. For this reason, the wavelength dependence of birefringence cannot be effectively compensated.

In response to this, in this embodiment, the optical part (B) and the film (a) are laminated for adjusting the wavelength dependence of birefringence of the laminate. The wavelength dependence of retardation (birefringence) of the optical part (B) is optimized by using the film (a) so that optical characteristics can be stabilized in at least a part of the visible light region. For example, when an optical compensation sheet composed of polycarbonate or polyolefin is used, the difference in the wavelength dispersion of retardation occurred between the sheet and the liquid crystal cell, i.e., an optical compensation target is compensated, whereby light leakage is further lowered. At this time, a 4-methylpentene-1 film having reverse wavelength dispersion of birefringence can be effectively used.

(Optical part (optical element) (B))

In this embodiment, the kind, optical characteristics, the material and the like of the optical part (B), i.e., an object for controlling its wavelength dependence of birefringence, are not particularly limited. Various optical parts having birefringence can be used. In particular, if the optical part (B) has large birefringence as the wavelength is shorter, the wavelength dependence of birefringence highly needs to be compensated so that the optical part is practically meaningful. Herein, an angle formed by the optical axes of the film (a) relative to the optical part (B) is not particularly limited, and as needed it can be properly set. For example, however, when the optical part (B) has large birefringence as the wavelength is shorter, and if phase lead axes and phase lag axes are respectively aligned with each other, the wavelength dependence of birefringence of the optical part (B) can be effectively compensated; therefore, it is preferable.

Furthermore, even when the optical part (B) has small birefringence as the wavelength is shorter, the film (a) and the optical part (B) are combined so that the wavelength dependence of birefringence of the optical part (B) can be compensated, while an angle between optical axes are properly set, whereby the optical part can be practically meaningfully used.

As described above, the kind, optical characteristics, the material and the like of the optical part (B) are not particularly limited, and various optical parts having birefringence can be used. However, it is particularly preferable that the optical part (B) has large birefringence as the wavelength is shorter. As the material constituting such an optical part (B), there can be exemplified, polycarbonate, polyethylene terephthalate, triacetylcellulose, polystyrene, an acrylic resin and the like, in addition to a polyolefin other than the (co)polymer ($\alpha$) including a cyclic olefin (co)polymer, polyethylene or polypropylene. Of these, particularly preferred are a cyclic olefin (co)polymer and triacetylcellulose from the viewpoints of transparency, stability, cost and the like.

Concrete examples of the optical part (B) will be illustrated below.

(Light-transmitting film (b1))

The shape of the above optical part (B) is not particularly limited. However, it is particularly preferable that the optical part (B) is a light-transmitting film (b1) because it is advantageous to realize an optical part having a large area or produce an optical part in a large quantity with good efficiency.

The thickness of the light-transmitting film (b1) is properly decided depending on the use or desired optical and mechanical properties, and is not particularly limited. However, from the viewpoint of further improvement of handleability, it is usually not less than 0.01 mm, preferably not less than 0.015 mm, and particularly preferably not less than 0.02 mm. Furthermore, the thickness of the light-transmitting film (b1) is, for example, usually not more than 5 mm, preferably not more than 3 mm and particularly preferably not more than 1 mm, from the viewpoint of further reduction of the weight, cost or the like. The light-transmitting film (b1) can be prepared according to a melt extrusion method, a solution casting method or the like, though not restricted to these preparation methods.

The use of light-transmitting film (b1) is not particularly limited. In this embodiment, the method of compensating the wavelength dependence of birefringence can be applied to the light-transmitting film (b1) for various optical applications. As desirable applications, there can be exemplified, though not restricted to, a retardation plate, a polarizing plate, an optical compensation film, an anti-reflection film, a transparent conductive substrate, a diffusion sheet, a light collection sheet and the like.

In this embodiment, when the optical part (B) is the light-transmitting film (b1), the film (a) made of a (co)polymer ($\alpha$) obtained from at least one olefin selected among 4-methyl-1-pentene, 3-methyl-1-pentene and 3-methyl-1-butene as a (co)monomer ingredient, and the light-transmitting film (b1) are preferably laminated and used accordingly. From the viewpoints of reduction of the optical loss at a lamination interface, simplification of its structure and the like, it is preferable that the film (a) and the light-transmitting film (b1) are directly laminated, while from the viewpoint of securing the intensity of lamination, it is preferable that the film (a) and the light-transmitting film (b1) are laminated via an adhesive layer. When they are directly laminated, in order to enhance adhesion, it is preferable to have a smooth interface.

When they are laminated via an adhesive layer, the quality of the material of the adhesive layer is not particularly limited, and various adhesive agents having a small optical loss and excellent in adhesion strength and durability can be properly used. Various adhesive agents such as polyolefin type, acryl type, urethane type, epoxy type, polyvinyl alcohol type, polyester type and the like can be preferably used, though not restricted thereto. Of these, a polyolefin type adhesive resin is preferable because it is excellent in adhesion with the (co)polymer ($\alpha$) obtained from at least one olefin selected among 4-methyl-1-pentene, 3-methyl-1-pentene and 3-methyl-1-butene as a (co)monomer ingredient. The polyolefin type adhesive resin has been described in detail, for example, in Patent Documents 10 (Japanese Patent Laid-open No. 1997-268243) and 11 (Japanese Patent Laid-open No. 1999-124479). This embodiment may use the resin described in the documents.

When they are laminated via an adhesive layer, the surface of one or both of the film (a) and the light-transmitting film (b1) may be subjected to treatment for easy adhesion such as plasma treatment, corona discharge treatment, flame treatment, ultraviolet ray treatment, coating of an undercoat layer or the like.

Meanwhile, one or two or more layers other than an adhesive layer may be present between the film (a) and the light-transmitting film (b1). As the layer other than the adhesive layer, there can be exemplified a reflection layer, an anti-reflection layer, an anti-glare layer, a hard coat layer, an anti-electrostatic layer, a gas barrier layer, a transparent conductive layer, a retardation plate, an optical compensation film, a diffusion plate, a light collection sheet, a polarizing plate and the like, though not restricted thereto.

(Polarizing plate protective film)

In this embodiment, the light-transmitting film (b1) is preferably a polarizing plate protective film. Its meaning will be described in detail below.

The retardation caused by birefringence can be generally expressed by an angle as well. At this time, the conversion formula of the retardation R1 expressed by an angle and the retardation R2 in the unit of nm is represented by,

$$R1 \ (degree) \ = \ (R2(nm)/\lambda(nm)) \ \times \ 360 \ (degree)$$

Incidentally, $\lambda$ is a retardation measuring wavelength.

The magnitude of the retardation R1 of the protective film for a polarizing plate has influence on the polarization degree of the polarizing plate. For example, when the protective film is used for a liquid crystal display device, the image quality such as contrast of the liquid crystal display device is affected. That is, even when R2 is always constant relative to the retardation measuring wavelength in use, R1 becomes high as the wavelength is shorter so that the retardation of the protective film deteriorates the polarization degree of a linear polarizing plate as the wavelength is shorter. Accordingly, the retardation represented by R2 is preferably small as the wavelength is shorter. For example, if the influence of the retardation of the protective film on the polarization degree of the polarizing plate is entirely the same in the visible light region, it is preferable that the change of R2 relative to wavelength $\lambda$ approaches the change of wavelength $\lambda$. This means that the retardation represented by R2 is preferably small as the wavelength is shorter. However, usually in any of transparent films composed of a polymer material used for the polarizing plate protective film, it is common that R2 becomes high as the wavelength is shorter, or is constant at best.

Herein, if the method of compensating the wavelength dependence of this embodiment is applied, the retardation represented by R2 can be made small as the wavelength is shorter and it becomes possible to suppress a phenomenon such that the retardation of the protective film deteriorates the polarization degree of the linear polarizing plate. Thus, such a film is practically highly valuable. Namely, when the light-transmitting film (b1) is the polarizing plate protective film, such a film is practically highly valuable, which is one of particularly preferred embodiments of this embodiment.

(Polarizing plate (P))

In the method of this embodiment, a polarizing plate (P) may be further used. Specifically, the film (a) is arranged between the optical part (B) and the polarizing plate (P), and an optical part other than the film (a) having the in-plane retardation is not practically present between the optical part (B) and the polarizing plate (P). In this way, the in-plane retardation can be more surely controlled.

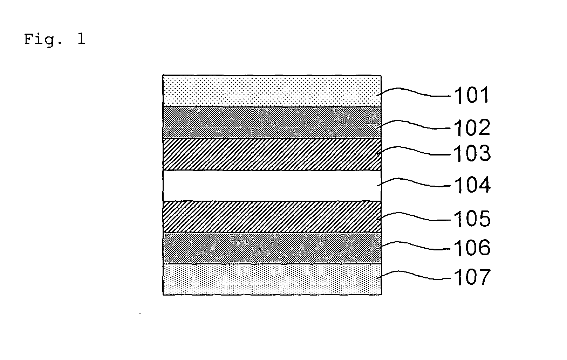

Fig. 1 illustrates an example of applying the film (a) of this embodiment to the polarizing plate.

On this polarizing plate, a protective film 101 for protecting a surface, a hard coat layer 102 for providing abrasion resistance or the like to the polarizing plate, a second polarizing plate protective film 103, a polarizer 104, a first polarizing plate protective film 105, an adhesive layer 106 for acting on other elements as an adhesive layer and a release film 107 for protecting the adhesive layer 106 are laminated in this order.

Herein, since the examination procedure of a display element equipped with a polarizing plate, for example, a liquid crystal display element is conducted at a state that the protective film is attached, a film excellent in optical characteristics such as the film (a) in this embodiment can be suitably used for the protective film 101. Since protection of the polarizer 104 and at the same time high transparency are required, a film excellent in optical characteristics of this embodiment can be suitably used for the first polarizing plate protective film 105 and the second polarizing plate protective film 103. As the release film 107 is arranged for covering the adhesive layer 106 for further laminating an optical compensation film, a retardation film (plate) or the like on the appropriate polarizing plate at the formation of a display element, and in order to conduct the examination operation of this polarizing plate at a state that the release film 107 is attached, a film excellent in optical characteristics of this embodiment can be suitably used.

(Optical compensation film)

In this embodiment, the light-transmitting film (b1) is also preferably an optical compensation film. When the retardation represented by R2 of the optical compensation film is preferably small as the wavelength is shorter, it is the same case as that of the aforementioned polarizing plate protective film. Furthermore, since a material having larger birefringence than that of the aforementioned polarizing plate protective film is used for the optical compensation film, the wavelength dependence of birefringence is also relatively large. Accordingly, undesirable phenomena such as coloring occurred by the wavelength dependence of birefringence and the like are more serious.

Herein, when the method of compensating the wavelength dependence of this embodiment is applied, the retardation represented by R2 can be made small as the wavelength is shorter and it becomes possible to suppress a coloring phenomenon due to the wavelength dependence of birefringence of the optical compensation film. Thus, such a film is practically highly valuable.
Namely, when the light-transmitting film (b1) is the optical compensation film, such a film is practically highly valuable, which is one of particularly preferred embodiments of this embodiment.

Meanwhile, the optical compensation film refers, for example, to a film having an optical compensation function in three dimension by changing torsion or an angle of the liquid crystal or the like in the film thickness direction using a liquid crystal layer, a resin or the like, which is a partly overlapping concept with the retardation plate.
Hereinafter, the retardation plate will be described.

(Retardation plate)

In this embodiment, the light-transmitting film (b1) is preferably a retardation plate as well. When the retardation represented by R2 of the retardation plate is preferably small as the wavelength is shorter, it is the same as that of the aforementioned polarizing plate protective film. Furthermore, since a material having larger birefringence than that of the aforementioned polarizing plate protective film is used for the retardation plate, the wavelength dependence of birefringence is also relatively high. Accordingly, undesirable phenomena such as coloring occurred by the wavelength dependence of birefringence and the like are more serious.

Herein, when the method of compensating the wavelength dependence of this embodiment is applied, the retardation represented by R2 can be made small as the wavelength is shorter and it becomes possible to suppress a coloring phenomenon due to the wavelength dependence of birefringence of the retardation plate. Thus, such a film is practically highly valuable. Namely, when the light-transmitting film (b1) is the retardation plate, such a film is practically highly valuable, which is one of particularly preferred embodiments of this embodiment.

(Liquid crystal panel (b2))

The structure, shape, material and the like of the above optical part (B) are not particularly limited. However, in this embodiment, the optical part (B) is preferably a liquid crystal panel (b2) as well. When the retardation represented by R2 of the liquid crystal panel (b2) is preferably small as the wavelength is shorter, it is the same as that of the aforementioned polarizing plate protective film. Furthermore, since it is essential that the liquid crystal layer has birefringence, the wavelength dependence of birefringence of the liquid crystal panel (b2) is also relatively high. Accordingly, undesirable phenomena such as coloring occurred by the wavelength dependence of birefringence and the like are more serious.

Herein, when the method of compensating the wavelength dependence of this embodiment is applied, the retardation represented by R2 can be made small as the wavelength is shorter and it becomes possible to suppress a coloring phenomenon due to the wavelength dependence of birefringence of the liquid crystal layer. Thus, such a film is practically highly valuable. Namely, when the optical part (B) is the liquid crystal panel (b2), such a film is practically highly valuable, which is one of particularly preferred embodiments of this embodiment.

In this embodiment, it is preferable that the film (a) made of a (co)polymer ($\alpha$) and the liquid crystal panel (b2) are directly laminated or laminated via an adhesive layer. From the viewpoints of reduction of the optical loss at a lamination interface, simplification of its structure and the like, it is preferable that the film (a) and the liquid crystal panel (b2) are directly laminated, while from the viewpoint of securing the intensity of lamination, it is preferable that the film (a) and the liquid crystal panel (b2) are laminated via an adhesive layer. Lamination is the same as lamination of the film (a) made of a (co)polymer ($\alpha$) and the light-transmitting film (b1) in detail.

(Display device)

The method of compensating the wavelength dependence of birefringence in this embodiment can be particularly effectively used in display devices such as liquid crystal displays, EL displays, touch panels, field emission displays, LEDs and the like. Since the display device generally uses various optical parts (B) employing polarized light, and in addition thereto, usually uses light in a wide wavelength range over an entire visible light region, it is easily affected by the wavelength dependence of birefringence and its compensation is particularly strongly in demand.

Accordingly, the display device using the method of compensating the wavelength dependence of birefringence in this embodiment is one of particularly preferred embodiments of this embodiment.

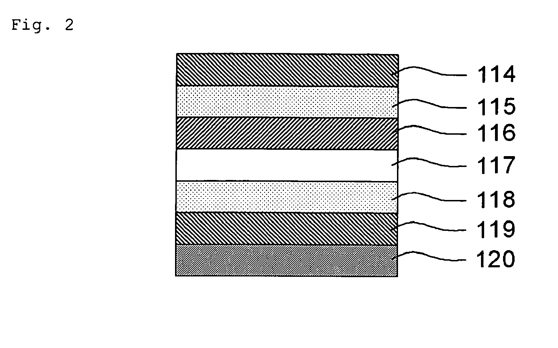

Fig. 2 is a view illustrating one of constitutions of the liquid crystal displays as such a display device. In this liquid crystal display device, a polarizing plate 114, a retardation plate 115, an optical compensation film 116, a liquid crystal panel 117, a retardation plate 118, a polarizing plate 119 and a backlight unit 120 are laminated in this order.

Herein, as the polarizing plate 114 and the polarizing plate 119, a polarizing plate to which this embodiment is applied as shown in Fig. 1 can be suitably used. As the optical compensation film 116, a film having a multi-layer structure can be used, but a film having a mono-layer structure to which the film (a) of this embodiment per se is applied can also be suitably used.

According to such a constitution, the incoming light from the backlight unit 120 is polarized by the polarizing plate 119 for allowing only linear polarized light to pass through and making the phase of polarized light uniform by the retardation plate 118, and is incident on the liquid crystal panel 117. In the liquid crystal panel 117, an output image is formed, light for reproducing this image is generated for emitting, the viewing angle is compensated by the optical compensation film 116, the retardation is made uniform by the retardation plate 115, the light is polarized by the polarizing plate 114, and the contrast is adjusted.

(Second Embodiment)

(Optical part (optical element))

This embodiment relates to an optical part having at least one layer of the film (a) made of a (co)polymer ($\alpha$) obtained from at least one olefin selected among 4-methyl-1-pentene, 3-methyl-1-pentene and 3-methyl-1-butene as a (co)monomer ingredient. Details of the copolymer ($\alpha$) and the film (a) according to this embodiment are the same as those described in the first embodiment.

The film (a) made of a (co)polymer ($\alpha$) obtained from at least one olefin selected among 4-methyl-1-pentene, 3-methyl-1-pentene and 3-methyl-1-butene as a (co)monomer ingredient is an optical film having a small retardation as the wavelength is shorter. Since the film (a) is an optical film with stable optical characteristics, low cost, lightweightness and low environmental load, the optical part using this film is practically highly valuable.

The optical part according to this embodiment may have at least one layer of the film (a), and may or may not have other members or layers.

Since the film (a) has a small retardation as the wavelength is shorter, the retardation (angle conversion) caused by the birefringence can be almost constant regardless of the wavelength with the film alone. Accordingly, the optical part only composed of the film (a) according to this embodiment can be used, for example, as a retardation plate having a constant retardation in a wide band. Conventionally, the retardation plate having a constant retardation in a wide band depends on a complex structure in which a plurality of optical parts are combined, or cannot be realized regardless of a resin having a complex chemical structure. Accordingly, the optical part only composed of the film (a) according to this embodiment has a practically high value as compared to the conventional ones, which is one of particularly preferred embodiments of this embodiment.

The optical part in combination with the film (a) and other members or layers is also one of preferred embodiments of this embodiment. Other members or layers are provided with various optical functions, whereby an optical part having more complex optical functions can be realized. So, the optical part has a practically high value. Members or layers other than the film (a) may be the same as or different from the optical part (B) explained in the first embodiment. For example, the retardation plate obtained by properly laminating the film (a) with the retardation film that is the preferred optical part (B) is one of particularly preferred embodiments of this embodiment.

An elliptical polarizing plate or a circular polarizing plate obtained by laminating the retardation plate with the polarizing plate according to this embodiment can produce elliptical polarized light or circular polarized light in a wide wavelength range, and is one of preferred embodiments of this embodiment. The retardation plate and the polarizing plate may be laminated via an adhesive resin layer. Furthermore, the adhesive resin layer may be arranged on the side opposite to the polarizing plate on a surface of the retardation plate. The adhesive resin layer has been described in detail, for example, in Patent Document 12 (Japanese Patent Laid-open No. 2004-177785), or the adhesive resin layer described in the document may be used for this embodiment.

The optical part only composed of the film (a) or the optical part in combination with the film (a) and other members or layers may be an anti-reflection film, a wavelength selective light-reflection film, a wavelength selective low-reflection film, a transparent conductive substrate, a diffusion sheet, a light collection sheet, a retardation plate, an optical compensation film, a liquid crystal panel substrate, a reflection plate, a anti-transmissive reflection plate, a light scattering plate, a substrate equipped with light scattering reflection electrodes, a substrate equipped with transparent electrodes, a substrate equipped with mirror reflection electrodes, an anti-fogging film or a polarizing plate. Since these optical parts have a relatively simple constitution and the wavelength dependence of birefringence is compensated at a desired state, such an optical part has a practically high value.

In this embodiment, the in-plane retardation $R_{550}$ at a wavelength of 550 nm of the film (a) satisfies, for example, the following condition as well, similar to the first embodiment,

$$|R_{550}| < 30 (nm)$$

Furthermore, the in-plane retardation $R_{550}$ at a wavelength of 550 nm of the film (a) may satisfy, for example, the following condition,

$$30 (nm) \leq |R_{550}| < 300 (nm)$$

(Display device)

The optical part of this embodiment can be particularly effectively utilized in display devices such as liquid crystal displays, EL displays, touch panels, field emission displays, LEDs and the like. Since the display device generally uses various optical parts (B) employing polarized light, and in addition thereto, usually uses light in a wide wavelength range over an entire visible light region, it is easily affected by the wavelength dependence of birefringence and its compensation is particularly strongly in demand. Accordingly, the display device having the optical part in this embodiment is one of particularly preferred embodiments of this embodiment.

Incidentally, the display device according to this embodiment can have, for example, the aforementioned lamination structure with reference to Fig. 2.

According to this embodiment as described above, the retardation is small as the wavelength is shorter, and the desired optical film having the wavelength dependence of birefringence is obtained. Furthermore, the change in optical characteristics due to moisture absorption or the like is small, and an optical film with low cost, lightweightness and low environmental load is obtained.

Furthermore, by using this optical film material, the wavelength dependence of birefringence of various optical parts can be easily compensated. Accordingly, for example, it is possible to obtain a method of compensating the wavelength dependence of birefringence having a practically high value, various optical parts obtained by compensating the wavelength dependence of birefringence, and a display device excellent in color reproducibility or the like.

(Third Embodiment)

In the embodiment as described above, the optical film used as the film (a) may be constructed in the following manner.

In this embodiment, the optical film used as the film (a) is a film containing a (co) polymer ($\alpha$) obtained from at least one olefin selected among 4-methyl-1-pentene, 3-methyl-1-pentene and 3-methyl-1-butene as a (co)monomer ingredient.

Furthermore, the optical film of this embodiment satisfies the following condition,

$$R(450)/R(590) \leq 0.95$$

wherein, in the above formula, R(450) and R(590) each represent the in-plane retardation of the above optical film at wavelengths of 450 nm and 590 nm.

In this embodiment, the optical film satisfies the above formula, whereby the wavelength dispersion of the retardation can be effectively compensated.

Meanwhile, from the viewpoint of more effective compensation of the wavelength dispersion of the retardation, it is preferable that the optical film satisfies the following condition. In this way, the wavelength dispersion can be further effectively compensated.

$$R(450)/R(590) \leq 0.9$$

Meanwhile, from the above viewpoint, the relationship of $R(450)/R(590) \leq 0.85$ is further preferable.

Incidentally, the lower limit of R(450)/R(590) is not particularly limited, but it can be, for example, not less than 0.2 from the viewpoint of making an error of compensation small.

Furthermore, the optical film of this embodiment may be constructed to further satisfy the following condition. In this way, the wavelength dispersion of the retardation can be further compensated with good efficiency at a film thickness fitted to handleability. Further, in case of the same film thickness variation, a highly practical optical film with smaller variation of the retardation value can be achieved.

$$|R_{50}(590)| \leq 200 \ nm$$

wherein, in the above formula, $R_{50}(590)$ represents the in-plane retardation at a wavelength of 590 nm per a thickness of 50 $\mu$m.

From this viewpoint, it is more desirable that $|R_{50}(590)|$ is not more than 150 nm, further preferably not more than 100 nm and particularly preferably not more than 50 nm.

Furthermore, the above $R_{50}(590)$ may satisfy the condition of $1 \ nm \leq |R_{50}(590)|$ or further preferably the condition of $3 \ nm \leq |R_{50}(590)|$.

On the other hand, the optical film of this embodiment may further satisfy the following condition,

$$|R_{50}(590)| \leq 30 \ nm$$

wherein, in the above formula, $R_{50}(590)$ represents the in-plane retardation at a wavelength of 590 nm per a thickness of 50 $\mu$m.

Incidentally, the lower limit of $|R_{50}(590)|$ is not particularly limited, but it may be, for example, within the above range.

Furthermore, from the viewpoint of obtaining sufficient $R_{50}(590)$ necessarily sufficient for compensation, in the optical film of this embodiment, the (co)polymer ($\alpha$) is a copolymer of 4-methyl-1-pentene with $\alpha$-olefin having not less than 10 and not more than 14 carbon atoms other than 4-methyl-1-pentene, and the ratio of the structural unit derived from $\alpha$-olefin to the entire copolymer is preferably from not less than 1 and not more than 9 % by mole.

(Fourth Embodiment)

This embodiment relates to an optical film composed of an organic polymer.

In this film, the in-plane retardation $R_{50}(590)$ at a wavelength of 590 nm per a thickness of 50 $\mu$m satisfies the following condition (1-1), while the in-plane retardations R(450) and R(590) at wavelengths of 450 nm and 590 nm satisfy the following condition (1-2),

$$10 \ nm \leq |R_{50}(590)| \leq 20 \ nm \quad (1-1)$$

$$R(450)/R(590) \leq 0.95 \quad (1-2)$$

According to this embodiment, the optical film is constructed to satisfy the above formulae (1-1) and (1-2), whereby in a member having some degrees of the mechanical strength to the film per se, for example, by thickening the film thickness, a retardation film providing a practical retardation can be achieved. Furthermore, when a liquid crystal cell of, for example, an STN type or the like and an optical compensation sheet composed of, for example, polycarbonate and polyolefin are used, the difference in the wavelength dispersion of the retardation occurred between the film and a liquid crystal cell, i.e., an optical compensation object is compensated. Therefore, when it is further used for the purpose of reducing light leakage, a retardation plate of the reverse wavelength dispersion in which the retardation is accurately controlled can be provided; therefore, such a constitution is preferable.

For example, the optical film of this embodiment may be constructed to contain the (co)polymer ($\alpha$) obtained from at least one olefin selected from 4-methyl-1-pentene, 3-methyl-1-pentene and 3-methyl-1-butene as a (co)monomer ingredient. When such a material is used, an optical film excellent in the heat resistance, lightweightness and dimensional stability while having reverse wavelength dispersion of birefringence can be achieved.

In the optical film of this embodiment, it is preferable that the in-plane retardation $R_{550}$ at a wavelength of 550 nm satisfies the following condition,

$$|R_{550}| < 30 \quad (nm)$$

On the other hand, it is preferable that the in-plane retardation $R_{550}$ at a wavelength of 550 nm of the optical film of this embodiment satisfies the following condition,

$$30 (nm) \leq |R_{550}| < 300 \quad (nm)$$

By the way, the inventors of the first invention have conducted an extensive study and as a result, have found that birefringence of the optical film composed of a copolymer mainly containing poly-4-methylpentene-1 and its wavelength dispersion (wavelength dependence) vary depending on the kind and content of the comonomer constituting the copolymer. Then, as a result of further study, when the kind of the comonomer is $\alpha$-olefin having not less than 10 and not more than 14 carbon atoms and the content of $\alpha$-olefin in the copolymer is from not less than 1 and not more than 9 % by mole, birefringence sufficient for optical use is exhibited and at the same time suitable reverse wavelength dispersion is exhibited.

In the following embodiment, this constitution will be described in detail.

(Fifth Embodiment)

This embodiment relates to a copolymer mainly containing poly-4-methylpentene-1 and a film using the copolymer.

(Copolymer)

The copolymer in this embodiment is a copolymer of 4-methyl-1-pentene with $\alpha$-olefin having not less than 10 and not more than 14 carbon atoms other than 4-methyl-1-pentene, while the ratio of the structural unit derived from $\alpha$-olefin to the entire copolymer is preferably from not less than 1 and not more than 9 % by mole.

A polymer of 4-methyl-1-pentene is excellent in the transparency, peeling property and the like, and is suitable for use in combination with an optical part (optical element). A specific comonomer is copolymerized with 4-methyl-1-pentene at a specific ratio and at the same time the above condition is satisfied, whereby a copolymer exhibiting birefringence sufficient for the optical use and exhibiting reverse wavelength dispersion with stable birefringence is obtained.

Herein, $\alpha$-olefin used as a comonomer may be straight-chained or branched. The number of carbon atoms of $\alpha$-olefin is from not less than 10 and not more than 14 and preferably from not less than 10 and not more than 12. When the number of carbon atoms of $\alpha$-olefin is within this range, a copolymer having birefringence sufficient for the optical use is used.

Concrete examples of $\alpha$-olefin having not less than 10 and not more than 14 carbon atoms include 1-decene, 1-undecene, 1-dodecene and 1-tetradecene.

Of these, 1-decene is selected as a comonomer, whereby a particularly excellent copolymer having birefringence from the viewpoint of the optical use is obtained.

Furthermore, the structural unit derived from $\alpha$-olefin having not less than 10 and not more than 14 carbon atoms is usually from not less than 1 and not more than 9 % by mole and preferably from not less than 2 and not more than 7 % by mole. When the structural unit derived from $\alpha$-olefin having not less than 10 and not more than 14 carbon atoms is within such a range, a copolymer having sufficient heat resistance used for the optical use, exhibiting sufficient birefringence, and exhibiting reverse wavelength dispersion with stable and sufficiently large birefringence is obtained.

Incidentally, the copolymer in this embodiment may have, for example, only $\alpha$-olefin having not less than 10 and not more than 14 carbon atoms other than 4-methyl-1-pentene as a (co)monomer ingredient.

At this time, as the copolymerization composition of 4-methyl-1-pentene with $\alpha$-olefin, the structural unit derived from 4-methyl-1-pentene is from not less than 91 and not more than 99 % by mole, while the structural unit derived from $\alpha$-olefin is from not less than 1 and not more than 9 % by mole, based on the entire copolymer.

Furthermore, the copolymer according to this embodiment may be obtained by using a monomer other than 4-methyl-1-pentene and $\alpha$-olefin having not less than 10 and not more than 14 carbon atoms as a (co)monomer ingredient in the ranges in which the object of the first invention is not deviated. Examples of the monomer other than 4-methyl-1-pentene and $\alpha$-olefin having not less than 10 and not more than 14 carbon atoms include one or two or more monomers selected from the group consisting of straight-chained or branched $\alpha$-olefin having not less than 2 and not more than 9 carbon atoms excluding 4-methyl-1-pentene, straight-chained or branched $\alpha$-olefin having not less than 15 and not more than 20 carbon atoms, various cyclic olefins, diene having not less than 4 and not more than 20 carbon atoms and an aromatic vinyl compound. The content of the structural unit derived from the monomer other than 4-methyl-1-pentene and $\alpha$-olefin having not less than 10 and not more than 14 carbon atoms is not particularly limited, and can be properly used in the ranges in which the object of the first invention is not deviated, but it is, for example, from not less than 0.5 and not more than 2 % by mole.

Furthermore, it is preferable that the copolymer of this embodiment satisfies the following condition. The intrinsic viscosity [η] as measured in decalin at 135 degrees centigrade is from not less than 0.5 and not more than 10 dl/g, the melting point (Tm) as measured by DSC is from not less than 210 and not more than 240 degrees centigrade, and the amoun f melting heat as measured by DSC is from not less than 20 and not more than 50 J/g.

The copolymer is constructed to satisfy the above condition in addition to a specific $\alpha$-olefin contained at a specific composition, whereby it becomes easy to provide practically useful characteristics illustrated respectively below.

In this embodiment, measurement of an intrinsic viscosity is carried out, for example, by the measurement method in conformance with ASTM J1601.

The intrinsic viscosity [η] as measured in decalin at 135 degrees centigrade is, for example, from not less than 0.5 and not more than 10 dl/g, preferably from not less than 1 and not more than 5 dl/g and further preferably from not less than 1.5 and not more than 5 dl/g. When the intrinsic viscosity is within such a range, a film excellent in processability at the time of molding a film and having sufficient mechanical strength is obtained.

The melting point (Tm) as measured by DSC is, for example, from not less than 210 and not more than 240 degrees centigrade, preferably from not less than 220 and not more than 240 degrees centigrade and further preferably from not less than 225 and not more than 235 degrees centigrade. When Tm is within such a range, and a film having further sufficient heat resistance is obtained.

The amount of melting heat as measured by DSC is, for example, from not less than 20 and not more than 50 J/g, preferably from not less than 20 and not more than 45 J/g and further preferably from not less than 20 and not more than 40 J/g. When the amount of melting heat is within such a range, a film having more sufficient heat resistance is obtained.

Meanwhile, the melt flow rate (MFR) of the 4-methyl-1-pentene copolymer as measured under conditions of a load of 5 kg, a temperature of 260 degrees centigrade in accordance with ASTM D1238 is determined depending on the use in many ways, but it is usually in the range of not less than 1 and not more than 50 g/10 min., preferably in the range of not less than 1 and not more than 40 g/10 min. and further preferably in the range of not less than 5 and not more than 40 g/10 min. In this way, the film formability and the appearance of the obtained resin can be further improved.

Hereinafter, a method for preparing a 4-methyl-1-pentene copolymer will be explained.

The method for preparing a 4-methyl-1-pentene copolymer is not particularly limited, and the copolymer can be prepared by using a known catalyst such as a Ziegler-Natta catalyst, a metallocene catalyst or the like. In accordance with the method as described, for example, in Patent Document 8 (Japanese Patent Laid-open No. 1984-206418) or Patent Document 13 (Japanese Patent Laid-open No. 2003-105022), it can be obtained by polymerizing 4-methyl-1-pentene and $\alpha$-olefin in the presence of a catalyst. The use of the obtained copolymer is not particularly limited, but the copolymer can be suitably used as a material of various films including a film used for an optical member.

Hereinafter, a film using the obtained copolymer will be described.

(Film)

The film according to this embodiment contains the aforementioned 4-methyl-1-pentene copolymer, and is obtained, for example, by forming the aforementioned 4-methyl-1-pentene copolymer.

The method for forming a film is not particularly limited, and the film can be formed, for example, by a method such as press molding, extrusion molding, inflation molding or the like, or a known method such as a solution casting method or the like. From the viewpoint of the production with further good efficiency, an extrusion molding method, an inflation molding method, a solution casting method or the like may be used.

Furthermore, from the viewpoint of the stable production with further good efficiency, it is preferable that the film is obtained by the melt extrusion molding method for its formation and then oriented by stretching.

By stretching the film, physical properties of birefringence, its angle dependence, its temperature dependence and the like can be further accurately adjusted to desired values from the optical view. Furthermore, the film provided with mechanical strength can be realized. The stretching ratio may be more properly selected according to desired optical properties or the like, but it is usually from 1.5 to 10 times and preferably from 2 to 5 times.

When melt extrusion molding is carried out, specifically, molding is carried out using a single screw extruder at a predetermined cylinder temperature and a predetermined cast roll temperature, and then stretch-molding is conducted using a drawing machine at not less than a glass transition temperature (Tg), at a temperature of not more than 200 degrees centigrade and preferably not more than 180 degrees centigrade only at predetermined magnifications (preferably not more than 5 times and particularly preferably not more than 3 times) at a predetermined stretching rate. From the viewpoint that the degree of crystallization and the crystal size are not increased, it is preferable that the stretching ratio is rather small, and the stretching rate is rather high. Furthermore, stretching may be any of uniaxial stretching, biaxial stretching or the like. From the viewpoint that the degree of crystallization and the crystal size are not increased, more preferably used is biaxial stretching rather than uniaxial stretching.

Incidentally, at this time, a raw sheet-like film is once prepared at the time of melt extrusion molding, the raw sheet may be supplied to the stretch-molding apparatus again or melt extrusion molding and stretch-molding may be continuously carried out.

Furthermore, when a film is obtained by melt extrusion molding, it may be pressure compressed between rolls of the extruder, and transparency of the thus-obtained film can be more heightened.

Furthermore, the thickness of the film according to this embodiment may be properly set depending on the purpose of use, and is not particularly limited. However, it is usually from not less than 10 and not more than 200 $\mu$m and preferably from not less than 20 and not more than 200 $\mu$m. When the thickness is within such a range, it is preferable because the productivity of the film is further more excellent, pinholes or the like are not generated at the time of molding the film, and sufficient mechanical strength is obtained.

Incidentally, the thickness of the film is not particularly limited, and those conventionally called a sheet in the present Technical Field are also included. Furthermore, it is preferable that the thickness is capable of being used for the optical use.

The film of this embodiment is suitably used for the optical use from the facts that birefringence sufficient for the optical use is exhibited and reverse wavelength dispersion having sufficient birefringence is stably exhibited. Further specifically, the film of this embodiment can be suitably employed for use in a transparent optical film, particularly a retardation plate, a polarizing plate protective film (polarizing protective film), a release film, a protective film, an optical compensation film or the like. This embodiment provides these transparent optical films. Incidentally, the optical compensation film may be of a mono-layered structure using the film of this embodiment, or may be of a multi-layered structure in combination of a plurality of films. Such a film can be preferably used for various display elements of liquid crystal displays, EL displays, touch panels, field emission displays, LEDs or the like.

Furthermore, the film of this embodiment is preferably constructed such that the wavelength and birefringence are nearly proportional to each other from the viewpoint of performing compensation of uniform polarizing state relative to light in a wide wavelength range (used for display or the like).

Furthermore, for example, the film of this embodiment obtained by forming a 4-methyl-1-pentene copolymer can be constructed such that the desired wavelength dependence of birefringence is provided and at the same time water-absorption is low and optical characteristics are stable as compared to a conventional film exhibiting reverse wavelength dispersion. Further, it is possible to provide an optical film which can be prepared at low cost with a simple chemical structure, is light and has a low environmental load, as compared to a conventional film exhibiting reverse wavelength dispersion.

In this embodiment, when the film is a retardation plate, it is preferable that the retardation $R_{50}(590)$ at a wavelength of 590 nm per a thickness of 50 $\mu$m of the film, i.e., a retardation plate satisfies the following condition,

$$R_{50}(590) \leq -22 \text{ nm}$$

$R_{50}(590)$ is more preferably not more than -24 nm and further preferably not more than -28 nm. When $R_{50}(590)$ is constructed to satisfy the above condition, since it is possible to secure sufficient retardation in relation to the object in a state that the film is comparatively thin, desired functions of compensation of the retardation or the like can be achieved even though thinness of a thin display or the like is valued; therefore, it is preferable. When the absolute value of $R_{50}$ (590) is rather large, it is preferable because the degree of freedom of use is high. There is no lower limit in particular, but the lower limit can be, for example, not less than -300 nm.

Incidentally, positive or negative retardation of the film is determined at a state of the refractive index of its refractive index ellipsoid. When main refractive indexes of the refractive index ellipsoid are taken as nx, ny and nz, nx and ny are axial directions within the plane of the film, while nz is an axial direction orthogonal to the in-plane of the film. When the film has a uniaxial orientation, a case in which a specific uniaxial refractive index is greater than the other two refractive indexes is called a film having a positive retardation, while a case in which a specific uniaxial refractive index is small is called a film having a negative retardation.

Furthermore, this retardation plate may be constructed to satisfy the following characteristics,

$$R(450)/R(590) \leq 0.9$$

wherein, in the above formula, R(450) and R(590) each represent the in-plane retardation (retardation value) at wavelengths of 450 nm and 590 nm of the retardation film.

Further preferably, R(450)/R(590) is not more than 0.87 and more preferably not more than 0.85.

In this way, the film can be constructed to exhibit reverse wavelength dispersion with more ideal birefringence. Accordingly, the film is further suitable as a retardation plate used for display or the like using light in a wide wavelength range.

Incidentally, the retardation is measured, for example, at 23 degrees centigrade and a relative humidity of 40% using a retardation measuring device.

Further, the lower limit of R(450)/R(590) is not particularly limited, but it can be, for example, not less than 0.60 from the viewpoint of more stably controlling the retardation caused by birefringence.

Meanwhile, in this embodiment, the value of R(650)/R(590) may be, for example, not less than 1.04 and preferably not less than 1.08 from the viewpoint of obtaining reverse wavelength dispersion characteristics which are also good at a side of longer wavelength. Incidentally, in the above formula, R(650) represents the in-plane retardation (retardation value) of the retardation film at a wavelength of 650 nm.

Further, the lower limit of R(650)/R(590) is not particularly limited, but it can be, for example, not more than 1.20 from the viewpoint of more stably controlling the retardation caused by birefringence.

According to this embodiment, it is possible to obtain a material which exhibits birefringence sufficient for various optical uses including the retardation plate, exhibits reverse wavelength dispersion of its birefringence and is excellent in a balance with other optical characteristics such as transparency or the like.

Incidentally, the film according to this embodiment may contain various components other than the aforementioned 4-methyl-1-pentene copolymer in the ranges in which the object of the first invention is not deviated. Components other than the 4-methyl-1-pentene copolymer may be various resins or various rubbers other than the 4-methyl-1-pentene copolymer. As various resins, preferably used is a resin particularly excellent in transparency, and there can be used, for example, various polyolefins such as a cyclic olefin (co)polymer and the like, polycarbonate, polystyrene, a cellulose acetate resin, a fluorinated resin, polyester, an acrylic resin and the like. As various rubbers, olefin based rubber, styrene based rubber and the like can be used.

Furthermore, to the film according to this embodiment, there can be added various compounding ingredients to be used by adding usual polyolefin such as an anti-static agent, an anti-oxidant, a heat stabilizer, a release agent, a weathering stabilizer, a rust prevention agent, a slipping agent, a nucleating agent, a pigment, a dye, an inorganic filler (silica or the like) and the like, or other special compounding ingredients, in the ranges in which the object of the first invention is not damaged.

Incidentally, the first invention is not restricted to the aforementioned embodiments and concrete examples, and can be properly modified in the ranges in which the object of the present invention is not deviated.

(Second Invention)

The second invention relates to a laminated polarizing plate in which a film containing a polymer having a structural unit derived from 4-methyl-1-pentene or the like is directly or indirectly laminated on one surface of a polarizer, and a film containing a polymer having a structural unit derived from cyclic olefin is directly or indirectly laminated on the other surface.

Furthermore, the second invention relates to a liquid crystal display element equipped with this laminated polarizing plate. Also, the second invention relates to a display device provided with the above laminated polarizing plate and/or a liquid crystal display element.

In late years, with the development of various display devices such as liquid crystal display elements or the like, importance of various optical elements such as retardation plates, polarizing plates or the like has been increased. Taking a liquid crystal display element as an example, the liquid crystal display element modulates the polarizing state of light at a liquid crystal cell and filters the light at a polarizing film, whereby light and dark of display is controlled and images are displayed. Herein, the light passing through the liquid crystal cell contains the circularly polarized light component which cannot be filtered at a polarizing film so that the contrast of the display might be deteriorated in some cases. Then, before the light passing through the liquid crystal cell is incident on the polarizing film, the light passes through the retardation plate, whereby such a circularly polarized light is compensated for improving the contrast of the liquid crystal display element, which has been widely carried out.

In Japanese Patent Laid-open No. 1996-43812, there has been disclosed a polarizing film in which protective films are laminated on both side of the polarizing film, and the polarizing film in which at least one of protective films functions as a retardation film at the same time. As the protective film, a cellulose film such as triacetylcellulose (TAC) or the like is suitably used, while as the protective film combined with a retardation film, a film composed of a thermoplastic norbornene based resin is suitably used.

In Japanese Patent Laid-open No. 2000-275433, there has been disclosed a polarizing plate protective film composed of poly-4-methyl-1-pentene. The polarizing plate protective film composed of poly-4-methyl-1-pentene can reduce birefringence.

In Japanese Patent Laid-open No. 2002-221619, there has been disclosed a polarizing film in which a cyclic olefin resin film is laminated on one surface of the polarizing film and a protective film having a water vapor transmittance rate within a certain range is laminated on the other surface.

By the way, in various display elements such as liquid crystal display elements or the like, a reduction in the number of elements has been strongly in demand for a reduction in the cost and decreased optical loss. In general, the polarizing film is of a laminated structure of a polarizing plate protective film/polarizing plate/polarizing plate protective film. Herein, when one of polarizing plate protective films functions as a retardation plate, a separate retardation plate is not necessary so that the number of elements can be reduced.

The polarizing film combined with a function as a polarizing plate protective film as described in Japanese Patent Laid-open No. 1996-43812 is capable of reducing the number of elements because at least one of protective films also functions as a retardation film. However, there has been room for improvement yet from the viewpoint of the stability of polarization degree of the obtained polarizing film.

The polarizing plate protective film as described in Japanese Patent Laid-open No. 2000-275433 is capable of reducing birefringence, but there is not mentioned that retardation of the polarizing plate protective film is adjusted for acting as a retardation plate. Furthermore, there is no suggestion of such a design. Accordingly, there has been room for improvement yet in the reduction of the number of elements of the polarizing plate.

The polarizing plate protective film as described in Japanese Patent Laid-open No. 2002-221619 employs a material having a high water vapor transmittance, but there is not mentioned that retardation of the film using this material is adjusted for acting as a retardation plate. Further, as the material having a high water vapor transmittance, materials having a high water absorption ability can also be cited, and there has been room for improvement yet from the viewpoint of the stability of polarization degree of the obtained polarizing film.

The inventors of the second invention have found that a polarizing plate protective film is formed by using a material having a low water absorption ability and a high water vapor transmittance for revealing retardation of a predetermined value or more, whereby the polarizing plate protective film is combined with a function as a retardation plate for enabling the reduction in the number of elements and at the same time for enabling to increase the stability of polarization degree of the obtained polarizing film. Thus, the second invention has been completed.

According to the second invention, it is possible to provide a polarizing plate which is capable of reducing the number of elements and at the same time increasing the stability of polarization degree of the obtained polarizing film.

Embodiments of the second invention will be described further in detail below.

The laminated polarizing plate according to this embodiment is a laminated polarizing plate in which a film (b) containing a polymer having a structural unit derived from at least one kind selected among 4-methyl-1-pentene, 3-methyl-1-pentene and 3-methyl-1-butene is directly or indirectly laminated on one surface of a polarizer (a), and a film (c) containing a polymer having a structural unit derived from cyclic olefin is directly or indirectly laminated on the other surface of the above polarizer (a).

(1) Polarizer (a)

The polarizer (a) used for this embodiment is not particularly limited as long as it functions as a polarizer. Examples thereof include a polarizing film containing iodine and/or dichroic dye and a polyvinyl alcohol resin, for example, a polyvinyl alcohol (PVA)·iodine-based polarizing film, a dye-based polarizing film in which a dichroic dye is adsorbed and aligned on a PVA film, a polyene polarizing film by inducing dehydration reaction from the PVA film or forming polyene by dehydrochlorination reaction of the polyvinyl chloride film, a polarizer having a polarizing film containing a dichroic dye on the surface and/or inside the PVA film composed of modified PVA having a cationic group in a molecule, and the like.

(2) Film (b)

In this embodiment, the film (b) used as a protective film of the polarizer (a) contains a polymer having a structural unit derived from at least one kind selected among 4-methyl-1-pentene, 3-methyl-1-pentene and 3-methyl-1-butene, and the retardation R(590) at a wavelength of 590 nm satisfies the relationship of the following formula (2-1),

$$R(590) \geq 5 \ (nm) \quad (2-1)$$

The film (b) satisfies the relationship of the formula (2-1), whereby the film is enabled to exhibit a function as a retardation plate. The laminated polarizing plate is constructed by laminating such a film to a polarizer (a), whereby it becomes possible to obtain a polarizing plate with a simplified constitution by reducing the number of elements as compared to the past, and a reduction in the cost and improvement in light use efficiency of the polarizing plate can be realized.

Furthermore, when the film (b) acts as a retardation plate used in a wide wavelength region of white light or the like, it is preferable that birefringence (retardation caused by birefringence) is small as the wavelength is shorter. From such a viewpoint, in the film (b), it is preferable that the retardation R(450) at a wavelength of 450 nm and retardation R(590) at a wavelength of 590 nm satisfy the relationship of the following formula (2-2),

$$R(450)/R(590) \leq 1 \quad (2-2)$$

In general, the retardation caused by birefringence can be expressed by an angle. At this time, the conversion formula of the retardation R1 expressed by an angle and the retardation R2 using a unit of nm is represented by R1 (degree) = (R2(nm)/λ(nm)) × 360 (degree) (λ: retardation measuring wavelength). The magnitude of the retardation R1 of the film (b) used for protecting the polarizer (a) has influence on polarization degree of the polarizer (a). For example, when the film is used for a liquid crystal display device, the image quality such as contrast of the liquid crystal display device is affected. Namely, even when R2 is always a constant value relative to the retardation measuring wavelength in use, R1 becomes high as the wavelength is shorter, and the protective film deteriorates the polarization degree of the polarizer (a) of linear polarized light as the wavelength is shorter. Namely, the retardation represented by R2 is preferably small as the wavelength is shorter. For example, if the effect of the retardation of the film (b) on the retardation of the polarizer (a) is all the same in the visible light region, the change of R2 to the wavelength λ preferably approaches the change of wavelength λ. This means that the retardation represented by R2 is preferably small as the wavelength is shorter. However, usually in case of any of transparent films composed of a polymer material used for the polarizing plate protective film, it is common that R2 becomes high as the wavelength is shorter, or is constant at best.

In the film satisfying the relationship of the above formula (2-2), since the retardation is small as the wavelength is shorter, the retardation (angle conversion) caused by the birefringence can be almost constant regardless of the wavelength with the film alone. Accordingly, the film (b) satisfying such a relationship can be used alone as a retardation plate having a constant retardation (angle conversion) in a wide band. Conventionally, the retardation plate having a constant retardation (angle conversion) in a wide band depends on a complex structure in which a plurality of optical elements are combined, or depends on a resin having unstable optical properties with a high water absorption ability, or cannot be realized regardless of an expensive resin having a complex chemical structure. Accordingly, when the film satisfying the relationship of the above formula (2-2) is used, it has a practically high value as compared to the conventional polarizing plate protective film having a retardation function.

Such a film (b) contains a specific (co) polymer (α) obtained from at least one olefin selected among 4-methyl-1-pentene, 3-methyl-1-pentene and 3-methyl-1-butene as a (co)monomer ingredient. Herein, "contains" refers to both a case in which the entire film (b) is constructed with the (co)polymer (α) and a case in which a part of the film (b) is constructed with the (co) polymer (α). Accordingly, the film (b) may or may not contain a component other than the (co) polymer (α). From the viewpoint of effectively realizing the effect of the second invention, the content of the (co)polymer (α) in the film (b) is preferably from 20 to 100 % by weight and more preferably from 50 to 100 % by weight.

((Co)polymer (α))

The specific (co)polymer (α) used for the film (b) is obtained from at least one olefin selected among 4-methyl-1-pentene, 3-methyl-1-pentene and 3-methyl-1-butene as a (co)monomer ingredient. Examples of this specific olefin based (co)polymer (α) include a homopolymer of 3-methyl-1-butene, 3-methyl-1-pentene or 4-methyl-1-pentene or a copolymer thereof, and other copolymerizable monomers, for example, a copolymer with styrene, acrylonitrile, vinyl chloride, vinyl acetate, acrylate ester, methacrylate ester or the like, a blend of the above components or other thermoplastic resins or synthetic rubbers, a block copolymer, a graft copolymer and the like. Of structural units of the (co)polymer (α), the structural unit derived from 4-methyl-1-pentene, 3-methyl-1-pentene or 3-methyl-1-butene is usually from 20 to 100 % by mole, preferably from 50 to 100 % by mole and further preferably from 80 to 100 % by mole in total. When the content of the structural unit derived from 4-methyl-1-pentene, 3-methyl-1-pentene or 3-methyl-1-butene is within the above range, a resin excellent in a balance of various characteristics such as transparency, heat resistance or the like is obtained; therefore, such a content is preferable.

Of (co)polymers (α), the 4-methyl-1-pentene (co)polymer is preferable because it is excellent in transparency, peeling property or the like and is suitable for use in combination with an optical element. Furthermore, the 3-methyl-1-pentene (co)polymer and the 3-methyl-1-butene (co)polymer are excellent in heat resistance, and are preferable from the viewpoints of the degree of freedom of the process, the degree of freedom of use condition and the like.

(4-methyl-1-pentene (co)polymer)

The 4-methyl-1-pentene (co)polymer which is preferably used as a (co)polymer (α) in the second invention is specifically a homopolymer of 4-methyl-1-pentene or a copolymer of 4-methyl-1-pentene and ethylene or other α-olefin having 3 to 20 carbon atoms such as propylene, 1-butene, 1-hexene, 1-octene, 1-decene, 1-tetradecene, 1-octadecene or the like. The 4-methyl-1-pentene (co)polymer which is preferably used in the second invention usually contains a structural unit derived from 4-methyl-1-pentene in an amount of not less than 85 % by mole and preferably not less than 90 % by mole. The constituent component which is not derived from 4-methyl-1-pentene constituting the 4-methyl-1-pentene (co)polymer is not particularly limited, and various monomers capable of performing copolymerization with 4-methyl-1-pentene can be properly used, but ethylene or α-olefin having 3 to 20 carbon atoms can be preferably used from the viewpoints of the easiness of acquisition, copolymerization characteristics and the like. Of these, preferably used are α-olefins having 6 to 20 carbon atoms, while particularly preferably used are 1-decene, 1-dodecene, 1-tetradecene, 1-hexadecene and 1-octadecene.

The melt flow rate (MFR) of the 4-methyl-1-pentene (co)polymer which is preferably used in the second invention as measured under conditions of a load of 5 kg and a temperature of 260 degrees centigrade in accordance with ASTM D1238 is determined depending on the use in many cases, but it is usually in the range of 1 to 50 g/10 min., preferably in the range of 2 to 40 g/10 min. and further preferably in the range of 5 to 30 g/10 min. When the melt flow rate of the 4-methyl-1-pentene (co)polymer is within the above range, the film formability and the appearance of the obtained film are excellent. Further, it is preferable that the melting point is in the range of 100 to 240 degrees centigrade and preferably in the range of 150 to 240 degrees centigrade.

Meanwhile, a method for preparing such a 4-methyl-1-pentene (co)polymer is not particularly limited, and the (co)polymer can be prepared according to a conventionally known method. For example, as described in Japanese Patent Laid-open No. 1984-206418, it can be prepared by polymerizing 4-methyl-1-pentene with the aforementioned ethylene or α-olefin in the presence of a catalyst.

(3-methyl-1-pentene (co)polymer)

The preferable kind of the comonomer, the content of comonomer, MFR, the melting point and the like of the 3-methyl-1-pentene (co)polymer which is preferably used as a (co)polymer (α) in the second invention are the same as those of the above 4-methyl-1-pentene (co)polymer. The method for preparing the 3-methyl-1-pentene (co)polymer which is preferably used in the second invention is not particularly limited, and the (co)polymer can be suitably prepared according to a conventionally known method. For example, it can be prepared by the method as described in Japanese Patent Laid-open No. 1994-145248.

(3-methyl-1-butene (co)polymer)

The preferable kind of the comonomer, the content of comonomer, MFR, the melting point and the like of the 3-methyl-1-butene (co) polymer which is preferably used as the (co) polymer ($\alpha$) in the second invention are the same as those of the above 4-methyl-1-pentene (co)polymer. The method for preparing the 3-methyl-1-butene (co)polymer which is preferably used in the second invention is not particularly limited, and the (co)polymer can be suitably prepared according to a conventionally known method. For example, it can be suitably prepared by the method as described in Japanese Patent Laid-open No. 1994-145248.

(Component constituting film (b) other than (co)polymer ($\alpha$))

The film (b) used in the second invention may contain various components other than the aforementioned (co) polymer ($\alpha$). The components other than the (co)polymer ($\alpha$) may be various resins or various rubbers other than the (co)polymer ($\alpha$). As various resins, particularly preferably used is a resin excellent in transparency, and there can be used, for example, various polyolefins such as a cyclic olefin (co)polymer and the like; polycarbonate, polystyrene, a cellulose acetate resin, a fluorinated resin, polyester, an acrylic resin and the like can be used. As various rubbers, olefin based rubber, styrene based rubber and the like. Further, to the film (b) used in the second invention, there can be added various compounding ingredients to be used by adding usual polyolefin such as an anti-static agent, an anti-oxidant, a heat stabilizer, a release agent, a weathering stabilizer, a rust prevention agent, a slipping agent, a nucleating agent, a pigment, a dye, an inorganic filler (silica or the like) and the like; or other special compounding ingredients, in the ranges in which the object of the second invention is not damaged.

(Method for preparing film (b))

The method for preparing the film (b) used in the second invention is not particularly limited. For example, the film can be formed by a method involving mixing the (co)polymer ($\alpha$) and components other than the (co)polymer ($\alpha$) using a V-blender, a ribbon blender, a Henschel mixer or a tumbler blender, a method involving mixing using the above blender, and then melt-kneading using a single screw extruder, a multi-screw extruder, a kneader, a banbury mixer or the like for granulating or pulverizing, and then press molding, extrusion molding, inflation molding or the like, or a solution casting method or the like. To produce the film with good efficiency, preferably used are a solution casting method, an inflation molding method, an extrusion molding method and the like.

Furthermore, by stretching the obtained film, physical properties such as birefringence, its angle dependence and the like can be optically adjusted to a desired value, and a film further provided with mechanical strength can be achieved. A stretching ratio may be properly selected according to desired optical properties, but it is usually from 1.3 to 10 times and preferably from 1.5 to 8 times.

The thickness of the film (b) may be properly set depending on the purpose of use, particularly the birefringence of the film (b) and its wavelength dependence, and is not particularly limited. However, it is usually from 10 to 200 $\mu$m and preferably from 20 to 100 $\mu$m. When the thickness is within such a range, the productivity of the film is excellent, pinholes or the like are not generated at the time of molding the film, and sufficient strength is obtained as well; therefore, it is preferable. Indeed, the reason why the optical design usually takes priority is as described above.

(3) Film (c)

In this embodiment, the film (c) used as a protective film of the polarizer (a) contains a polymer (cyclic olefin (co)polymer) having a structural unit derived from cyclic olefin.

Namely, the film (c) contains an alicyclic structure-containing polymer. Herein, "contains" refers to both a case in which the entire film is constructed with the alicyclic structure-containing polymer and a case in which a part of the film is constructed with the alicyclic structure-containing polymer. The content of the alicyclic structure-containing polymer is not particularly limited, but it is usually from 50 to 100 % by weight, preferably from 60 to 100 % by weight and further preferably from 70 to 100 % by weight from the viewpoint of optical homogeneity. Furthermore, components other than the resin are not particularly limited, but, for example, an olefin elastomer or a styrene elastomer can be added from the viewpoint of improvement of impact resistance or the like.
Further, as described below, other various additives may be used.

The alicyclic structure-containing polymer contains an alicyclic structure in repeating units of the polymer, and may have an alicyclic structure in either of its main chain or the side chain. Examples of the alicyclic structure include a cycloalkane structure, a cycloalkene structure and the like, but preferably used is a cycloalkane structure from the viewpoint of thermal stability or the like. The number of carbon atoms constituting the alicyclic structure is not particularly limited. However, when it is usually in the range of 4 to 30, preferably in the range of 5 to 20 and more preferably in the range of 5 to 15, a film excellent in heat resistance and flexibility is obtained. The ratio of the repeating units having an alicyclic structure in the alicyclic structure-containing polymer may be suitably selected depending on the purpose of use, but it is usually not less than 20 % by weight, preferably not less than 40 % by weight and more preferably not less than 60 % by weight. When the ratio of the repeating units having an alicyclic structure in the alicyclic structure-containing polymer is sufficient, it is preferable because heat resistance is excellent. Incidentally, the remainder other than repeating units having an alicyclic structure in the alicyclic structure-containing polymer is not particularly limited and is properly selected depending on the purpose of use.

Concrete examples of the polymer resin containing an alicyclic structure include (1) a norbornene based polymer, (2) a monocyclic cyclic olefin based polymer, (3) a cyclic conjugated diene based polymer, (4) a vinyl alicyclic hydrocarbon polymer, a hydrogenated product thereof and the like. Of these, preferably used are a norbornene based polymer, a vinyl alicyclic hydrocarbon polymer and a hydride thereof from the viewpoints of dimensional stability, oxygen transmittance, moisture permeability, heat resistance, mechanical strength and the like.

(1) Norbornene based polymer

Examples of the norbornene based polymer include a ring-opening polymer of a norbornene based monomer, a ring-opening copolymer of a norbornene based monomer and other monomers capable of performing ring-opening copolymerization with the norbornene based monomer, and a hydrogenated product thereof; an addition polymer of a norbornene based monomer, and an addition copolymer of a norbornene based monomer with other monomers capable of performing copolymerization with the norbornene based monomer.

In the hydrogenated product of a ring-opening polymer of a norbornene based monomer and hydrogenated product of a ring-opening copolymer of a norbornene based monomer and other monomers capable of performing ring-opening copolymerization with the norbornene based monomer, when its hydrogenation ratio is not less than 99%, they are excellent in transparency (particularly, initial change of yellowness index is low), stability (particularly, change of yellowness hardly occurs over a long period of time) and the like, and can suppress occurrence of gelation in many cases; therefore, such a ratio is preferable.

Among these, an addition copolymer of a norbornene based monomer with other monomers capable of performing copolymerization with the norbornene based monomer is the most preferable from the viewpoint that the desired retardation is easily achieved.

Examples of the norbornene based monomer include, though not restricted to, bicyclo[2.2.1]-hept-2-ene (customary name: norbornene), 5-methyl-bicyclo[2.2.1]-hept-2-ene, 5,5-dimethyl-bicyclo[2.2.1]-hept-2-ene, 5-ethyl-bicyclo[2.2.1]-hept-2-ene, 5-butyl-bicyclo[2.2.1]-hept-2-ene, 5-hexyl-bicyclo[2.2.1]-hept-2-ene, 5-octyl-bicyclo[2.2.1]-hept-2-ene, 5-octadecyl-bicyclo[2.2.1]-hept-2-ene, 5-ethylidene-bicyclo[2.2.1]-hept-2-ene, 5-methylidene-bicyclo[2.2.1]-hept-2-ene, 5-vinyl-bicyclo[2.2.1]-hept-2-ene, 5-propenyl-bicyclo[2.2.1]-hept-2-ene, 5-methoxy-carbonyl-bicyclo[2.2.1]-hept-2-ene, 5-cyano-bicyclo[2.2.1]-hept-2-ene, 5-methyl-5-methoxycarbonyl-bicyclo[2.2.1]-hept-2-ene, 5-methoxycarbonyl-bicyclo[2.2.1]-hept-2-ene, 5-ethoxycarbonyl-bicyclo[2.2.1]-hept-2-ene, 5-methyl-5-ethoxycarbonyl-bicyclo[2.2.1]-hept-2-ene, bicyclo[2.2.1]-hept-5-enyl-2-methylpropionate, bicyclo[2.2.1]-hept-5-enyl-2-methyloctanate, bicyclo[2.2.1]-hept-2-ene-5,6-dicarboxylic anhydride, 5-hydroxymethyl-bicyclo[2.2.1]-hept-2-ene, 5,6-di(hydroxymethyl)-bicyclo[2.2.1]-hept-2-ene, 5-hydroxy-i-propyl-bicyclo[2.2.1]-hept-2-ene, 5,6-dicarboxy-bicyclo[2.2.1]-hept-2-ene, bicyclo[2.2.1]-hept-2-ene-5,6-dicarboxylic acid imide, 5-cyclopentyl-bicyclo[2.2.1]-hept-2-ene, 5-cyclohexyl-bicyclo[2.2.1]-hept-2-ene, 5-cyclohexenyl-bicyclo[2.2.1]-hept-2-ene, 5-phenyl-bicyclo[2.2.1]-hept-2-ene, tricyclo[4.3.1$^{2,5}$.0$^{1,6}$]-deca-3,7-diene (customary name: dicyclopentadiene), tricyclo[4.3.1$^{2,5}$.0$^{1,6}$]-deca-3-ene, tricyclo[4.4.1$^{2,5}$.0$^{1,6}$]-undeca-3,7-diene, tricyclo[4.4.1$^{2,5}$.0$^{1,6}$]-undeca-3.8-diene, tricyclo[4.4.1$^{2,5}$.0$^{1,6}$]-undeca-3-ene, tetracyclo[7.4.1$^{10,13}$.0$^{1,9}$.0$^{2,7}$]-trideca-2,4,6-11-tetraene (also referred to as 1,4-methano-1,4,4a,9a-tetrahydrofluorene, customary name: methanotetrahydrofluorene), tetracyclo[8,4,1$^{11,14}$,0$^{1,10}$,0$^{3,8}$]-tetradeca-3,5,7,12-11-tetraene (also referred to as 1,4-methano-1,4,4a,5,10,10a-hexahydroanthracene), tetracyclo[4.4.1$^{2,5}$.1$^{7,10}$.0]-dodeca-3-ene (also referred to as tetracyclododecene), 8-methyl-tetracyclo[4.4.1$^{2,5}$.1$^{7,10}$.0]-dodeca-3-ene, 8-ethyl-tetracyclo[4.4.1$^{2,5}$.1$^{7,10}$.0]-dodeca-3-ene, 8-methylidene-tetracyclo[4.4.1$^{2,5}$.1$^{7,10}$.0]-dodeca-3-ene, 8-ethylidene-tetracyclo[4.4.1$^{2,5}$.1$^{7,10}$.0]-dodeca-3-ene, 8-vinyl-tetracyclo[4.4.1$^{2,5}$.1$^{7,10}$.0]-dodeca-3-ene, 8-propenyl-tetracyclo[4.4.1$^{2,5}$.1$^{7,10}$.0]-dodeca-3-ene, 8-methoxycarbonyl-tetracyclo[4.4.1$^{2,5}$.1$^{7,10}$.0]-dodeca-3-ene, 8-methyl-8-methoxycarbonyl-tetracyclo[4.4.1$^{2,5}$.1$^{7,10}$.0]-dodeca-3-ene, 8-hydroxymethyl-tetracyclo[4.4.1$^{2,5}$.1$^{7,10}$.0]-dodeca-3-ene, 8-carboxy-tetracyclo[4.4.1$^{2,5}$.1$^{7,10}$.0]-dodeca-3-ene, 8-cyclopentyl-tetracyclo[4.4.1$^{2,5}$.1$^{7,10}$.0]-dodeca-3-ene, 8-cyclohexyl-tetracyclo[4.4.1$^{2,5}$.1$^{7,10}$.0]-dodeca-3-ene, 8-cyclohexenyl-tetracyclo[4.4.1$^{2,5}$.1$^{7,10}$.0]-dodeca-3-ene, 8-phenyl-tetracyclo[4.4.1$^{2,5}$.1$^{7,10}$.0]-dodeca-3-ene, pentacyclo[6.5.1$^{1,8}$.1$^{3,6}$.0$^{2,7}$.0$^{9,13}$]-pentadeca-3,10-diene, pentacyclo[7.4.1$^{3,6}$.1$^{10,13}$.0$^{1,9}$.0$^{2,7}$]-pentadeca-4,11-diene and the like. These norbornene based monomers are used singly or in combination of two or more kinds.

The ring-opening polymer of a norbornene based monomer or the ring-opening copolymer of a norbornene based monomer and other monomers capable of performing ring-opening copolymerization with the norbornene based monomer can be obtained by polymerizing the monomer component(s) in the presence of a ring-opening polymerization catalyst. As the ring-opening polymerization catalyst, there can be used, for example, a catalyst composed of a halide, nitrate or acetylacetone compound of a metal such as ruthenium, rhodium, palladium, osmium, iridium, platinum and the like, and a reducing agent, or a catalyst composed of a halide or acetylacetone compound of a metal such as titanium, vanadium, zirconium, tungsten, molybdenum and the like, and an organic aluminum compound. The polymerization reaction is usually carried out at a polymerization temperature of from -50 to 100 degrees centigrade under polymerization pressure of from 0 to 50 kg/cm$^2$ in a solvent or without using any solvent. Examples of other monomers capable of performing ring-opening copolymerization with a norbornene based monomer include, though not restricted to, a monocyclic cyclic olefin based monomer such as cyclohexene, cycloheptene, cyclooctene and the like.

The hydrogenated product of a ring-opening polymer of a norbornene based monomer can be usually obtained by adding a hydrogenation catalyst to a polymerization solution of the above ring-opening polymer for adding hydrogen to carbon-carbon unsaturated bonds. The hydrogenation catalyst is not particularly limited, but heterogeneous catalysts or homogeneous catalysts are usually used.

The norbornene based monomer or the addition (co)polymer of a norbornene based monomer and other monomers capable of copolymerization with the norbornene based monomer can be generally obtained, for example, by (co)polymerizing the monomer component(s) under polymerization pressure of from 0 to 50 kg/cm$^2$ at a polymerization temperature of from -50 to 100 degrees centigrade in a solvent or without using any solvent in the presence of a catalyst composed of a titanium, zirconium or vanadium compound and an organic aluminum compound.

Examples of other monomers capable of performing copolymerization with a norbornene based monomer include, though not restricted to, $\alpha$-olefins having 2 to 20 carbon atoms such as ethylene, propylene, 1-butene, 1-pentene, 1-hexene, 3-methyl-1-butene, 3-methyl-1-pentene, 3-ethyl-1-pentene, 4-methyl-1-pentene, 4-methyl-1-hexene, 4,4-dimethyl-1-hexene, 4,4-dimethyl-1-pentene, 4-ethyl-1-hexene, 3-ethyl-1-hexene, 1-octene, 1-decene, 1-dodecene, 1-tetradecene, 1-hexadecene, 1-octadecene, 1-eicocene and the like; cyclo olefins such as cyclobutene, cyclopentene, cyclohexene, 3,4-dimethylcyclopentene, 3-methylcyclohexene, 2-(2-methylbutyl)-1-cyclohexene, cyclooctene, 3a, 5,6,7a-tetrahydro-4,7-methano-1H-indene and the like; and non-conjugated dienes such as 1,4-hexadiene, 4-methyl-1,4-hexadiene, 5-methyl-1,4-hexadiene, 1,7-octadiene and the like. Among these, $\alpha$-olefins, particularly ethylene, are preferred.

Other monomers capable of performing copolymerization with a norbornene based monomer can be used singly or in combination of two or more kinds. When the norbornene based monomer and other monomers capable of performing copolymerization with the norbornene based monomer are subjected to an addition copolymerization, the proportion of the structural unit derived from the norbornene based monomer in the addition copolymer to the structural unit derived from other monomers capable of performing copolymerization is properly selected such that the weight ratio is usually in the range of 30:70 to 99:1, preferably in the range of 50:50 to 97:3 and more preferably in the range of 70:30 to 95:5.

(2) Monocyclic cyclic olefin based polymer

As the monocyclic cyclic olefin based polymer, there can be used, for example, an addition polymer of a monocyclic cyclic olefin based monomer such as cyclohexene, cycloheptene, cyclooctane and the like. However, the monocyclic cyclic olefin based polymer is not restricted thereto.

(3) Cyclic conjugated diene based polymer

As the cyclic conjugated diene based polymer, there can be used, for example, a polymer obtained by subjecting a cyclic conjugated diene based monomer such as cyclopentadiene, cyclohexadiene or the like to 1,2- or 1,4-addition polymerization, and hydrogenated products thereof. However, the cyclic conjugated diene based polymer is not restricted thereto.

The molecular weight of the norbornene based polymer, the monocyclic cyclic olefin based polymer or the cyclic conjugated diene based polymer is properly selected depending on the purpose of use. However, when the weight average molecular weight Mw in terms of polyisoprene or polystyrene as measured in the form of a cyclohexane solution (a toluene solution in case the polymer resin is not dissolved) by the gel permeation chromatography is usually in the range of 5, 000 to 1, 000, 000, preferably in the range of 8,000 to 800,000 and more preferably in the range of 10,000 to 500,000, the mechanical strength and molding processability of a molded product are highly balanced. Such polymers are suitable in many cases.

(4) Vinyl alicyclic hydrocarbon polymer

As the vinyl alicyclic hydrocarbon polymer, there can be used, for example, a polymer of a vinyl alicyclic hydrocarbon based monomer such as vinylcyclohexene, vinylcyclohexane or the like and hydrogenated products thereof, or hydrogenated products thereof of an aromatic ring part of a polymer of a vinyl aromatic based monomer such as styrene, α-methylstyrene or the like. In this case, it may be any of copolymers, such as a random copolymer and a block copolymer, of a vinyl alicyclic hydrocarbon polymer or a vinyl aromatic based monomer with other monomers capable of performing copolymerization with these monomers and hydrogenated products thereof. The block copolymer is not particularly limited, and examples thereof include a diblock copolymer, a triblock copolymer, a multiblock copolymer, a tapered block copolymer and the like.

The molecular weight of the vinyl alicyclic hydrocarbon polymer is properly selected depending on the purpose of use. However, when the weight average molecular weight Mw in terms of polyisoprene or polystyrene as measured in the form of a cyclohexane solution (a toluene solution in case the polymer resin is not dissolved) by the gel permeation chromatography is usually in the range of 10, 000 to 800,000, preferably in the range of 15, 000 to 500,000 and more preferably in the range of 20,000 to 300,000, the mechanical strength and molding processability of a molded product are highly balanced. Such polymers are suitable in many cases.

Various additives may be combined with the film (C) as needed. Examples of such additives include various resins with a water absorption percentage of more than 0.1% such as various cellulose resins including triacetylcellulose or stabilizers such as anti-oxidants, light stabilizers, ultraviolet absorbers or the like, anti-static agents and the like. However, such additives are not particularly limited as long as the object of the present second invention is not impaired.

(Method for preparing film (c))

The method for preparing a film (c) is not particularly limited, but a melting method involving melting a resin for molding, a solution casting method involving dissolving a resin in a solvent for casting to form a film and the like can be used. For example, since a solvent is not used, a melting method capable of effectively reducing the content of the volatile component in the film is preferably used. It is preferable to use the melting method because it is cheap as compared to the solution casting method and the like, its production speed is fast, and its load to the environment is low without using any solvent. Examples of the melting method include a melt extrusion method such as a method using T-die and an inflation method, a calendaring method, a heat-pressing method, and an injection molding method. Of these methods, the melt extrusion method using T-die is preferably used since non-uniformity in thickness can be diminished, it is easy to process a film at a film thickness of from about 20 to 500 $\mu$m, and the absolute values of the retardation and its variation can be small.

Conditions of the melt molding method are almost the same as those used for a polycarbonate resin having a Tg of the same degree. For example, in the melt extrusion method using T-die, conditions capable of slowly cooling the resin are preferably selected at the resin temperature of from about 240 to 300 degrees centigrade and temperature of take-off rolls of relatively high temperature of from about 100 to 150 degrees centigrade. Further, in order to decrease defects on the surface of a die line or the like, a die needs to have a structure such that a residual part becomes very small and those with almost no scratch inside the die or lip are preferably used. Further, the inside of the die or lip is subjected to surface grinding as needed, whereby the surface accuracy can be further enhanced.

In the production of the film (C) , the film prepared by the above melting method may be used without stretching, or may be stretched either uniaxially or biaxially. The retardation value of the aforementioned film (C) is not particularly limited, and any of films obtained by controlling the retardation to a specific value and particularly a film in which the retardation is not controlled may be used. Furthermore, even when the retardation is controlled to a specific value, the film (C) may be controlled, for example, to have a relatively large retardation of not less than 50 nm, a relatively small retardation of less than 50 nm or an extremely small retardation of almost zero.

When the film (c) is controlled to have a relatively large retardation, the film is preferably stretched. Molecules are oriented by stretching, whereby the retardation can be controlled. A stretching ratio is usually from 1.3 to 10 times and preferably from 1.5 to 8 times. In this range, a prescribed retardation may be achieved. When the stretching ratio is too low, the absolute value of the retardation does not increase, thereby hardly reaching a prescribed value in some cases. When it is too high, the sheet might be broken in some cases. Stretching is usually carried out in a temperature range of Tg of the resin constituting the sheet to Tg+50 degrees centigrade and preferably in the range of Tg to Tg+40 degrees centigrade. When the stretching temperature is too low, the sheet might be broken. When it is too high, molecules are not oriented. So, a desired retardation might not be obtained.

Furthermore, the film (c) may be good if it functions as a protective film of the polarizer (a), and its film thickness is not particularly limited, but it is preferable that the film before stretching has a film thickness of from about 50 to 500 $\mu$m. The film thickness after stretching is usually from 10 to 200 $\mu$m, preferably from 15 to 150 $\mu$m and further preferably from 20 to 100 $\mu$m. When the film thickness is too small, it is difficult to give sufficient mechanical strength to the film. On the other hand, when it is too high, the optical loss and the amount of resin used are hardly suppressed, and when the film is used for a display element, it is difficult to save the space. By having the film thickness within the above range, a protective film with excellent balance of both characteristics is obtained.

On the other hand, the non-uniformity in thickness is preferably as low as possible. It is within $\pm$8%, preferably

within ±6% and more preferably within ±4% of the whole surface. When the non-uniformity in thickness of the sheet is great, a variation of retardations in a stretch-oriented film might be high.

(4) Laminated polarizing plate

The laminated polarizing plate of this embodiment is provided with the aforementioned film (b) which is directly or indirectly laminated on one surface of the aforementioned polarizer (a) and the aforementioned film (c) which is directly or indirectly laminated on the other surface of the polarizer (a).

Herein, "directly or indirectly laminated" refers to both a case in which the film (b) or (c) is directly laminated to the polarizer (a) and a case in which the film (b) or (c) is laminated via an arbitrary layer between the film (b) or (c) and the polarizer (a).

In the polarizing film having a constitution of "cyclic olefin (co)polymer/polyvinyl alcohol/cyclic olefin (co)polymer" described in Japanese Patent Laid-open No. 1996-43812, since a moisture absorption of the cyclic olefin (co)polymer is remarkably low, it is difficult to sufficiently release the moisture contained in the polarizing film in the production process including adhesion of each layer, drying or the like. Accordingly, the water content of the polarizing film in the obtained polarizing film becomes large and adhesion strength of each layer is insufficient, thus easily occurring reduction in the polarization degree.

Furthermore, in the polarizing film having a constitution of "cyclic olefin (co)polymer/polyvinyl alcohol/triacetylcellulose" described in Japanese Patent Laid-open No. 1996-43812, firstly since the film composed of different materials by interposing polyvinyl alcohol is used, warpage easily occurs in the production process. Furthermore, triacetylcellulose with a high water absorption ability is used as a protective film, and dimensional variation of this triacetylcellulose is caused by water absorption. At this time, it is a cause of warpage in the polarizing film having this constitution. Furthermore, since triacetylcellulose causes a change in optical characteristics due to dimensional variation, the polarization degree of the polarizing film is reduced in some cases.

On the other hand, in this embodiment, the film composed of 4-methyl-1-pentene or the like having a low water absorption ability, high water vapor transmittance and high dimensional stability is used as a protective film on one surface of the polarizer (a). For this reason, in the laminated polarizing plate using this film, drying is particularly easy in the use of the polarizing plate protective film employing an aqueous adhesive agent. Accordingly, deficiency of adhesion strength or warpage hardly occurs, and the stability of the polarization degree can be enhanced as compared to the polarizing film described in Japanese Patent Laid-open No. 1996-43812.

Meanwhile, in the laminated polarizing plate of this embodiment, since the film made of 4-methyl-1-pentene or the like and the film composed of a cyclic olefin (co)polymer are materials having high dimensional stability as compared to the polarizing plate using triacetylcellulose as a protective film on one surface thereof, it is considered that warpage is suppressed regardless of the fact that the film composed of different materials is used by interposing polyvinyl alcohol.

As described above, the laminated polarizing plate of this embodiment employs the film composed of 4-methyl-1-pentene or the like as a protective film, whereby the dimensional stability is high as compared to a conventional polarizing plate, deficiency of adhesion strength between the protective film and the polarizer or warpage hardly occurs and the stability of the polarization degree can be heightened; therefore, it is useful. Furthermore, the film obtained by adjusting the retardation to a constant range is used as a protective film, whereby this protective film can also function as a retardation plate and the number of elements can be reduced.

The liquid crystal display element of this embodiment has the aforementioned laminated polarizing plate and liquid crystal cell.

The liquid crystal cell has a liquid crystal layer which is usually formed by enclosing a liquid crystal in a space formed by interposing a spacer between two pieces of substrates. In this liquid crystal cell, there can be arranged a transparent electrode layer composed of a transparent film containing an electrically conducting substance formed on the substrate, a gas barrier layer arranged such that air does not pass through the liquid crystal layer, a hard coat layer for providing abrasion resistance to the liquid crystal cell, an undercoat layer used for adhesion of the transparent electrode layer and the like.

The laminated polarizing plate is provided with, as described above, the aforementioned film (b) which is directly or indirectly laminated on one surface of the polarizer (a) and the aforementioned film (c) which is directly or indirectly laminated to the other surface of the aforementioned polarizer (a).

Herein, in the laminated polarizing plate, the film (b) may be arranged at a side of the liquid crystal cell on the basis of the polarizer (a). When the retardation satisfies the condition of the above formula (2-1) by such a constitution, a separate retardation plate which was needed in the liquid crystal display element in the past can be eliminated. Even when a separate retardation plate is used, preferable effects such as improvement of the degree of freedom in its design or the like are achieved in some cases. Further, when the retardation satisfies the condition of the above formula (2-2), the aforementioned retardation represented by an angle can be constant in a wide wavelength range used for the liquid crystal display. Conventionally, this depends on a complex structure in which a plurality of optical elements are combined, or cannot be realized regardless of the resin having a complex chemical structure, and there are advantages such that improvement in the contrast of the liquid crystal display element and suppression of change in the color tone can be realized.

Furthermore, the display device of this embodiment has the aforementioned laminated polarizing plate and/or the aforementioned liquid crystal display element. That is, in this embodiment, the following embodiments are included:

(1) a display device equipped with the aforementioned liquid crystal display element,
(2) a display device equipped with the aforementioned laminated polarizing plate and the aforementioned liquid crystal display element, and
(3) a display device equipped with the aforementioned laminated polarizing plate.

In the (1) display device, an optical compensation film or the like is included, in addition to the aforementioned liquid crystal display element. Furthermore, in the (2) display device, a laminated polarizing plate is further included, in addition to the (1) display device. Further, as the (3) display device, a display device containing an organic EL element can be cited.

(Third Invention)

The third invention relates to a laminate, a retardation film and a liquid crystal display element using the same.

The liquid crystal display device is basically constructed such that a liquid crystal cell L is interposed between two pieces of polarizing plates P. However, since the liquid crystal cell L has original birefringence and its angle dependence, contrast deterioration, a decrease in a viewing angle or the like occurs and a decrease in the image quality of the liquid crystal display device is also caused. Then, using various retardation films, the birefringence of the liquid crystal cell L is compensated.

For example, the circularly polarized light component which cannot be filtered at a polarizing film is contained in the light passing through the liquid crystal cell so that the contrast of the display is deteriorated in some cases. Then, before the light passing through the liquid crystal cell is incident on the polarizing film, the light passes through the retardation plate, whereby such a circularly polarized light is compensated for improving the contrast of the liquid crystal display element, which has been carried out.

The conventional method for compensating light will be described below.

Firstly, as a premise in the third invention, positive or negative birefringence is defined.
With regard to the retardation film A, when nx is the maximum in-plane refractive index of the retardation film, ny is the refractive index in the direction orthogonal to the direction in which the maximum in-plane refractive index of the retardation film occurs, and nz is the vertical refractive index of the retardation film, and if the retardation film A satisfies the following formula (3-1), the film A is defined to have a function as a so-called +A film having positive (+) birefringence. Furthermore, when the retardation film A satisfies the following formula (3-2), the film A is defined to have a function as a so-called -A film having negative (-) birefringence,

$$nx > ny \geq nz \quad (3-1)$$

$$nz \geq nx > ny \quad (3-2)$$

Meanwhile, with regard to the retardation film C, when the refractive index in the film thickness direction is greater than the in-plane refractive index, it is defined to have positive (+) birefringence, and when the refractive index in the film thickness direction is smaller than the in-plane refractive index, it is defined to have a negative (-) birefringence (respectively referred to as a retardation film +C and a retardation film -C). C refers to both +C and -C.

On the above premise, as the conventional compensation method, the following three types have been known,

(i) cross A type compensation using a retardation film +A having positive birefringence and a retardation film -A having negative birefringence,
(ii) AC type compensation using -A-C, -C-A or +A+C, +C+A and
(iii) ACA type compensation arranged in the order of +A+C+A or -A-C-A.

Incidentally, the (ii) AC type compensation has been described in International Publication Pamphlet No.

03/032060. In the document, there is a technique relating to a liquid crystal display element equipped with a retardation film. In the same document, there has been disclosed a liquid crystal display element using the retardation film A and a retardation film C arranged in the order of A, C and L.

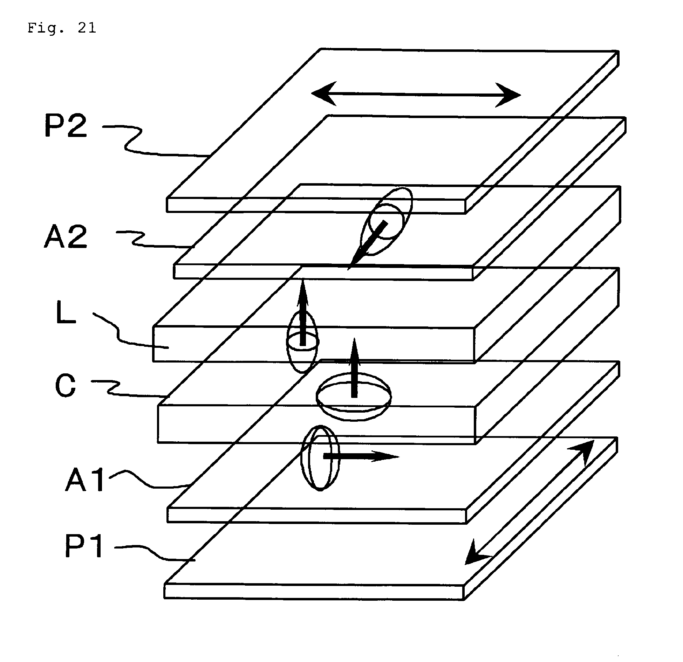

As one of such examples, a conventional compensation method of a (i) +A-A type will be described with reference to Fig. 21.

In Fig. 21, the optical axis of a retardation film -A (a first retardation film) A1 having negative birefringence adjacent to a backlight side polarizer P1 is arranged to be orthogonal to the absorption axis of the backlight side polarizer P1 (direction of an arrow in the figure), and the retardation film -C and the liquid crystal cell L are further arranged adjacent to each other in this order. Furthermore, in the vicinity of the liquid crystal cell L, a retardation film +A (a second retardation film) A2 having positive birefringence is arranged aligned with the absorption axis of the backlight side polarizer P1. With regard to a panel light emitting side polarizer P2, its absorption axis is arranged to be orthogonal to the absorption axis of the backlight side polarizer P1.

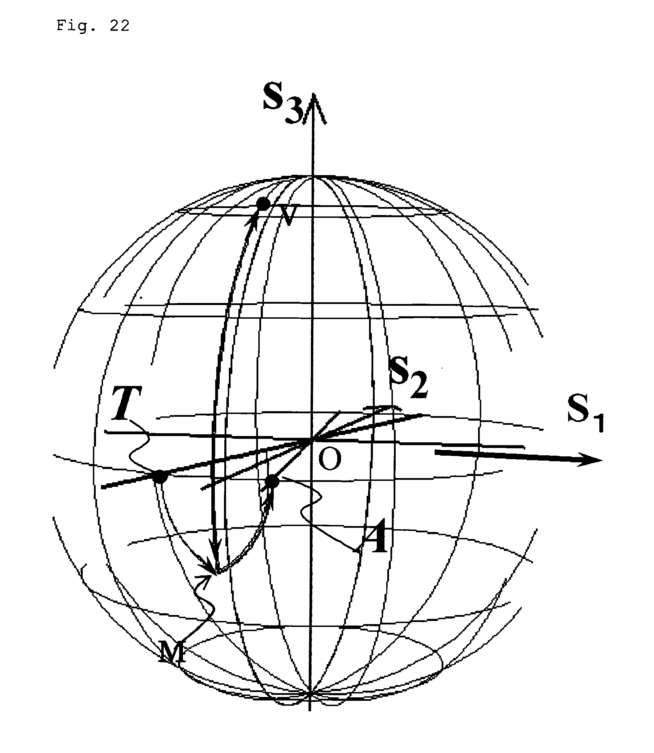

The change in the polarizing state in this method will be explained with reference to the Poincaré spherical representation (Fig. 22).

T in Fig. 22 represents the transmission polarization axis direction of the backlight side polarizer P1, while A represents the absorption axis direction of the panel light emitting side polarizer P2. At integral multiples of $\theta=0°$ at vertical incidence or azimuth angle of $\varphi=90°$, the directions of A and T are aligned with each other. For this reason, the light passing through the backlight side polarizer P1 is all absorbed by the panel light emitting side polarizer P2 so that light leakage does not occur.

On the other hand, the state at the oblique viewing angle will be described with reference to Fig. 22 expressed by the Poincaré spherical representation, taking a viewing angle of $\theta=60°$ and the azimuth angle of $\varphi=45°$ as an example. Herein, the polarizing state of the light passing through the backlight side polarizer P1 is linear polarized light corresponding to T on the Poincaré sphere. Transmitted light of the backlight side polarizer P1 passes through the first retardation film A1, whereby the light is rotated 60 degrees counterclockwise around the central rotation axis A as the center and becomes counterclockwise elliptical polarized light represented by the point M, and then is rotated around the S1 axis as the central rotation axis by a retardation film C (-C) to pass through for reaching the point V to be a clockwise elliptical polarized light. Furthermore, the light returns to the point M by the liquid crystal cell L to pass through next. Then, by passing through the second retardation film A2, the light is rotated 60 degrees counterclockwise around T as the central rotation axis and finally the polarizing state comes to A. Since this point A is aligned with the absorption axis of the panel light emitting side polarizer P2, this polarized light is all absorbed. This is a principle that light leakage can be reduced at an oblique view.

Hereinafter, details of a typical method of the presented conventional compensation methods have been introduced, for example, in Deng-Ke Yang, Shin-Tson Wu, "Fundamentals of Liquid Crystal Devices," John & Wiley, 2006, p. 213 to 234.

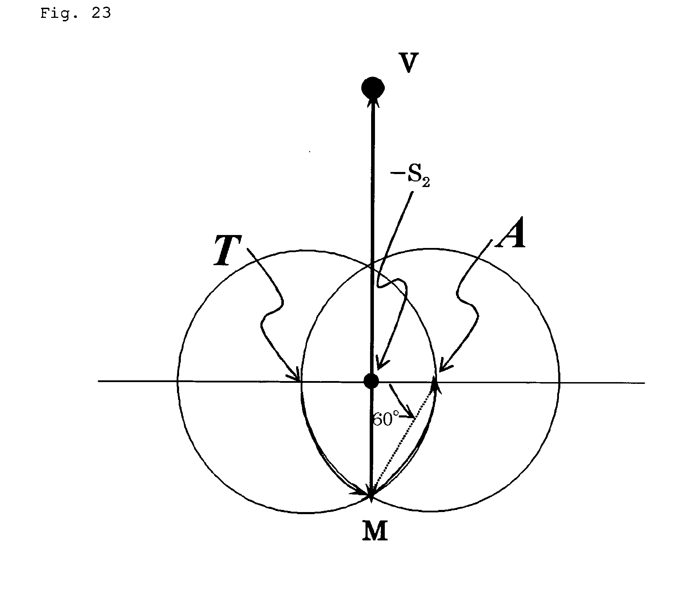

However, in the aforementioned compensation method, the retardation required for the retardation film has been relatively large. This point of view will be described with reference to Fig. 23. Fig. 23 is a view projected onto the equator plane of a locus on the Poincaré spherical surface so as to further easily understand Fig. 22.

In Fig. 23, since a triangle connecting three points A, T and M becomes a viewing angle-independent equilateral triangle, the rotation angle by the retardation film A becomes 60 degrees. The retardation corresponding to this angle satisfies the relationship of the rotation angle $\Gamma = (2n/\lambda)Re$ in proportion to this angle.

Accordingly, the retardation required for the first and second retardation films A is the in-plane retardation of about 90 nm at a wavelength of 550 nm.

As described above, the compensation method in the so-called cross A compensation type (-A, +A) is explained, whereas the compensation method of the (ii) AC type as described in the aforementioned International Publication Pamphlet No. 03/032060 can also be explained in accordance with this. However, in case of the AC type compensation method, the retardation necessary for the retardation film A needs to have the retardation of greater than before and after 140 nm.

In this way, in case of the arrangement in International Publication Pamphlet No. 03/032060, the retardation film A needs to have, for example, large retardation of about 140 nm, and there has been room for improvement from the point of the degree of freedom of the material which can be used as the retardation film A. Furthermore, in the compensation method as described in the document, since the symmetry property to the azimuth angle is not always sufficient, there has been room for improvement from the point of sufficiently securing the viewing angle of the liquid crystal display device.

The third invention is conducted in view of the above circumstances, and an object of the invention is to provide a technique of reducing light leakage in the dark state of the liquid crystal panel for securing low light leakage at an oblique view and a wide viewing angle even when a film having a relatively small retardation is used.

According to the third invention, even when a film having a relatively small retardation is used, it is possible to reduce light leakage in the dark state of the liquid crystal panel and to secure low light leakage at an oblique view and a wide viewing angle.

Hereinafter, embodiments of the third invention will be illustrated with reference to the drawings. Incidentally, in all drawings, common components will be assigned with the same symbols, and proper explanation will be omitted.

(First Embodiment)

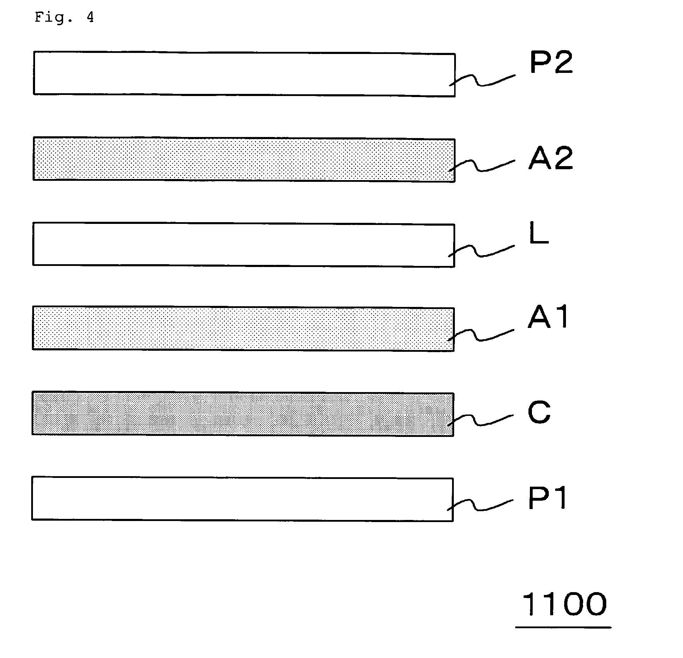

Fig. 4 is a cross-sectional view schematically illustrating the constitution of a laminate according to this embodiment.

A laminate 1100 illustrated in Fig. 4 is provided with a first and second polarizing films (P1, P2), a liquid crystal cell L arranged between the polarizing film P1 and the polarizing film P2, and a plurality of retardation films arranged between the polarizing film P1 and the polarizing film P2 which contain at least two pieces of the retardation films A (A1, A2) and at least one piece of the retardation film C. Incidentally, in this embodiment and the following embodiments, with respect to the arrangement of two pieces of polarizing films, for example, the polarizing film P1 is taken as a backlight side polarizing film, while the polarizing film P2 is taken as a panel light emitting side polarizing film.

Incidentally, in this embodiment, a case in which two pieces of retardation films A and one piece of the retardation film C are provided will be exemplified, but the laminate in this embodiment and the following embodiments may contain three or more pieces of the retardation films A and the retardation films C in total.

Furthermore, the retardation film A1 and the retardation film A2 may be composed of the same or different materials.

The liquid crystal cell L is constructed with a pair of substrates and a liquid crystal layer sandwiched between the substrates.

In the laminate 1100, at least one piece of the retardation film C is arranged adjacent to P1 or P2, and two pieces of the retardation films A and the liquid crystal cell L are arranged in the order of A, L and A.

Incidentally, "adjacent to" is not restricted to a case of actually physically adhered, but includes a case in which a layer practically free from the retardation may be intervened therebetween. Furthermore, "arranged in the order" is not restricted to a case in which A, L and A are actually physically adhered, but includes a case in which a layer practically free from the retardation may be intervened between A and L.

In an example of Fig. 4, the liquid crystal cell L, the retardation film C and two pieces of the retardation films A are arranged in the order of C, A, L and A, and more specifically arranged in the order of P1, C, A1, L, A2 and P2.

Next, the constitution of the retardation film A and the retardation film C will be described.

First, the retardation film A will be described.

(Retardation Film A)

The retardation film A1 and the retardation film A2 satisfy either of the following formulae (3-1) or (3-2),

$$nx > ny \geq nz \quad (3-1)$$

$$nz \geq nx > ny \quad (3-2)$$

wherein, in the above formulae (3-1) and (3-2), nx is the maximum in-plane refractive index of the retardation film; ny is the refractive index in the direction orthogonal to the direction in which the maximum in-plane refractive index of the retardation film occurs; and nz is the vertical refractive index of the retardation film.

Herein, when the retardation film A satisfies the above formula (3-1), the film A functions as a so-called +A film. When it satisfies the above formula (3-2), the film A functions as a so-called -A film.

Furthermore, the retardation film A may have a property (reverse wavelength dispersion) such that the retardation caused by birefringence is small as the wavelength is shorter in a specific wavelength range. Specifically, the in-plane retardation Re(450) at a wavelength of 450 nm of at least one piece of the above retardation film A, the in-plane retardation Re(550) at a wavelength of 550 nm and the in-plane retardation Re(650) at a wavelength of 650 nm are constructed to satisfy the relationships of,

$$Re(450)/Re(550) < 1 \quad (3-4),$$

and

$$Re(650)/Re(550) > 1 \quad (3-5)$$

Incidentally, in the third invention, the in-plane retardation Re and the retardation K in the thickness direction to be described below are respectively calculated according to the following formula. In the following formula, nx is the maximum in-plane refractive index of the retardation film, ny is the refractive index in the direction orthogonal to the direction in which the maximum in-plane refractive index of the retardation film occurs, and nz is the vertical refractive index of the retardation film. Further, d is a thickness of the retardation film,

$$Re = S(nx-ny) \times d$$

$$K = \{nz-(nx+ny)/2\} \times d$$

Herein, S is a sign for discriminating between positive and negative birefringences. In case of -A, -(minus) is adopted, while in case of +A, +(plus) is adopted.

Hereinafter, concrete examples of the material of the retardation film A will be described.

The material of the retardation film A is not particularly limited as long as it exhibits the above properties, but examples thereof include a (co) polymer ($\alpha$) obtained from at least one olefin selected among 4-methyl-1-pentene, 3-methyl-1-pentene and 3-methyl-1-butene as a (co)monomer ingredient. The entire retardation film A may be constructed with the (co)polymer ($\alpha$) or a part of the retardation film A may be constructed with the above (co)polymer ($\alpha$). Furthermore, the content of the (co)polymer ($\alpha$) in the retardation film A is, for example, from not less than 20 and not more than 100 % by weight and preferably from not less than 50 and not more than 100 % by weight.

As the material of the retardation film A, further preferably, there can be exemplified a homopolymer of 3-methyl-1-butene, 3-methyl-1-pentene or 4-methyl-1-pentene or a copolymer thereof, and other copolymerizable monomers, for example, a copolymer with styrene, acrylonitrile, vinyl chloride, vinyl acetate, acrylate ester, methacrylate ester or the like, a blend of the above components or other thermoplastic resins or synthetic rubbers, a block copolymer, a graft copolymer and the like. Of structural units of the (co)polymer ($\alpha$), the structural unit derived from 4-methyl-1-pentene, 3-methyl-1-pentene or 3-methyl-1-butene is usually from not less than 20 and not more than 100 % by mole, preferably from not less than 50 and not more than 100 % by mole and further preferably from not less than 80 and not more than 100 % by mole in total from the viewpoint of further improvement of a balance of various characteristics such as transparency, heat resistance or the like of the resin.

Among (co)polymers ($\alpha$), the 4-methyl-1-pentene (co)polymer is preferred because it is excellent in transparency, peeling property or the like and is suitably used in combination with the optical element. Further, the 3-methyl-1-pentene (co)polymer and the 3-methyl-1-butene (co)polymer are excellent in heat resistance, and are preferable from the viewpoints of the degree of freedom of the process, the degree of freedom of use condition and the like. Respective components will be described in detail below.

(4-methyl-1-pentene (co)polymer)

The 4-methyl-1-pentene (co)polymer is specifically a homopolymer of 4-methyl-1-pentene or a copolymer of 4-methyl-1-pentene with ethylene or other $\alpha$-olefin having not less than 3 and not more than 20 carbon atoms, for example, propylene, 1-butene, 1-hexene, 1-octene, 1-decene, 1-tetradecene, 1-octadecene or the like. The 4-methyl-1-pentene (co)polymer which is preferably used in the third invention usually contains the structural unit derived from 4-methyl-1-pentene in an amount of not less than 85 % by mole and preferably not less than 90 % by mole. The constituent component which is not derived from 4-methyl-1-pentene constituting the 4-methyl-1-pentene (co)polymer is not particularly limited, and various monomers capable of performing copolymerization with 4-methyl-1-pentene can be suitably used, but ethylene or $\alpha$-olefin having not less than 3 and not more than 20 carbon atoms can be preferably used from the viewpoints of the easiness of acquisition, copolymerization characteristics and the like. Among these, preferably used is $\alpha$-olefin having not less than 7 and not more than 20 carbon atoms, while particularly preferably used are 1-decene, 1-dodecene, 1-tetradecene, 1-hexadecene and 1-octadecene.

The melt flow rate (MFR) of the 4-methyl-1-pentene (co)polymer measured in accordance with ASTM D1238 under conditions of a load of 5 kg and a temperature of 260 degrees centigrade is decided in many ways depending on the use, but it is usually in the range of not less than 1 and not more than 50 g/10 min., preferably in the range of not less than 2 and not more than 40 g/10 min. and further preferably in the range of not less than 5 and not more than 30 g/10 min. When the melt flow rate of the 4-methyl-1-pentene (co)polymer is within the above range, the film formability and the appearance of the obtained resin are good. Furthermore, it is preferable that the melting point is in the range of not less than 100 and not more than 240 degrees centigrade and preferably in the range of not less than 150 and not more than 240 degrees centigrade.

Such a 4-methyl-1-pentene (co)polymer can be prepared by a conventionally known method. For example, as described in Japanese Patent Laid-open No. 1984-206418, it can be obtained by polymerizing 4-methyl-1-pentene with the above ethylene or $\alpha$-olefin in the presence of a catalyst.

(3-methyl-1-pentene (co)polymer)

The preferable kind of the comonomer, the content of comonomer, MFR, the melting point and the like of the 3-methyl-1-pentene (co)polymer are the same as those of the above 4-methyl-1-pentene (co)polymer. The 3-methyl-1-pentene (co)polymer which is preferably used in the third invention can be properly prepared according to a conventionally known method. For example, the (co)polymer can be prepared according to the method as described in Japanese Patent Laid-open No. 1994-145248.

(3-methyl-1-butene (co)polymer)

The preferable kind of the comonomer, the content of comonomer, MFR, the melting point and the like of the 3-methyl-1-butene (co)polymer are the same as those of the above 4-methyl-1-pentene (co)polymer. The 3-methyl-1-butene (co)polymer which is preferably used in the third invention can be properly prepared according to a conventionally known method. For example, it can be prepared according to the method as described in Japanese Patent Laid-open No. 1994-145248.

(Components constituting film (a) other than (co)polymer ($\alpha$))

The film (a) may contain various components other than the aforementioned copolymer ($\alpha$). The components other than the copolymer ($\alpha$) may be various resins or various rubbers other than the (co)polymer ($\alpha$). As various resins, particularly preferably used is a resin excellent in transparency, and there can be used, for example, various polyolefins such as a cyclic olefin (co)polymer and the like; polycarbonate, polystyrene, a cellulose acetate resin, a fluorinated resin, polyester, an acrylic resin and the like. As various rubbers, olefin based rubber, styrene based rubber and the like can be used. Further, to the film (a) used in the third invention, there can be added various compounding ingredients to be used by adding usual polyolefin such as an anti-static agent, an anti-oxidant, a heat stabilizer, a release agent, a weathering stabilizer, a rust prevention agent, a slipping agent, a nucleating agent, a pigment, a dye, an inorganic filler (silica or the like) and the like; or other special compounding ingredients, in the ranges in which the object of the third invention is not damaged.

(Method for preparing retardation film A)

The retardation film A can be suitably prepared according to a conventionally known method. For example, the film can be formed by a known method involving mixing the (co)polymer ($\alpha$) and components other than the (co)polymer ($\alpha$) using a V-blender, a ribbon blender, a Henschel mixer or a tumbler blender, a method involving mixing using the above blender, and then melt-kneading using a single screw extruder, a multi-screw extruder, a kneader, a banbury mixer or the like for granulating or pulverizing, and subsequently press molding, extrusion molding, inflation molding or the like, a solution casting method or the like. To produce the film with good efficiency, preferably used are a solution casting method, an inflation molding method, an extrusion molding method and the like.

Furthermore, by stretching the obtained film, physical properties such as birefringence, its angle dependence, its temperature dependence or the like can be optically adjusted to a desired value, and a film further provided with mechanical strength can also be made. A stretching ratio may be properly selected according to desired optical properties, but it is usually from not less than 1.5 and not more than 10 times and preferably from not less than 2 and not more than 5 times.

The thickness of the retardation film A is not particularly limited, but it is usually from not less than 10 and not more than 200 $\mu$m and preferably from not less than 20 and not more than 100 $\mu$m. When the thickness is within such a range, the productivity of the film can be further improved. Furthermore, generation of pinholes or the like can be suppressed at the time of molding the film and the intensity can be improved.

Meanwhile, as the material of the retardation film A, in addition, APEL (registered trademark), ZEONOR (registered trademark) and the like can be cited.

In this embodiment, further specifically, it is preferable that the retardation film A has a layer containing the 4-methyl-1-pentene (co) polymer. In this way, for example, the heat resistance of the retardation film A can be enhanced, the production cost can be decreased, and further the environmental load can be reduced.

Next, the retardation film C will be explained.

(Retardation film C)

The retardation film C satisfy the following formula (3-3),

$$nx \geq ny > nz \quad (3-3)$$

wherein, in the above formula (3-3), nx is the maximum in-plane refractive index of the retardation film; ny is the refractive index in the direction orthogonal to the direction in which the maximum in-plane refractive index of the retardation film occurs; and nz is the vertical refractive index of the retardation film.

Furthermore, in this embodiment, for example, the retardation K(450) and K(550) in the thickness direction at wavelengths of 450 nm and 550 nm of at least one piece of the retardation film C are constructed to satisfy the following formula (3-6),

$$K(450)/K(550) \geq 1 \quad (3-6)$$

The retardation film C has, as illustrated in the aforementioned formula (3-3), the retardation only in the thickness direction and functions as a so-called minus C plate for effectively compensating the viewing angle of the liquid crystal. Furthermore, in this embodiment, the retardation film C satisfies the above formula (3-6) and exhibits a property of having usual wavelength dispersion, that is, large retardation caused by birefringence as the wavelength is shorter.

Furthermore, in the retardation film C, the retardations K(450), K(550) and K(650) in the thickness direction at wavelengths of 450 nm, 550 nm and 650 nm may be constructed to satisfy the following formula (3-7) in addition to the above formula (3-6). In this way, the film can be constructed to exhibit usual wavelength dispersion in a wider wavelength region, so it can be stably compensated in a wider wavelength region,

$$K(650)/K(550) \leq 1 \quad (3-7)$$

Hereinafter, concrete examples of the material of the retardation film C will be described.
The material of the retardation film C is not particularly limited as long as it exhibits the above properties, but the material, for example, as described in International Publication Pamphlet No. 06/033414 can be used.
Further specifically, as the material of the retardation film C, an alicyclic structure-containing polymer can be cited. The entire retardation film C may be constructed with the alicyclic structure-containing polymer or a part of the film may be constructed with the alicyclic structure-containing polymer.

The alicyclic structure-containing polymer has an alicyclic structure in the repeating units of the polymer, and may have an alicyclic structure in either of its main chain or side chain. As the alicyclic structure, a cycloalkane structure, a cycloalkene structure and the like can be cited, but preferably used is a cycloalkane structure from the viewpoint of thermal stability or the like. The number of carbon atoms constituting the alicyclic structure is not particularly limited. However, when it is usually in the range of not less than 4 and not more than 30, preferably in the range of not less than 5 and not more than 20 and more preferably in the range of not less than 5 and not more than 15, a film further excellent in the heat resistance and flexibility is obtained. The proportion of the repeating units having an alicyclic structure in the alicyclic structure-containing polymer may be suitably selected depending on the purpose of use, but it is usually not less than 20 % by weight, preferably not less than 40 % by weight and more preferably not less than 60 % by weight. When the proportion of the repeating units having an alicyclic structure in the alicyclic structure-containing polymer is excessively small, the heat resistance might be lowered. Incidentally, the residual part other than the repeating units having an alicyclic structure in the alicyclic structure-containing polymer is not particularly limited and is properly selected depending on the purpose of use.

Meanwhile, the content of the alicyclic structure-containing polymer is not particularly limited, but it is usually from not less than 5 and not more than 100 % by weight, preferably from not less than 60 and not more than 100 % by weight and further preferably from not less than 70 and not more than 100 % by weight from the viewpoint of optical homogeneity. Furthermore, components other than the resin are not particularly limited, but, for example, olefin based elastomer or styrene based elastomer can be added from the viewpoint of improvement of the impact resistance or the like. Further, as described below, various other additives may be used.

Concrete examples of the polymer resin containing an alicyclic structure include (a) a norbornene based polymer, (b) a monocyclic cyclic olefin based polymer, (c) a cyclic conjugated diene based polymer, (d) a vinyl alicyclic hydrocarbon polymer, a hydrogenated product thereof and the like. Among these, preferably used are a norbornene based polymer, a vinyl alicyclic hydrocarbon polymer, a hydride thereof and the like from the viewpoints of the dimensional stability, oxygen transmittance, moisture permeability, heat resistance, mechanical strength and the like.

(a) Norbornene based polymer

Examples of the norbornene based polymer include a ring-opening polymer of a norbornene based monomer, a ring-opening copolymer of a norbornene based monomer and other monomers capable of performing ring-opening copolymerization with the norbornene based monomer, and a hydrogenated product thereof; an addition polymer of a norbornene based monomer, and an addition copolymer of a norbornene based monomer with other monomers capable of performing copolymerization with the norbornene based monomer.

In the hydrogenated product of a ring-opening polymer of a norbornene based monomer and hydrogenated product of a ring-opening copolymer of a norbornene based monomer and other monomers capable of performing ring-opening copolymerization with the norbornene based monomer, when its hydrogenation ratio is not less than 99%, hydrogenated products are excellent in transparency (particularly, initial change of yellowness index is low), stability (particularly, change of yellowness hardly occurs over a long period of time) and the like, and can suppress occurrence of gelation in many cases; therefore, such a ratio is preferable.

Among these, an addition copolymer of a norbornene based monomer with other monomers capable of performing copolymerization with the norbornene based monomer is the most preferable from the viewpoint that a desired retardation is easily achieved.

Examples of the norbornene based monomer include, though not restricted to, bicyclo[2.2.1]-hept-2-ene (customary name: norbornene), 5-methyl-bicyclo[2.2.1]-hept-2-ene, 5,5-dimethyl-bicyclo[2.2.1]-hept-2-ene, 5-ethyl-bicyclo[2.2.1]-hept-2-ene, 5-butyl-bicyclo[2.2.1]-hept-2-ene, 5-hexyl-bicyclo[2.2.1]-hept-2-ene, 5-octyl-bicyclo[2.2.1]-hept-2-ene, 5-octadecyl-bicyclo[2.2.1]-hept-2-ene, 5-ethylidene-bicyclo[2.2.1]-hept-2-ene, 5-methylidene-bicyclo[2.2.1]-hept-2-ene, 5-vinyl-bicyclo[2.2.1]-hept-2-ene, 5-propenyl-bicyclo[2.2.1]-hept-2-ene, 5-methoxy-carbonyl-bicyclo[2.2.1]-hept-2-ene, 5-cyano-bicyclo[2.2.1]-hept-2-ene, 5-methyl-5-methoxycarbonyl-bicyclo[2.2.1]-hept-2-ene, 5-methoxycarbonyl-bicyclo[2.2.1]-hept-2-ene, 5-ethoxycarbonyl-bicyclo[2.2.1]-hept-2-ene, 5-methyl-5-ethoxycarbonyl-bicyclo[2.2.1]-hept-2-ene, bicyclo[2.2.1]-hept-5-enyl-2-methylpropionate, bicyclo[2.2.1]-hept-5-enyl-2-methyloctanate, bicyclo[2.2.1]-hept-2-ene-5,6-dicarboxylic anhydride, 5-hydroxymethyl-bicyclo[2.2.1]-hept-2-ene, 5,6-di(hydroxymethyl)-bicyclo[2.2.1]-hept-2-ene, 5-hydroxy-i-propyl-bicyclo[2.2.1]-hept-2-ene, bicyclo[2.2.1]-hept-2-ene, 5,6-dicarboxy-bicyclo[2.2.1]-hept-2-ene, bicyclo[2.2.1]-hept-2-ene-5,6-dicarboxylic acid imide, 5-cyclopentyl-bicyclo[2.2.1]-hept-2-ene, 5-cyclohexyl-bicyclo[2.2.1]-hept-2-ene, 5-cyclohexenyl-bicyclo[2.2.1]-hept-2-ene, 5-phenyl-bicyclo[2.2.1]-hept-2-ene, tricyclo[4.3.1$^{2,5}$.0$^{1,6}$]-deca-3,7-diene (customary name: dicyclopentadiene), tricyclo[4.3.1$^{2,5}$.0$^{1,6}$]-deca-3-ene, tricyclo[4.4.1$^{2,5}$.0$^{1,6}$]-undeca-3,7-diene, tricyclo[4.4.1$^{2,5}$.0$^{1,6}$]-undeca-3.8-diene, tricyclo[4.4.1$^{2,5}$.0$^{1,6}$]-undeca-3-ene, tetracyclo[7.4.1$^{10,13}$.0$^{1,9}$.0$^{2,7}$-trideca-2,4,6-11-tetraene (also referred to as 1,4-methano-1,4,4a,9a-tetrahydrofluorene, customary name: methanotetrahydrofluorene), tetracyclo[8,4,1$^{11,14}$,0$^{1,10}$,0$^{3,8}$]-tetradeca-3,5,7,12-11-tetraene (also referred to as 1,4-methano-1,4,4a,5,10,10a-hexahydroanthracene), tetracyclo[4.4.1$^{2,5}$.1$^{7,10}$.0]-dodeca-3-ene (also referred to as tetracyclododecene), 8-methyl-tetracyclo[4.4.1$^{2,5}$.1$^{7,10}$.0]-dodeca-3-ene, 8-ethyl-tetracyclo[4.4.1$^{2,5}$.1$^{7,10}$.0]-dodeca-3-ene, 8-methylidene-tetracyclo[4.4.1$^{2,5}$.1$^{7,10}$.0]-dodeca-3-ene, 8-ethylidene-tetracyclo[4.4.1$^{2,5}$.1$^{7,10}$.0]-dodeca-3-ene, 8-vinyl-tetracyclo[4.4.1$^{2,5}$.1$^{7,10}$.0]-dodeca-3-ene, 8-propenyl-tetracyclo[4.4.1$^{2,5}$.1$^{7,10}$.0]-dodeca-3-ene, 8-methoxycarbonyl-tetracyclo[4.4.1$^{2,5}$.1$^{7,10}$.0]-dodeca-3-ene, 8-methyl-8-methoxycarbonyl-tetracyclo[4.4.1$^{2,5}$.1$^{7,10}$.0]-dodeca-3-ene, 8-hydroxymethyl-tetracyclo[4.4.1$^{2,5}$.1$^{7,10}$.0]-dodeca-3-ene, 8-carboxy-tetracyclo[4.4.1$^{2,5}$.1$^{7,10}$.0]-dodeca-3-ene, 8-cyclopentyl-tetracyclo[4.4.1$^{2,5}$.1$^{7,10}$.0]-dodeca-3-ene, 8-cyclohexyl-tetracyclo[4.4.1$^{2,5}$.1$^{7,10}$.0]-dodeca-3-ene, 8-cyclohexenyl-tetracyclo[4.4.1$^{2,5}$.1$^{7,10}$.0]-dodeca-3-ene, 8-phenyl-tetracyclo[4.4.1$^{2,5}$.1$^{7,10}$.0]-dodeca-3-ene, pentacyclo[6.5.1$^{1,8}$.1$^{1,8}$.0$^{2,7}$.0$^{9,13}$]-pentadeca-3,10-diene, pentacyclo[7.4.1$^{3,6}$.1$^{10,13}$.0$^{1,9}$.0$^{2,7}$]-pentadeca-4, 11-diene and the like. These norbornene based monomers are used singly or in combination of two or more kinds.

The ring-opening polymer of a norbornene based monomer or the ring-opening copolymer of a norbornene based monomer and other monomers capable of performing ring-opening copolymerization with the norbornene based monomer can be obtained by polymerizing the monomer component(s) in the presence of a ring-opening polymerization catalyst. As the ring-opening polymerization catalyst, there can be used, for example, a catalyst composed of a halide, nitrate or acetylacetone compound of a metal such as ruthenium, rhodium, palladium, osmium, iridium, platinum and the like, and a reducing agent, or a catalyst composed of a halide or acetylacetone compound of a metal such as titanium, vanadium, zirconium, tungsten, molybdenum and the like, and an organic aluminum compound. The polymerization reaction is usually carried out at a polymerization temperature of from about -50 to 100 degrees centigrade under polymerization pressure of from 0 to 50 kg/cm$^2$ in a solvent or without using any solvent. Examples of other monomers capable of performing ring-opening copolymerization with a norbornene based monomer include, though not restricted to, a monocyclic cyclic olefin based monomer such as cyclohexene, cycloheptene, cyclooctene and the like.

The hydrogenated product of a ring-opening polymer of a norbornene based monomer can be usually obtained by adding a hydrogenation catalyst to a polymerization solution of the above ring-opening polymer for adding hydrogen to carbon-carbon unsaturated bonds. The hydrogenation catalyst is not particularly limited, but heterogeneous catalysts or homogeneous catalysts are usually used.

The norbornene based monomer or the addition (co)polymer of a norbornene based monomer and other monomers capable of performing copolymerization with the norbornene based monomer can be generally obtained, for example, by (co)polymerizing the monomer component(s) at a polymerization temperature of from about -50 to 100 degrees centigrade under polymerization pressure of from 0 to 50 kg/cm$^2$ in a solvent or without using any solvent in the presence of a catalyst composed of a titanium, zirconium or vanadium compound and an organic aluminum compound.

Examples of other monomers capable of performing copolymerization with a norbornene based monomer include, though not restricted to, α-olefins having not less than 2 and not more than 20 carbon atoms such as ethylene, propylene, 1-butene, 1-pentene, 1-hexene, 3-methyl-1-butene, 3-methyl-1-pentene, 3-ethyl-1-pentene, 4-methyl-1-pentene, 4-methyl-1-hexene, 4,4-dimethyl-1-hexene, 4,4-dimethyl-1-pentene, 4-ethyl-1-hexene, 3-ethyl-1-hexene, 1-octene, 1-decene, 1-dodecene, 1-tetradecene, 1-hexadecene, 1-octadecene, 1-eicocene and the like; cyclo olefins such as cyclobutene, cyclopentene, cyclohexene, 3,4-dimethylcyclopentene, 3-methylcyclohexene, 2-(2-methylbutyl)-1-cyclohexene, cyclooctene, 3a,5,6,7a-tetrahydro-4,7-methano-1H-indene and the like; and non-conjugated dienes such as 1,4-hexadiene, 4-methyl-1,4-hexadiene, 5-methyl-1,4-hexadiene, 1,7-octadiene and the like. Among these, α-olefins, particularly ethylene, are preferred.

Other monomers capable of performing copolymerization with a norbornene based monomer can be used singly or in combination of two or more kinds. When the norbornene based monomer and other monomers capable of performing copolymerization with the norbornene based monomer are subjected to an addition copolymerization, the proportion of the structural unit derived from the norbornene based monomer in the addition copolymer to the structural unit derived from other monomers capable of performing copolymerization is properly selected such that the weight ratio is usually in the range of 30:70 to 99:1, preferably in the range of 50: 50 to 97:3 and more preferably in the range of 70: 30 to 95:5.

(b) Monocyclic cyclic olefin based polymer

As the monocyclic cyclic olefin based polymer, there can be used, for example, an addition polymer of a monocyclic cyclic olefin based monomer such as cyclohexene, cycloheptene, cyclooctane and the like. However, the monocyclic cyclic olefin based polymer is not restricted thereto.

(c) Cyclic conjugated diene based polymer As the cyclic conjugated diene based polymer, there can be used, for example, a polymer obtained by subjecting a cyclic conjugated diene based monomer such as cyclopentadiene, cyclohexadiene or the like to 1,2- or 1,4-addition polymerization, and hydrogenated products thereof. However, the cyclic conjugated diene based polymer is not restricted thereto.

The molecular weight of the norbornene based polymer, the monocyclic cyclic olefin based polymer or the cyclic conjugated diene based polymer which is used as the retardation film C is properly selected depending on the purpose of use. However, when the weight average molecular weight Mw in terms of polyisoprene or polystyrene as measured in the form of a cyclohexane solution (a toluene solution in case the polymer resin is not dissolved) by the gel permeation chromatography is usually in the range of not less than 5,000 and not more than 1,000,000, preferably in the range of not less than 8,000 and not more than 800,000 and more preferably in the range of not less than 10,000 and not more than 500,000, the mechanical strength and molding processability of a molded product are highly balanced. Such polymers are suitable in many cases.

(d) Vinyl alicyclic hydrocarbon polymer

As the vinyl alicyclic hydrocarbon polymer, there can be used, for example, a polymer of a vinyl alicyclic hydrocarbon based monomer such as vinylcyclohexene, vinylcyclohexane or the like and hydrogenated products thereof, or hydrogenated products thereof of an aromatic ring part of a polymer of a vinyl aromatic based monomer such as styrene, α-methylstyrene or the like. In this case, it may be any of copolymers, such as a random copolymer and a block copolymer, of a vinyl alicyclic hydrocarbon polymer or a vinyl aromatic based monomer with other monomers capable of performing copolymerization with these monomers and hydrogenated products thereof. The block copolymer is not particularly limited, and examples thereof include a diblock copolymer, a triblock copolymer, a multiblock copolymer, a tapered block copolymer and the like.

The molecular weight of the vinyl alicyclic hydrocarbon polymer which is used as the retardation film C is properly selected depending on the purpose of use. However, when the weight average molecular weight Mw in terms of polyisoprene or polystyrene as measured in the form of a cyclohexane solution (a toluene solution in case the polymer resin is not dissolved) by the gel permeation chromatography is usually in the range of not less than 10,000 and not more than 800,000, preferably in the range of not less than 15,000 and not more than 500,000 and more preferably in the range of not less than 20,000 and not more than 300,000, the mechanical strength and molding processability of a molded product are highly balanced. Such polymers are suitable in many cases.

Various additives may be combined with the retardation film C as needed. Examples of such additives include various resins with a water absorption percentage of more than 0.1% such as various cellulose resins including triacetylcellulose or stabilizers such as anti-oxidants, light stabilizers, ultraviolet absorbers or the like, anti-static agents and the like. However, such additives are not particularly limited as long as the object of the present third invention is not impaired.

Examples of the anti-oxidant include a phenol based anti-oxidant, a phosphorus based anti-oxidant, a sulfur based anti-oxidant and the like. Among these, a phenol based anti-oxidant, particularly an alkyl-substituted phenol based anti-oxidant, is preferred. It is possible to prevent coloring or a decrease in strength due to oxidative degradation without reducing transparency, heat resistance or the like by combining these anti-oxidants.

Examples of the ultraviolet absorber include a benzophenone based ultraviolet absorber, a benzotriazole based ultraviolet absorber and the like. Among these, preferably used are 2-(2'-hydroxy-5'-methyl-phenyl)benzotriazole, 2-(2H-benzotriazole-2-yl)-4-methyl-6-(3,4,5,6-tetrahydrophthal imidylmethyl)phenol, 2-(2H-benzotriazole-2-yl)-4,6-bis(1-methyl-1-phenylethyl)pheno 1 and the like from the viewpoints of heat resistance, low volatility and the like.

Examples of the light stabilizer include a benzophenone based light stabilizer, a benzotriazole based light stabilizer, a hindered amine based light stabilizer and the like. However, in the third invention, hindered amine based light stabilizers are preferably used from the viewpoints of transparency, coloring resistance and the like.

These anti-oxidants, ultraviolet absorbers, light stabilizers and the like can be used singly or in combination of 2 or more kinds. The combination amount thereof is suitably selected in the ranges in which the function as the retardation film C is not damaged.

Furthermore, the retardation film C obtained as described above is heated at a temperature of lower than the glass transition temperature Tg of the film, for example, at not less than 10 and not more than 30 degrees centigrade, preferably at a lower temperature of not less than 10 and not more than 20 degrees centigrade than Tg, under a reduced pressure, for example, not more than 1 Pa or in an inert gas atmosphere, for example, a nitrogen atmosphere, whereby the retardation is stabilized. So, a film which is suitable for stably compensating a viewing angle of a display element for a long period of time is obtained.

Meanwhile, as the material of the retardation film C, in addition, polycarbonate, cycloolefin polymer and the like can be cited.

Hereinafter, the effect of action of this embodiment will be explained.

In this embodiment, as the retardation film arranged between a polarizing film P1 and a polarizing film P2, three or more pieces of the aforementioned retardation films A and retardation films C in total are used. The retardation film C is arranged adjacent to P1 or P2, and two pieces of the retardation films A and the liquid crystal cell L are arranged in the order of A, L and A. Accordingly, as the retardation film A or the retardation film C, even when a film having a relatively small retardation is used, the light leakage in the dark state can be reduced to obtain a high contrast. Furthermore, leak light in the oblique viewing angle can be reduced to secure a wide viewing angle.

Herein, in the conventional optical compensation method including a constitution in International Publication Pamphlet No. 03/032060, since the retardation required for one piece of the retardation film A was large, there have been some restrictions on the material used for the retardation film A, while there have been restrictions on the thickness of the entire laminate, it was not possible to use a plurality of retardation films A in the laminate.

For example, when a (co)polymer containing poly (4-methylpentene-1) is used as the material of the retardation film A1 or the retardation film A2, and if attempted to have excellent characteristics as the retardation film A such that photoelasticity is small, the reverse wavelength dispersion property (birefringence is small as the wavelength is shorter) is exhibited, heat resistance is high, the cost is relatively low, environmental load is also small and the like, and on the other hand, to obtain a relatively large retardation exceeding, for example, 90 nm, the thickness of the film is increased, for example, to about 150 μm or more in some cases. When such a material for the arrangement in the aforementioned International Publication Pamphlet No. 03/032060 of the Background Art is used, an increase in the thickness of the entire laminate is resulted.

In response to this, in this embodiment, a plurality of the retardation films A are used. As a result of the review by the present investors of the third invention, it was found that the retardation film is arranged at both sides of the liquid crystal cell L, and at the same time two pieces of the retardation films A are used and arranged in the order of C, A, L and A, whereby the symmetry property to the azimuth angle can be effectively improved. According to this arrangement, good symmetry property can be secured to widen the viewing angle of the laminate. Incidentally, the arrangement of C, A, L and A is not restricted to a case in which C, A, L and A are actually physically adhered, but includes a case in which a layer substantially free from the retardation may be intervened between C-A, A-L or L-A.

However, in the arrangement of A, C, L and A, the same retardation film A needs to have the relatively larger retardation, for example, of about 90 nm.

The inventors of the third invention have further conducted a study and as a result, the retardation film C is arranged adjacent to P1 or P2, and two pieces of the retardation films A and the liquid crystal cell L are arranged in the order of A, L and A, whereby compensation can be achieved even when the retardation of one piece of the retardation film A is relatively small. By this arrangement, good symmetry property can be achieved and viewing angle can be widened, which could not be achieved according to International Publication Pamphlet No. 03/032060.

Hereinafter, the retardation film C is arranged adjacent to the polarizing film P1 or P2, and two pieces of the retardation films A and the liquid crystal cell L are arranged in the order of A, L and A, whereby a high contrast and a wide viewing angle are obtained even when the retardation of the retardation film A is small. The reason is explained using the change in the polarizing state on the Poincaré sphere with reference to a case in which the retardation film -A is used.

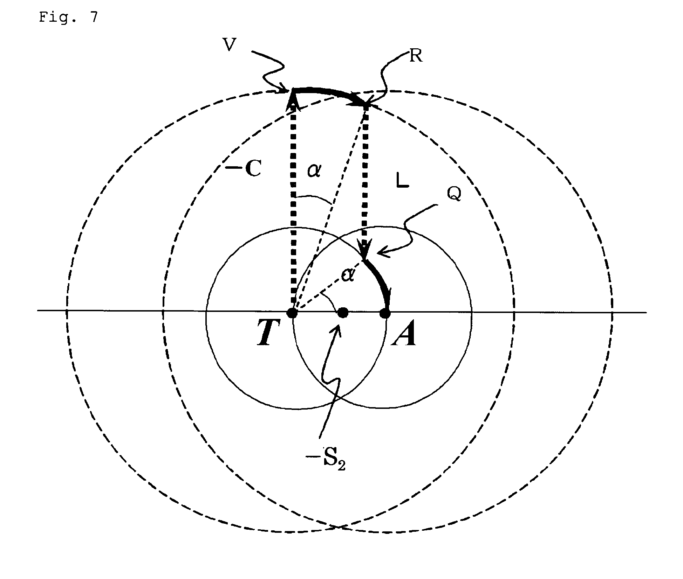

Fig. 7 is a projected view of Stokes vectors representing the polarizing state onto the equatorial plane.

In Fig. 7, the polarizing state is represented by T on the Poincaré sphere equator when light passes through the first polarizing film P1. The light moves to the point V on the arctic side by passing through the retardation film -C, and further moves to the point R by rotating the light clockwise around T as a rotating center just as much as the rotating angle $\alpha$ by the first retardation film -A (A1). Next, the light goes down south to the point Q by the liquid crystal cell L (+C retardation). Furthermore, the light is rotated just as much as the rotating angle $\alpha$ by the second retardation film -A (A2) to be aligned with the point A.

In this way, since the distance becomes great even when the rotation angle (retardation) is small by rotating when the rotating radius of the point V is large, it is also possible to move the final polarizing state from the point T to the point A at the retardation film A having a small retardation. Since the point A is the absorption axis of the light emitting side polarizing film, all light is completely absorbed and leak light in the oblique viewing angle can also be reduced.

Incidentally, improvement of the contrast and the viewing angle because of the constitution of this embodiment will be illustrated in further detail in Examples to be described below.

In this embodiment, like the (co)polymer of poly(4-methylpentene-1), a sufficiently high contrast and a wide viewing angle are obtained even when the retardation is relatively small, for example, from about 30 to 50 nm. The retardation in case a thickness of from about 50 to 80 μm is suitable for a case in which the laminate is used for the liquid crystal panel of the liquid crystal display element. Accordingly, the constitution is suitable for the use of such a material, and is capable of achieving both an entire thin device and improvement in the device characteristics.

Furthermore, in this embodiment, at least one piece of the retardation film A1 and the retardation film A2 is constituted to exhibit the reverse wavelength dispersion, whereby a color shift can be further reduced. Specifically, at least one piece of the retardation film A1 and the retardation film A2 is constituted to satisfy the above formulae (3-4) and (3-5), whereby viewing angle characteristics can be improved in a much wider wavelength range.

Hereinafter, this point will be described.

In general, a retardation film having a retardation of about 140 nm is widely used. Examples thereof include a polycarbonate retardation film, a cycloolefin based retardation film and the like.

However, this film has so-called positive wavelength dispersion property such that the retardation is increased as the wavelength is shorter. The function exhibiting the retardation can be represented by the aforementioned formula,

$$\text{Rotation angle } \Gamma = (2\pi/\lambda)\text{Re}$$

According to the above formula, when Re has a constant value or the positive wavelength dispersion regardless of the wavelength, the rotation angle $\Gamma$ is increased by the wavelength.

Accordingly, viewing angle characteristics are only improved at a certain specific wavelength. That is, when a liquid crystal element displaying black is viewed from an oblique direction, the transmittance at a specific wavelength is reduced so that the viewing angle is widened. However, since the transmittance other than the specific wavelength is increased and light is leaked, there has been room for improvement from the fact that black is colored and viewed as such.

In order to solve this problem, it is preferable to use a retardation film having so-called reverse wavelength dispersion characteristics such that the retardation becomes small as the wavelength is shorter. As the film having this reverse wavelength dispersion property, there has been known a retardation film using the aforementioned polycarbonate or the like.

In these materials, however, since the photo-elastic coefficient is large or the absolute value of the retardation is small, there have been restrictions on the range of applications when such materials have been put into practical use.

Furthermore, as the retardation film having a small photo-elastic coefficient, there has been known a cycloolefin based retardation film, but there has been room for improvement from the fact that reverse wavelength dispersion characteristics are not achieved.

In response to this, in this embodiment, reverse wavelength dispersion is achieved in a region of light strongly felt by eyes almost in a visible light region due to the constitution illustrating the above formulae (3-4) and (3-5), thus giving a retardation film useful almost in a whole region of the wavelength which is important for display.

Meanwhile, the change in the polarizing state almost in a whole region of the wavelength (for example, from 450 to 650 nm) which is important for display is almost constant. From the viewpoint of a much ideal constitution as a retardation film, the in-plane retardation Re(450) at a wavelength of 450 nm, the in-plane retardation Re(550) at a wavelength of 550 nm and the in-plane retardation Re(650) at a wavelength of 650 nm of the retardation film A may be constituted to satisfy the relationships of,

$$Re(450)/Re(550) < 0.82$$

and

$$Re(650)/Re(550) > 1.12$$

The in-plane retardation Re (450) at a wavelength of 450 nm, the in-plane retardation Re(550) at a wavelength of 550 nm and the in-plane retardation Re(650) at a wavelength of 650 nm of the retardation film A may be constituted to satisfy the relationship of,

$$0.70 \leq Re(450)/Re(550) < 0.90$$

In this way, the retardation film A can be constituted to exhibit excessive reverse wavelength dispersion in a short wavelength side. Accordingly, a color shift in a short wavelength side can be further effectively suppressed.

Furthermore, from the viewpoint of further effectively suppressing a color shift in a long wavelength side, it is preferable that the retardation film A is constituted to exhibit excessive reverse wavelength dispersion in a long wavelength side. Specifically, the retardation film A can be constituted to satisfy,

$$1.10 < Re(650)/Re(550) < 1.20$$

Meanwhile, in the laminate 1100, the absolute value of the in-plane retardation Re(550) at a wavelength of 550 nm of at least one piece of the retardation film A may be within a range of,

$$10 \ nm \leq |Re(550)| \leq 80 \ nm$$

In this case, there is no need to employ expensive fluorenyl group-containing polycarbonate or the like as the retardation film A, while the retardation film A can be constituted with poly-4-methylpentene-1 or its copolymer which is at relatively low cost, stable and easily handled.

Furthermore, in the laminate 1100, the absolute value of the in-plane retardation Re (550) at a wavelength of 550 nm of at least one piece of the retardation film A may be within a range of,

$$15 \ nm \leq |Re(550)| \leq 45 \ nm$$

The retardation film A is constituted with a material having a small retardation such as poly-4-methylpentene-1 or the like as long as such retardation is small and a stretching ratio of poly-4-methylpentene-1 can be further decreased. So, there is no need to stretch poly-4-methylpentene-1 with a technically high hurdle and at high magnifications. Accordingly, as the retardation film A, it is possible to employ a material making the production much easier, and the production efficiency of the whole laminate 1100 can be enhanced.

In the following embodiment, points different from the first embodiment will be mainly explained. Incidentally, unless otherwise particularly mentioned, preferred embodiments of the first embodiment can also be applied to the following embodiments as preferred embodiments.

(Second Embodiment)

This embodiment is a modified example of the laminate of the first embodiment.

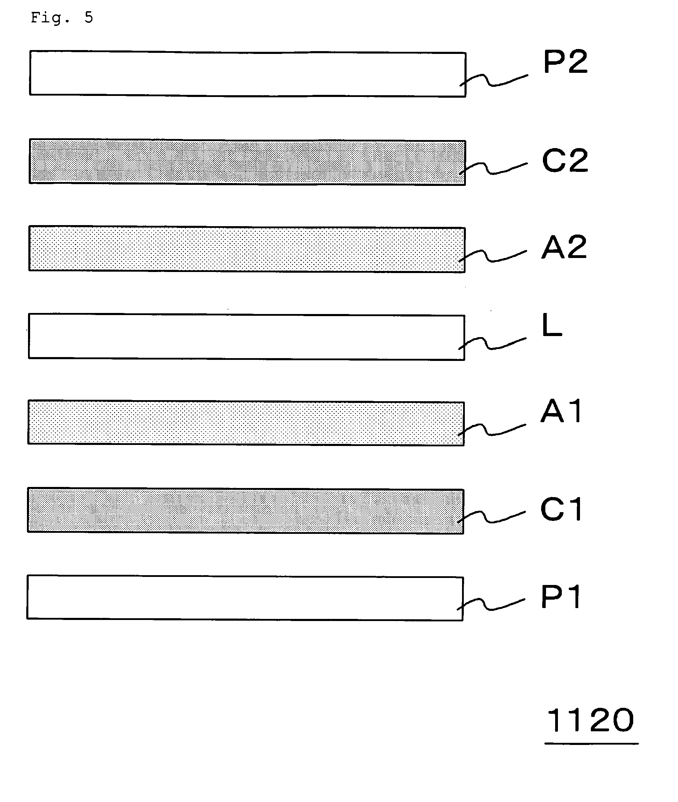

Fig. 5 is a cross-sectional view schematically illustrating the constitution of a laminate according to this embodiment. The basic constitution of the laminate 1120 illustrated in Fig. 5 is the same as the device (first embodiment) illustrated in Fig. 4, but in the laminate 1120, a retardation film contains two pieces of the retardation films C (C1, C2), and the liquid crystal cell L, two pieces of the retardation films C and two pieces of the retardation films A (A1, A2) are arranged in the order of C1, A1, L, A2 and C2. Incidentally, this arrangement is not restricted to a case in which C1, A1, L, A2 and C2 are actually physically adhered, but includes a case in which a layer substantially free from the retardation may be intervened between C1-A1, A1-L, L-A2 or A2-C2.

Also in this arrangement, the same effect of action as the first embodiment is obtained.

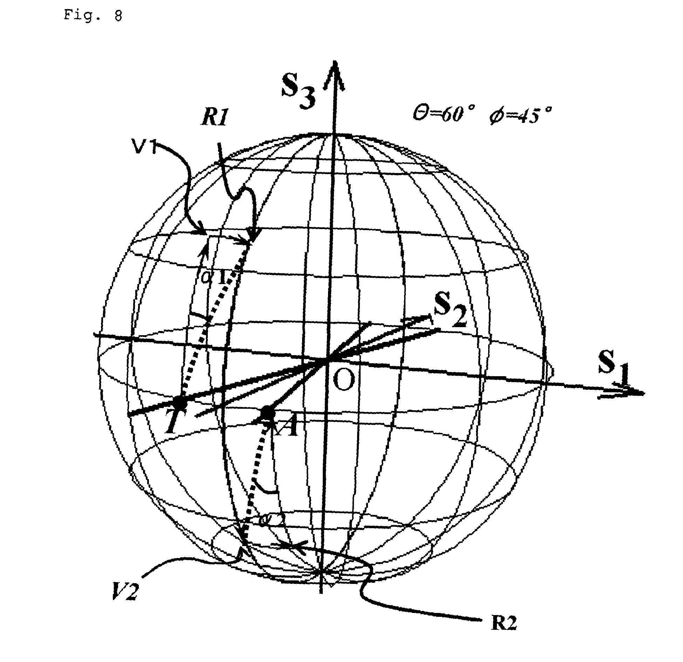

Furthermore, the change in the polarizing state at this time is explained with reference to Fig. 8.

The polarizing state is represented by T on the Poincaré sphere equator when light passes through the first polarizing film P1. By passing through the retardation film -C, light moves to the point V1 on the arctic side, and further moves to the point R1 by rotating the light clockwise around T as a rotating center just as much as the rotating angle $\alpha1$ by the first retardation film A (A1). Next, the light goes down south to the point V2 by the liquid crystal cell L (+C retardation). Furthermore, the light is rotated around OA as a rotating center just as much as the rotating angle $\alpha2$ by the second retardation film A (A2) to reach R2. Finally, the light can be aligned with the point A by the second retardation film C (C2). In this way, the movement of the polarizing state is symmetrical to each other sandwiching the equatorial plane, whereby it is enabled to further improve viewing angle characteristics.

Furthermore, in the laminate 1120, the retardation film is arranged in the order of the retardation film A and the retardation film C toward the polarizing film P from the liquid crystal cell L on both sides of the liquid crystal cell L. Thus, in addition to the laminate 1100 illustrated in Fig. 4, since any of rotating radius on the Poincaré sphere in the first and second retardation films A is further large, the retardation of the retardation film A necessary for compensation can be made smaller. Accordingly, the degree of freedom for the selection of the material of the retardation film A can be enhanced. Furthermore, since the thickness of the retardation film A can be further reduced, the thickness of the entire laminate can be reduced.

Meanwhile, since the locus moves with good symmetry property sandwiching an equator or with respect to a meridian passing through the center between the points A and T, excellent characteristics with low intensity of leak light even at a high viewing angle can be further expected.

Incidentally, in this embodiment, for example, of the retardation films, at least two pieces of the retardation films A may have negative birefringence. In this way, the intensity of leak light in the dark state can be greatly reduced.

Furthermore, in this embodiment, at least one piece of the retardation film A1 and the retardation film A2 is constructed to exhibit reverse wavelength dispersion, whereby a color shift can be further reduced in the same manner as in the first embodiment.

(Third Embodiment)

This embodiment relates to a liquid crystal display element equipped with the laminate as described in the above embodiment.

Hereinafter, a case using the laminate of the second embodiment is explained as an example.

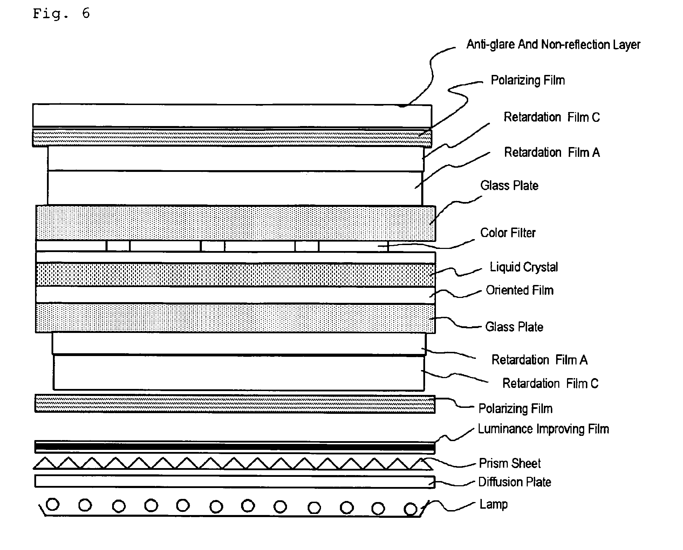

Fig. 6 is a view illustrating the constitution of a liquid crystal display element according to this embodiment. The liquid crystal display element illustrated in Fig. 6 is, for example, a transmittance liquid crystal display element, and provided with a laminate 1100, a backlight, a color filter, a voltage application means (not illustrated) and the like.

The liquid crystal display element illustrated in Fig. 6 is further specifically constructed such that a lamp, a diffusion plate, a prism sheet, a luminance improving film, a polarizing film, the retardation film C, the retardation film A, a glass plate, an oriented film, a liquid crystal, a color filter, a glass plate, a retardation film A, a retardation film C, a polarizing film and an anti-glare and non-reflection layer are laminated in this order from the bottom.

The liquid crystal cell L is, for example, a vertically aligned (VA) type liquid crystal cell. At this time, in the liquid crystal layer in the liquid crystal cell L, a long axis of the liquid crystal molecule is oriented practically in a direction perpendicular to a surface of the substrate of the liquid crystal cell L when a voltage is not applied. However, the liquid crystal cell L is not restricted to a VA-type liquid crystal cell, and it may be, for example, an iPS (In-Plane Switching) type liquid crystal cell and the like.

When the liquid crystal cell L is a VA-type liquid crystal cell, at least one piece of the retardation film -C must be used in order to compensate the retardation of the liquid crystal caused at an oblique viewing angle from the fact that the VA liquid crystal is equivalent to the retardation film +C. When the constitution of the laminate in the aforementioned embodiment is applied to the VA-type liquid crystal cell L, there is a merit that the function of this retardation film -C can be effectively used for labor saving.

The backlight is arranged facing the polarizing film P1 or the polarizing film P2 in the laminate 1100, and provided with a light source (a lamp) and a light-guiding plate (a diffusion plate or a prism sheet).

The color filter is arranged between the polarizing film P1 or the polarizing film P2 and the liquid crystal cell L.

The voltage application means applies voltage to electrodes formed on the substrate constituting the liquid crystal cell L in the laminate 1100.

Incidentally, in Fig. 6, the constitution of the laminate 1100 (second embodiment) illustrated in Fig. 5 is exemplified, but the liquid crystal display element according to this embodiment may be constructed to have the laminate (first embodiment) illustrated in Fig. 4. Furthermore, the liquid crystal display element may be any of a transmittance type, a reflection type or a semi-transmittance type.

Also, in this embodiment, at least one piece of the retardation films A is constructed to exhibit reverse wavelength dispersion, whereby a color shift can be further decreased in the same manner as in the first embodiment.

As described above, embodiments of the third invention were described with reference to the drawings, but they are examples of the third invention and various constitutions other than those described above can also be adopted.

(Fourth Invention)

The fourth invention relates to a laminate, a retardation film and a liquid crystal display element using the laminate and the film.

The liquid crystal display device is basically constructed to put the liquid crystal cell L between two pieces of polarizing plates P. However, the liquid crystal cell L has a birefringence of its own and its angle dependence so that the deterioration in the contrast, a decrease in the viewing angle and the like are caused for bringing the deterioration of the image quality of the liquid crystal display device. Therefore, the birefringence of the liquid crystal cell L has been compensated using various retardation films.

For example, the circularly polarized light component which cannot be filtered at a polarizing film is contained in the light passing through the liquid crystal cell, so the contrast of the display is worsened in some cases. Before the light passing through the liquid crystal cell is incident on the polarizing film, the light passes through the retardation plate, whereby such a circularly polarized light is compensated for improving the contrast of the liquid crystal display element, which has been widely carried out.

Hereinafter, the conventional optical compensation method will be described.

First, as a premise in the fourth invention, positive or negative birefringence is defined.

With respect to the retardation film A, when nx is the maximum in-plane refractive index of the retardation film; ny is the refractive index in the direction orthogonal to the direction in which the maximum in-plane refractive index of the retardation film occurs; and nz is the vertical refractive index of the retardation film, and if the retardation film A satisfies the following formula (4-1), the film A is defined to have a function as a so-called +A film having positive (+) birefringence. Furthermore, when the retardation film A satisfies the following formula (4-2), the film A is defined to have a function as a so-called -A film having negative (-) birefringence,

$$nx > ny \geq nz \quad (4-1)$$

$$nz \geq nx > ny \quad (4-2)$$

A refers to both +A and -A.

Meanwhile, with regard to the retardation film C, when the refractive index in the film thickness direction is greater than the in-plane refractive index, it is defined to have positive (+) birefringence, and when the refractive index in the film thickness direction is smaller than the in-plane refractive index, it is defined to have a negative (-) birefringence (respectively referred to as a retardation film +C and a retardation film -C). When the retardation film C functions as a +C film, it satisfies the following formula (4-8). Furthermore, when the retardation film C functions as a -C film, it satisfies the following formula (4-3),

$$nx \geq ny > nz \quad (4-3)$$

$$nz > nx \geq ny \quad (4-8)$$

C refers to both +C and -C.

On the above premise, as the conventional compensation method, when the liquid crystal cell L is a vertically aligned (VA) type liquid crystal cell, for example, the liquid crystal cell L is a +C type, the following three types have been known,

(i) cross A type compensation,
(ii) AC type compensation, and
(iii) ACA type compensation.

Of these, the retardation film +A having positive birefringence and the retardation film -A having negative birefringence are used for the above (i) cross A type compensation. Concrete examples of arrangement include -A+L-C+A and L-C-A+A. However, in these arrangements, L and -C are adjacent to each other regardless of its order. Furthermore, +A and -A may be arranged in any order.

Concrete examples of arrangement in the above (ii) AC type compensation include -A-C+L, L-C-A, L-C+A+C and L-C+A. However, in these arrangements, L and -C are adjacent to each other regardless of its order.

The (ii) AC type compensation has been described in International Publication Pamphlet No. 03/032060. The document relates to a technique relative to a liquid crystal display element equipped with a retardation film. In the document, there is described that the retardation film A and the retardation film C are used and are arranged in the order of A, C and L or the like.

Furthermore, in the above (iii) ACA type compensation, the liquid crystal cell L is arranged in the inner side of the retardation film A at both sides. Concrete examples of arrangement include +A+L-C+A, -A-C+L-A, A-C+L-C-A and +A-C+L-C+A. However, in these arrangements, L and -C are adjacent to each other regardless of its order.

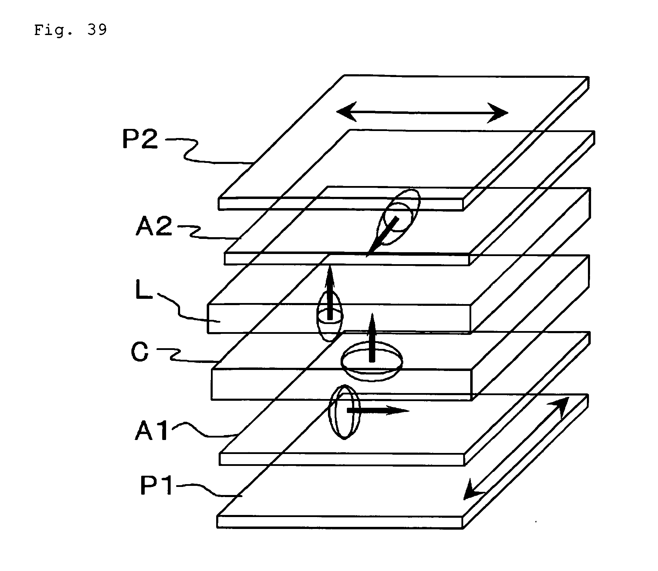

As one of examples, the compensation method of the above (i) will be hereinafter described in more detail with reference to Fig. 39.

In Fig. 39, the optical axis of the retardation film -A (a first retardation film) A1 having negative birefringence adjacent to a backlight side polarizer P1 is arranged to be orthogonal to the absorption axis (direction of an arrow in the figure) of the backlight side polarizer P1, and the retardation film -C and the liquid crystal cell L are further arranged adjacent to each other in this order. Furthermore, the retardation film +A (a second retardation film) A2 having positive birefringence adjacent to the liquid crystal cell L is arranged such that it is aligned with the absorption axis of the backlight side polarizer P1. With respect to the panel light emitting side polarizer P2, the absorption axis is arranged to be orthogonal to the absorption axis of the backlight side polarizer P1.

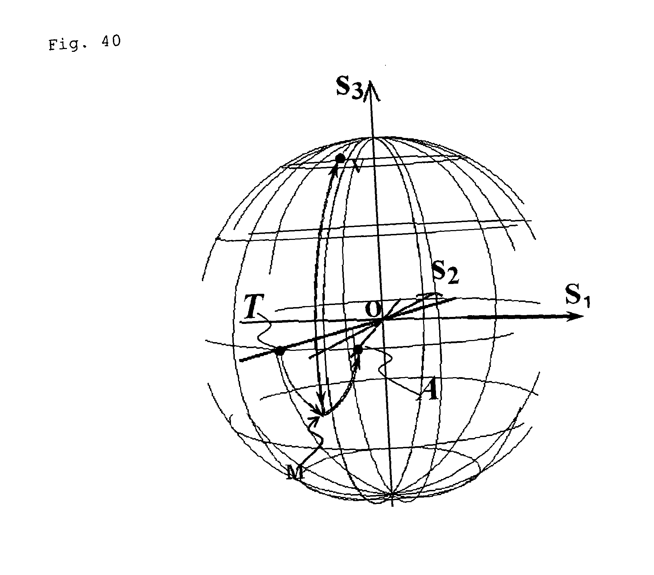

The change in the polarizing state in this method will be explained with reference to the Poincaré spherical representation (Fig. 40).

T in Fig. 40 represents the transmission polarization axis direction of the backlight side polarizer P1, while A indicates the absorption axis direction of the panel light emitting side polarizer P2. At integral multiples of $\theta=0°$ at vertical incidence or azimuth angle of $\varphi=90°$, the directions of A and T are aligned with each other. For this reason, the light passing through the backlight side polarizer P1 is all absorbed by the panel light emitting side polarizer P2 so that light leakage does not occur.

On the other hand, the state at the oblique viewing angle will be described with reference to Fig. 40 expressed by the Poincaré spherical representation, taking a viewing angle of $\theta=60°$ and the azimuth angle of $\varphi=45°$ as an example. Herein, the polarizing state of the light passing through the backlight side polarizer P1 is linear polarized light corresponding to T on the Poincaré sphere. Transmitted light of the backlight side polarizer P1 passes through the first retardation film A1, whereby the light is rotated 60 degrees counterclockwise around the central rotation axis A as the center and becomes counterclockwise elliptical polarized light represented by the point M, and then is rotated around the S1 axis as the central rotation axis by the retardation film C (-C) to pass through for reaching the point V to be a counterclockwise elliptical polarized light. Furthermore, the light returns to the point M by the liquid crystal cell L to pass through next. Then, by passing through the second retardation film A2, the light is rotated 60 degrees counterclockwise around T as the central rotation axis and finally the polarizing state comes to A. Since this point A is aligned with the absorption axis of the panel light emitting side polarizer P2, this polarized light is all absorbed. This is a principle that light leakage can be reduced at an oblique view.

As described above, details of a typical method of the presented conventional compensation methods have been introduced, for example, in Deng-Ke Yang, Shin-Tson Wu, "Fundamentals of Liquid Crystal Devices," John Wiley & Sons Inc., 2006, p. 213 to 234.

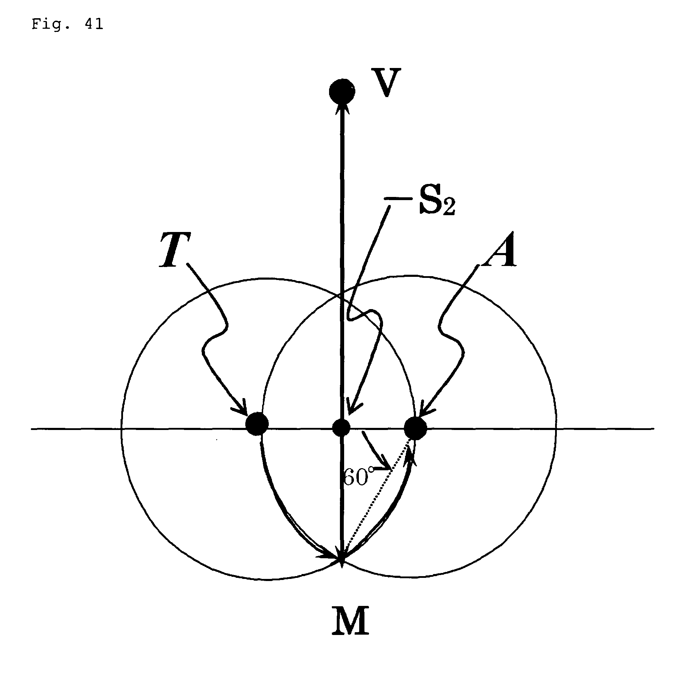

However, in the aforementioned compensation method, the retardation required for the retardation film has been relatively large. This point of view will be described with reference to Fig. 41. Fig. 41 is a view projected onto the equator plane of a locus on the Poincaré spherical surface so as to further easily understand Fig. 40.

In Fig. 41, since a triangle connecting three points A, T and M becomes a viewing angle-independent equilateral triangle, the rotation angle by the retardation film A becomes 60 degrees. The retardation Re corresponding to this angle satisfies the relationship of the rotation angle $\Gamma = (2n/\lambda)Re$ in proportion to the rotation angle $\Gamma$.

Accordingly, the retardation required for the first and second retardation films A is the in-plane retardation of about 90 nm at a wavelength of 550 nm.

As described above, the compensation method in the so-called (i) cross A compensation type (-A, +A) is explained, whereas the compensation method of the (ii) AC type as described in the aforementioned International Publication Pamphlet No. 03/032060 can also be explained in accordance with this. However, in case of the AC type compensation method, the retardation necessary for the retardation film A needs to have the retardation of greater than before and after 140 nm.

In this way, in case of the arrangement in International Publication Pamphlet No. 03/032060, the retardation film A needs to have, for example, large retardation of about 140 nm, so there has been room for improvement from the point of the degree of freedom of the material which can be used as the retardation film A. Furthermore, in the compensation method as described in the document, since the symmetry property to the azimuth angle is not always sufficient, there has been room for improvement from the point of sufficiently securing the viewing angle of the liquid crystal display device.

The fourth invention is conducted in view of the above circumstances, and an object of the invention is to provide a technique of reducing light leakage in the dark state of the liquid crystal panel and securing low light leakage at an oblique view and a wide viewing angle even when a film having a relatively small retardation is used.

According to the fourth invention, even when a film having a relatively small retardation is used, it is possible to reduce light leakage in the dark state of the liquid crystal panel and to secure low light leakage at an oblique view and a wide viewing angle.

Hereinafter, embodiments of the fourth invention will be illustrated with reference to the drawings. Incidentally, in all drawings, common components will be assigned with the same symbols, and proper explanation will be omitted.

(First Embodiment)

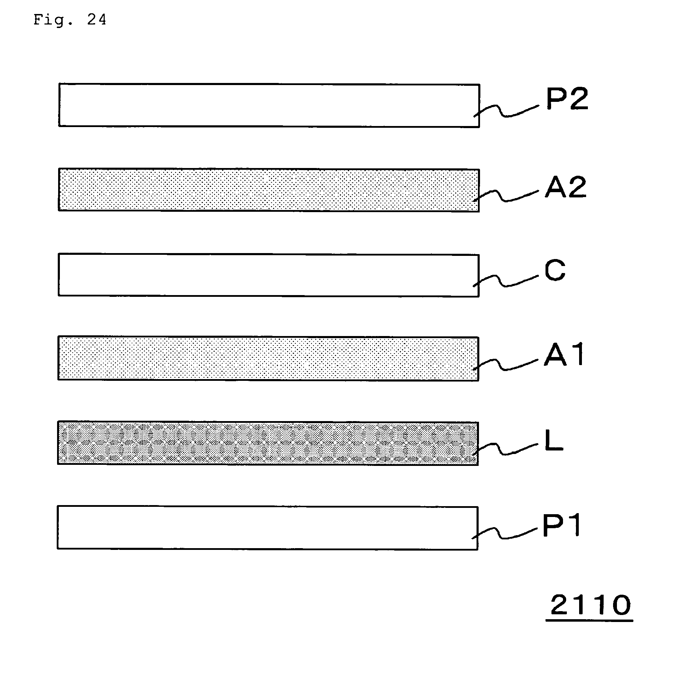

Fig. 24 is a cross-sectional view schematically illustrating the constitution of a laminate according to this embodiment.

A laminate 2110 illustrated in Fig. 24 is provided with a first and second polarizing films (P1, P2), a liquid crystal cell L arranged between the polarizing film P1 and the polarizing film P2, and a plurality of retardation films arranged between the polarizing film P1 and the polarizing film P2. The liquid crystal cell L is constructed from a pair of substrates and a liquid crystal layer interposed between the substrates. In this embodiment and the following embodiments, with respect to the arrangement of two pieces of polarizing films, for example, the polarizing film P1 is taken as a backlight side polarizing film, while the polarizing film P2 is taken as a panel light emitting side polarizing film.

A plurality of the retardation films contains a plurality of the retardation films A (the retardation film A1 and the retardation film A2) and the retardation film C. Incidentally, in Fig. 24, the construction of two pieces of the retardation films A and one piece of the retardation film C is exemplified, whereas as illustrated in the second embodiment to be described below, the laminate may further contain the retardation film A or the retardation film C.

In the laminate 2110, the retardation film A1, the retardation film A2, the retardation film C and the liquid crystal cell L are arranged in the order of L, A1, C and A2. Incidentally, this arrangement is not restricted to a case in which adjacent portions of L, A1, C and A2 are actually physically adhered, but includes a case in which a layer substantially free from the retardation may be intervened between L and A1, A1 and C or C and A2.

Furthermore, in Fig. 24, an arrangement in the order of P1, L, A1, C, A2 and P2 is exemplified, but P1 and P2 may be reversely arranged.

Hereinafter, the construction of the retardation film A and the retardation film C will be described.

Firstly, the retardation film A will be mentioned.

(Retardation Film A)

A plurality of the retardation films A (the retardation films A1 and A2) each independently satisfy either of the following formula (4-1) or (4-2),

$$nx > ny \geq nz \quad (4\text{-}1)$$

$$nz \geq nx > ny \quad (4\text{-}2)$$

wherein, in the above formulae (4-1) and (4-2), nx is the maximum in-plane refractive index of the retardation film; ny is the refractive index in the direction orthogonal to the direction in which the maximum in-plane refractive index of the retardation film occurs; and nz is the vertical refractive index of the retardation film.

Herein, when the retardation film A satisfies the above formula (4-1), the film A functions as a so-called +A film. When it satisfies the above formula (4-2), the film A functions as a so-called -A film.

Furthermore, the retardation film A1 or A2 may have a property such that the retardation caused by a birefringence is small as the wavelength is shorter in a specific wavelength range (reverse wavelength dispersion). Specifically, the in-plane retardation Re(450) at a wavelength of 450 nm of the retardation film A1 or A2, the in-plane retardation Re(550) at a wavelength of 550 nm and the in-plane retardation Re(650) at a wavelength of 650 nm are constructed to satisfy the relationships of,

$$Re(450)/Re(550) < 1 \quad (4\text{-}4)$$

and

$$Re(650)/Re(550) > 1 \quad (4\text{-}5)$$

Incidentally, in the fourth invention, the in-plane retardation Re and the retardation K in the thickness direction to be described below are respectively calculated according to the following formula. In the following formula, nx is the maximum in-plane refractive index of the retardation film, ny is the refractive index in the direction orthogonal to the direction in which the maximum in-plane refractive index of the retardation film occurs, and nz is the vertical refractive index of the retardation film. Further, d is a thickness of the retardation film.

$$Re = S(nx-ny) \times d$$

$$K = \{nz-(nx+ny)/2\} \times d$$

Herein, S is a sign for discriminating between positive and negative birefringences. In case of -A, -(minus) is adopted, while in case of +A, +(plus) is adopted.

Hereinafter, concrete examples of the material of the retardation film A will be described. Incidentally, materials of the retardation films A1 and A2 may be the same or different.

The material of the retardation film A is not particularly limited as long as it exhibits the above properties, but examples thereof include a (co)polymer ($\alpha$) obtained from at least one olefin selected among 4-methyl-1-pentene, 3-methyl-1-pentene and 3-methyl-1-butene as a (co)monomer ingredient. The entire retardation film A may be constructed with the (co)polymer ($\alpha$) or a part of the retardation film A may be constructed with the above (co)polymer ($\alpha$). Furthermore, the content of the (co)polymer ($\alpha$) in the retardation film A is, for example, from not less than 20 and not more than 100 % by weight and preferably from not less than 50 and not more than 100 % by weight.

As the material of the retardation film A, further preferably, there can be exemplified a homopolymer of 3-methyl-1-butene, 3-methyl-1-pentene or 4-methyl-1-pentene or a copolymer thereof, and other copolymerizable monomers, for example, a copolymer with styrene, acrylonitrile, vinyl chloride, vinyl acetate, acrylate ester, methacrylate ester or the like, a blend, a block copolymer, a graft copolymer and the like, each obtainable from the above components or other thermoplastic resins or synthetic rubbers. Of structural units of the (co)polymer ($\alpha$), the structural unit derived from 4-methyl-1-pentene, 3-methyl-1-pentene or 3-methyl-1-butene is usually from not less than 20 and not more than 100 % by mole, preferably from not less than 50 and not more than 100% by mole and further preferably from not less than 80 and not more than 100 % by mole in total from the viewpoint of further improvement of a balance of various characteristics such as transparency, heat resistance or the like of the resin.

Among (co)polymers ($\alpha$), the 4-methyl-1-pentene (co)polymer is preferred because it is excellent in transparency, peeling property or the like and is suitably used in combination with the optical element. Further, the 3-methyl-1-pentene (co)polymer and the 3-methyl-1-butene (co)polymer are excellent in heat resistance, and are preferable from the viewpoints of the degree of freedom of the process, the degree of freedom of use condition and the like. Respective components will be described in detail below.

(4-methyl-1-pentene (co)polymer)

The 4-methyl-1-pentene (co)polymer is specifically a homopolymer of 4-methyl-1-pentene or a copolymer of 4-methyl-1-pentene with ethylene or other $\alpha$-olefin having not less than 3 and not more than 20 carbon atoms, for example, propylene, 1-butene, 1-hexene, 1-octene, 1-decene, 1-tetradecene, 1-octadecene or the like. The 4-methyl-1-pentene (co)polymer which is preferably used in the fourth invention usually contains the structural unit derived from 4-methyl-1-pentene in an amount of not less than 85 % by mole and preferably not less than 90 % by mole. The constituent component which is not derived from 4-methyl-1-pentene constituting the 4-methyl-1-pentene (co)polymer is not particularly limited, and various monomers capable of performing copolymerization with 4-methyl-1-pentene can be suitably used, but ethylene and $\alpha$-olefin having not less than 3 and not more than 20 carbon atoms can be preferably used from the viewpoints of the easiness of acquisition, copolymerization characteristics and the like. Among these, preferably used is $\alpha$-olefin having not less than 7 and not more than 20 carbon atoms, while particularly preferably used are 1-decene, 1-dodecene, 1-tetradecene, 1-hexadecene and 1-octadecene.

The melt flow rate (MFR) of the 4-methyl-1-pentene (co)polymer measured in accordance with ASTM D1238 under conditions of a load of 5 kg and a temperature of 260 degrees centigrade is decided in many ways depending on the use, but it is usually in the range of not less than 1 and not more than 50 g/10 min., preferably in the range of not less than 2 and not more than 40 g/10 min. and further preferably in the range of not less than 5 and not more than 30 g/10 min. When the melt flow rate of the 4-methyl-1-pentene (co)polymer is within the above range, the film formability and the appearance of the obtained resin are good. Furthermore, it is preferable that the melting point is in the range of not less than 100 and not more than 240 degrees centigrade and preferably in the range of not less than 150 and not more than 240 degrees centigrade.

Such a 4-methyl-1-pentene (co)polymer can be prepared by a conventionally known method. For example, as described in Japanese Patent Laid-open No. 1984-206418, it can be obtained by polymerizing 4-methyl-1-pentene with the above ethylene or $\alpha$-olefin in the presence of a catalyst.

(3-methyl-1-pentene (co)polymer)

The preferable kind of the comonomer, the content of comonomer, MFR, the melting point and the like of the 3-methyl-1-pentene (co)polymer are the same as those of the above 4-methyl-1-pentene (co)polymer. The 3-methyl-1-pentene (co)polymer which is preferably used in the fourth invention can be properly prepared according to a conventionally known method. For example, it can be prepared according to the method as described in Japanese Patent Laid-open No. 1994-145248.

(3-methyl-1-butene (co)polymer)

The preferable kind of the comonomer, the content of comonomer, MFR, the melting point and the like of the 3-methyl-1-butene (co) polymer are the same as those of the above 4-methyl-1-pentene (co)polymer. The 3-methyl-1-butene (co)polymer which is preferably used in the fourth invention can be properly prepared according to a conventionally known method. For example, it can be prepared according to the method as described in Japanese Patent Laid-open No. 1994-145248.

(Components constituting retardation film A other than (co)polymer ($\alpha$))

The retardation film A may contain various components other than the aforementioned copolymer ($\alpha$). The

components other than the copolymer (α) may be various resins or various rubbers other than the (co)polymer (α). As various resins, particularly preferably used is a resin excellent in transparency, and there can be used, for example, various polyolefins such as a cyclic olefin (co)polymer and the like; polycarbonate, polystyrene, a cellulose acetate resin, a fluorinated resin, polyester, an acrylic resin and the like. As various rubbers, olefin based rubber, styrene based rubber and the like can be used. Further, to the retardation film A used in the fourth invention, there can be used various compounding ingredients to be used by adding usual polyolefin such as an anti-static agent, an anti-oxidant, a heat stabilizer, a release agent, a weathering stabilizer, a rust prevention agent, a slipping agent, a nucleating agent, a pigment, a dye, an inorganic filler (silica or the like) and the like; or other special compounding ingredients, in the ranges in which the object of the fourth invention is not damaged.

(Method for preparing retardation film A)

The retardation film A can be suitably prepared according to a conventionally known method. For example, the film can be formed by a known method involving mixing the (co)polymer (α) and components other than the (co)polymer (α) using a V-blender, a ribbon blender, a Henschel mixer or a tumbler blender, a method involving mixing using the above blender, and then melt-kneading using a single screw extruder, a multi-screw extruder, a kneader, a banbury mixer or the like for granulating or pulverizing, and subsequently press molding, extrusion molding, inflation molding or the like, a solution casting method or the like. To produce the film with good efficiency, preferably used are a solution casting method, an inflation molding method, an extrusion molding method and the like.

Furthermore, by stretching the obtained film, physical properties such as birefringence, its angle dependence, its temperature dependence or the like can be optically adjusted to a desired value, and a film further provided with mechanical strength can also be made. A stretching ratio may be properly selected according to desired optical properties, but it is usually from not less than 1.5 and not more than 10 times and preferably from not less than 2 and not more than 5 times.

The thickness of the retardation film A is not particularly limited, but it is usually from not less than 10 and not more than 200 μm and preferably from not less than 20 and not more than 100 μm. When the thickness is within such a range, the productivity of the film can be further improved. Furthermore, generation of pinholes or the like can be suppressed at the time of molding the film and the intensity can be improved.

Meanwhile, as the material of the retardation film A, in addition, APEL (registered trademark), ZEONOR (registered trademark) and the like can be cited.

In this embodiment, further specifically, it is preferable that the retardation film A has a layer containing the 4-methyl-1-pentene (co) polymer. In this way, for example, the heat resistance of the retardation film A can be enhanced, the production cost can be decreased, and the environmental load can be further reduced.

Next, the retardation film C will be explained.

(Retardation film C)

The retardation film C satisfies the following formula (4-3), nx ≥ ny > nz (4-3)

wherein, in the above formula (4-3), nx is the maximum in-plane refractive index of the retardation film; ny is the refractive index in the direction orthogonal to the direction in which the maximum in-plane refractive index of the retardation film occurs; and nz is the vertical refractive index of the retardation film.

Furthermore, in this embodiment, the retardation K(450) in the thickness direction at a wavelength of 450 nm, the retardation K(550) at a wavelength 550 nm and the retardation K(650) film wavelength of 650 nm of at least one piece of the retard C are constructed to satisfy the following formula

$$K(450)/K(550) \geq 1 \quad (4-6)$$

The retardation film C has, as illustra formula (4-3), the retardation only i functions as a so-called minus C plate for effectively compensating the viewing angle of the liquid crystal.

Furthermore, the retardation film C satisfies the above formula (4-6) and exhibits a property of having usual wavelength dispersion, that is, large retardation caused by birefringence as the wavelength is shorter.

Furthermore, in the retardation film C, the retardation K(450) in the thickness direction at a wavelength of 450 nm, the retardation K(550) at a wavelength of 550 nm and the retardation K(650) at a wavelength of 650 nm may be constructed to satisfy the following formula (4-7) in addition to the above formula (4-6). In this way, the film can be constructed to exhibit usual wavelength dispersion in a wider wavelength region, so the viewing angle can be stably compensated in a wider wavelength region,

$$K(650)/K(550) \leq 1 \quad (4-7)$$

Hereinafter, concrete examples of the material of the retardation film C will be described.
The material of the retardation film C is not particularly limited as long as it exhibits the above properties, but the material can be used, for example, as described in International Publication Pamphlet No. 06/033414.
Further specifically, as the material of the retardation film C, an alicyclic structure-containing polymer can be cited. The entire retardation film C may be constructed with the alicyclic structure-containing polymer or a part of the film may be constructed with the alicyclic structure-containing polymer.

The alicyclic structure-containing polymer has an alicyclic structure in the repeating units of the polymer, and may have an alicyclic structure in either of its main chain or side chain. As the alicyclic structure, a cycloalkane structure, a cycloalkene structure and the like can be cited, but preferably used is a cycloalkane structure from the viewpoint of thermal stability or the like. The number of carbon atoms constituting the alicyclic structure is not particularly limited. However, when it is usually in the range of not less than 4 and not more than 30, preferably in the range of not less than 5 and not more than 20 and more preferably in the range of not less than 5 and not more than 15, a film further excellent in the heat resistance and flexibility is obtained. The proportion of the repeating units having an alicyclic structure in the alicyclic structure-containing polymer may be suitably selected depending on the purpose of use, but it is usually not less than 20 % by weight, preferably not less than 40 % by weight and more preferably not less than 60 % by weight. When the proportion of the repeating units having an alicyclic structure in the alicyclic structure-containing polymer is excessively small, the heat resistance might be lowered. Incidentally, the residual part other than the repeating units having an alicyclic structure in the alicyclic structure-containing polymer is not particularly limited and is properly selected depending on the purpose of use.

Meanwhile, the content of the alicyclic structure-containing polymer is not particularly limited, but it is usually from not less than 50 and not more than 100 % by weight, preferably from not less than 60 and not more than 100 % by weight and further preferably from not less than 70 and not more than 100 % by weight from the viewpoint of optical homogeneity. Furthermore, components other than the resin are not particularly limited, but there can be added, for example, olefin based elastomer or styrene based elastomer from the viewpoint of improvement of the impact resistance or the like. Further, as described below, various other additives may be used.

Concrete examples of the polymer resin containing an alicyclic structure include (a) a norbornene based polymer, (b) a monocyclic cyclic olefin based polymer, (c) a cyclic conjugated diene based polymer, (d) a vinyl alicyclic hydrocarbon polymer, a hydrogenated product thereof and the like. Among these, preferably used are a norbornene based polymer, a vinyl alicyclic hydrocarbon polymer, a hydride thereof and the like from the viewpoints of the dimensional stability, oxygen transmittance, moisture permeability, heat resistance, mechanical strength and the like.

(a) Norbornene based polymer

Examples of the norbornene based polymer include a ring-opening polymer of a norbornene based monomer, a ring-opening copolymer of a norbornene based monomer and other monomers capable of performing ring-opening copolymerization with the norbornene based monomer, and a hydrogenated product thereof; an addition polymer of a norbornene based monomer, and an addition copolymer of a norbornene based monomer with other monomers capable of performing copolymerization with the norbornene based monomer.

In the hydrogenated product of a ring-opening polymer of a norbornene based monomer and hydrogenated product of a ring-opening copolymer of a norbornene based monomer and other monomers capable of performing ring-opening copolymerization with the norbornene based monomer, when its hydrogenation ratio is not less than 99%, hydrogenated products are excellent in transparency (particularly, initial change of yellowness index is low), stability (particularly, change of yellowness hardly occurs over a long period of time) and the like, and can suppress occurrence of gelation in many cases; therefore, such a ratio is preferable.

Among these, an addition copolymer of a norbornene based monomer with other monomers capable of performing copolymerization with the norbornene based monomer is the most preferable from the viewpoint that a desired retardation is easily achieved.

Examples of the norbornene based monomer include, though not restricted to, bicyclo[2.2.1]-hept-2-ene (customary name: norbornene), 5-methyl-bicyclo[2.2.1]-hept-2-ene, 5,5-dimethyl-bicyclo[2.2.1]-hept-2-ene, 5-ethyl-bicyclo[2.2.1]-hept-2-ene, 5-butyl-bicyclo[2.2.1]-hept-2-ene, 5-hexyl-bicyclo[2.2.1]-hept-2-ene, 5-octyl-bicyclo[2.2.1]-hept-2-ene, 5-octadecyl-bicyclo[2.2.1]-hept-2-ene, 5-ethylidene-bicyclo[2.2.1]-hept-2-ene, 5-methylidene-bicyclo[2.2.1]-hept-2-ene, 5-vinyl-bicyclo[2.2.1]-hept-2-ene, 5-propenyl-bicyclo[2.2.1]-hept-2-ene, 5-methoxy-carbonyl-bicyclo[2.2.1]-hept-2-ene, 5-cyano-bicyclo[2.2.1]-hept-2-ene, 5-methyl-5-methoxycarbonyl-bicyclo[2.2.1]-hept-2-ene, 5-methoxycarbonyl-bicyclo[2.2.1]-hept-2-ene, 5-ethoxycarbonyl-bicyclo[2.2.1]-hept-2-ene, 5-methyl-5-ethoxycarbonyl-bicyclo[2.2.1]-hept-2-ene, bicyclo[2.2.1]-hept-5-enyl-2-methylpropionate, bicyclo[2.2.1]-hept-5-enyl-2-methyloctanate, bicyclo[2.2.1]-hept-2-ene-5,6-dicarboxylic anhydride, 5-hydroxymethyl-bicyclo[2.2.1]-hept-2-ene, 5,6-di(hydroxymethyl)-bicyclo[2.2.1]-hept-2-ene, 5-hydroxy-i-propyl-bicyclo[2.2.1]-hept-2-ene, bicyclo[2.2.1]-hept-2-ene, 5,6-dicarboxy-bicyclo[2.2.1]-hept-2-ene, bicyclo[2.2.1]-hept-2-ene-5,6-dicarboxylic acid imide, 5-cyclopentyl-bicyclo[2.2.1]-hept-2-ene, 5-cyclohexyl-bicyclo[2.2.1]-hept-2-ene, 5-cyclohexenyl-bicyclo[2.2.1]-hept-2-ene, 5-phenyl-bicyclo[2.2.1]-hept-2-ene, tricyclo[4.3.1$^{2,5}$.0$^{1,6}$]-deca-3,7-diene (customary name: dicyclopentadiene), tricyclo[4.3.1$^{2,5}$.0$^{1,6}$]-deca-3-ene, tricyclo[4.4.1$^{2,5}$.0$^{1,6}$]-undeca-3,7-diene, tricyclo[4.4.1$^{2,5}$.0$^{1,6}$]-undeca-3.8-diene, tricyclo[4.4.1$^{2,5}$.0$^{1,6}$]-undeca-3-ene, tetracyclo[7.4.1$^{10,13}$.0$^{1,9}$.0$^{2,7}$]-trideca-2,4,6-11-tetraene (also referred to as 1,4-methano-1,4,4a,9a-tetrahydrofluorene, customary name: methanotetrahydrofluorene), tetracyclo[8,4,1$^{11,14}$,0$^{1,10}$,0$^{3,8}$]-tetradeca-3,5,7,12-11-tetraene (also referred to as 1,4-methano-1,4,4a,5,10,10a-hexahydroanthracene), tetracyclo[4.4.1$^{2,5}$.1$^{7,10}$.0]-dodeca-3-ene (also referred to as tetracyclododecene), 8-methyl-tetracyclo[4.4.1$^{2,5}$.1$^{7,10}$.0]-dodeca-3-ene, 8-ethyl-tetracyclo[4.4.1$^{2,5}$.1$^{7,10}$.0]-dodeca-3-ene, 8-methylidene-tetracyclo[4.4.1$^{2,5}$.1$^{7,10}$.0]-dodeca-3-ene, 8-ethylidene-tetracyclo[4.4.1$^{2,5}$1$^{7,11}$.0]-dodeca-3-ene, 8-vinyl-tetracyclo[4.4.1$^{2,5}$.1$^{7,10}$.0]-dodeca-3-ene, 8-propenyl-tetracyclo[4.4.1$^{2,5}$.1$^{7,10}$.0]-dodeca-3-ene, 8-methoxycarbonyl-tetracyclo[4.4.1$^{2,5}$.1$^{7,10}$.0]-dodeca-3-ene, 8-methyl-8-methoxycarbonyl-tetracyclo[4.4.1$^{2,5}$.1$^{7,10}$.0]-dodeca-3-ene, 8-hydroxymethyl-tetracyclo[4.4.1$^{2,5}$.1$^{7,10}$.0]-dodeca-3-ene, 8-carboxy-tetracyclo[4.4.1$^{2,5}$.1$^{7,10}$.0]-dodeca-3-ene, 8-cyclopentyl-tetracyclo[4.4.1$^{2,5}$.1$^{7,10}$.0]-dodeca-3-ene, 8-cyclohexyl-tetracyclo[4.4.1$^{2,5}$.1$^{7,10}$.0]-dodeca-3-ene, 8-cyclohexenyl-tetracyclo[4.4.1$^{2,5}$.1$^{7,10}$.0]-dodeca-3-ene, 8-phenyl-tetracyclo[4.4.1$^{2,5}$.1$^{7,10}$.0]-dodeca-3-ene, pentacyclo[6.5.1$^{1,8}$.1$^{3,6}$.0$^{2,7}$.0$^{9,13}$]-pentadeca-3,10-diene, pentacyclo[7.4.1$^{3,6}$.1$^{10,13}$.0$^{1,9}$.0$^{2,7}$]-pentadeca-4,11-diene and the like. These norbornene based monomers are used singly or in combination of two or more kinds.

The ring-opening polymer of a norbornene based monomer or the ring-opening copolymer of a norbornene based monomer and other monomers capable of performing ring-opening copolymerization with the norbornene based monomer can be obtained by polymerizing the monomer component(s) in the presence of a ring-opening polymerization catalyst. As the ring-opening polymerization catalyst, there can be used, for example, a catalyst composed of a halide, nitrate or acetylacetone compound of a metal such as ruthenium, rhodium, palladium, osmium, iridium, platinum and the like, and a reducing agent, or a catalyst composed of a halide or acetylacetone compound of a metal such as titanium, vanadium, zirconium, tungsten, molybdenum and the like, and an organic aluminum compound. The polymerization reaction is usually carried out at a polymerization temperature of from about -50 to 100 degrees centigrade under polymerization pressure of from 0 to 50 kg/cm$^2$ in a solvent or without using any solvent. Examples of other monomers capable of performing ring-opening copolymerization with a norbornene based monomer include, though not restricted to, a monocyclic cyclic olefin based monomer such as cyclohexene, cycloheptene, cyclooctene and the like.

The hydrogenated product of a ring-opening polymer of a norbornene based monomer can be usually obtained by adding a hydrogenation catalyst to a polymerization solution of the above ring-opening polymer for adding hydrogen to carbon-carbon unsaturated bonds. The hydrogenation catalyst is not particularly limited, but heterogeneous catalysts or homogeneous catalysts are usually used.

The norbornene based monomer or the addition (co)polymer of a norbornene based monomer and other monomers capable of performing copolymerization with the norbornene based monomer can be generally obtained, for example, by (co)polymerizing the monomer component(s) at a polymerization temperature of from about -50 to 100 degrees centigrade under polymerization pressure of from 0 to 50 kg/cm$^2$ in a solvent or without using any solvent in the presence of a catalyst composed of a titanium, zirconium or vanadium compound and an organic aluminum compound.

Examples of other monomers capable of performing copolymerization with a norbornene based monomer include, though not restricted to, $\alpha$-olefins having not less than 2 and not more than 20 carbon atoms such as ethylene, propylene, 1-butene, 1-pentene, 1-hexene, 3-methyl-1-butene, 3-methyl-1-pentene, 3-ethyl-1-pentene, 4-methyl-1-pentene, 4-methyl-1-hexene, 4,4-dimethyl-1-hexene, 4,4-dimethyl-1-pentene, 4-ethyl-1-hexene, 3-ethyl-1-hexene, 1-octene, 1-decene, 1-dodecene, 1-tetradecene, 1-hexadecene, 1-octadecene, 1-eicocene and the like; cyclo olefins such as cyclobutene, cyclopentene, cyclohexene, 3,4-dimethylcyclopentene, 3-methylcyclohexene, 2-(2-methylbutyl)-1-cyclohexene, cyclooctene, 3a,5,6,7a-tetrahydro-4,7-methano-1H-indene and the like; and non-conjugated dienes such as 1,4-hexadiene, 4-methyl-1,4-hexadiene, 5-methyl-1,4-hexadiene, 1,7-octadiene and the like. Among these, $\alpha$-olefins, particularly ethylene, are preferred.

Other monomers capable of performing copolymerization with a norbornene based monomer can be used singly or in combination of two or more kinds. When the norbornene based monomer and other monomers capable of performing copolymerization with the norbornene based monomer are subjected to an addition copolymerization, the proportion of the structural units derived from the norbornene based monomer in the addition copolymer to the structural units derived from other monomers capable of performing copolymerization is properly selected such that the weight ratio is usually in the range of 30:70 to 99:1, preferably in the range of 50:50 to 97: 3 and more preferably in the range of 70:30 to 95: 5.

(b) Monocyclic cyclic olefin based polymer

As the monocyclic cyclic olefin based polymer, there can be used, for example, an addition polymer of a monocyclic cyclic olefin based monomer such as cyclohexene, cycloheptene, cyclooctane and the like. However, the monocyclic cyclic olefin based polymer is not restricted thereto.

(c) Cyclic conjugated diene based polymer

As the cyclic conjugated diene based polymer, there can be used, for example, a polymer obtained by subjecting a cyclic conjugated diene based monomer such as cyclopentadiene, cyclohexadiene or the like to 1,2- or 1,4-addition polymerization, and hydrogenated products thereof. However, the cyclic conjugated diene based polymer is not restricted thereto.

The molecular weight of the norbornene based polymer, the monocyclic cyclic olefin based polymer or the cyclic conjugated diene based polymer which is used as the retardation film C is properly selected depending on the purpose of use. However, when the weight average molecular weight Mw in terms of polyisoprene or polystyrene as measured in the form of a cyclohexane solution (a toluene solution in case the polymer resin is not dissolved) by the gel permeation chromatography is usually in the range of not less than 5,000 and not more than 1,000,000, preferably in the range of not less than 8,000 and not more than 800,000 and more preferably in the range of not less than 10,000 and not more than 500,000, the mechanical strength and molding processability of a molded product are highly balanced. Such polymers are suitable in many cases.

(d) Vinyl alicyclic hydrocarbon polymer

As the vinyl alicyclic hydrocarbon polymer, there can be used, for example, a polymer of a vinyl alicyclic hydrocarbon based monomer such as vinylcyclohexene, vinylcyclohexane or the like and hydrogenated products thereof, or hydrogenated products of an aromatic ring part of a polymer of a vinyl aromatic based monomer such as styrene, $\alpha$-methylstyrene or the like. In this case, it may be any of copolymers, such as a random copolymer and a block copolymer, of a vinyl alicyclic hydrocarbon polymer or a vinyl aromatic based monomer with other monomers capable of performing copolymerization with these monomers and hydrogenated products thereof. The block copolymer is not particularly limited, and examples thereof include a diblock copolymer, a triblock copolymer, a multiblock copolymer, a tapered block copolymer and the like.

The molecular weight of the vinyl alicyclic hydrocarbon polymer which is used as the retardation film C is properly selected depending on the purpose of use. However, when the weight average molecular weight Mw in terms of polyisoprene or polystyrene as measured in the form of a cyclohexane solution (a toluene solution in case the polymer resin is not dissolved) by the gel permeation chromatography is usually in the range of not less than 10,000 and not more than 800,000, preferably in the range of not less than 15,000 and not more than 500,000 and more preferably in the range of not less than 20,000 and not more than 300,000, the mechanical strength and molding processability of a molded product are highly balanced. Such polymers are suitable in many cases.

Various additives may be combined with the retardation film C as needed. Examples of such additives include various resins with a water absorption percentage of more than 0.1% such as various cellulose resins including triacetylcellulose or stabilizers such as anti-oxidants, light stabilizers, ultraviolet absorbers or the like, anti-static agents and the like. However, such additives are not particularly limited as long as the object of the present fourth invention is not impaired.

Examples of the anti-oxidant include a phenol based anti-oxidant, a phosphorus based anti-oxidant, a sulfur based anti-oxidant and the like. Among these, a phenol based anti-oxidant, particularly an alkyl-substituted phenol based anti-oxidant, is preferred. It is possible to prevent coloring or a decrease in strength due to oxidative degradation without reducing transparency, heat resistance or the like by combining these anti-oxidants.

Examples of the ultraviolet absorber include a benzophenone based ultraviolet absorber, a benzotriazole based ultraviolet absorber and the like. Among these, 2-(2'-hydroxy-5'-methyl-phenyl)benzotriazole, 2-(2H-benzotriazole-2-yl)-4-methyl-6-(3,4,5,6-tetrahydrophthal imidylmethyl)phenol, 2-(2H-benzotriazole-2-yl)-4,6-bis(1-methyl-1-phenylethyl) pheno 1 and the like are preferred from the viewpoints of heat resistance, low volatility and the like.

Examples of the light stabilizer include a benzophenone based light stabilizer, a benzotriazole based light stabilizer, a hindered amine based light stabilizer and the like. However, in the fourth invention, hindered amine based light stabilizers are preferably used from the viewpoints of transparency, coloring resistance and the like.

These anti-oxidants, ultraviolet absorbers, light stabilizers and the like can be used singly or in combination of 2 or more kinds. The combination amount thereof is suitably selected in the ranges in which the function as the retardation film C is not damaged.

Furthermore, the retardation film C obtained as described above is heated at a temperature of lower than the glass transition temperature Tg of the film, for example, at a lower temperature of not less than 10 and not more than 30 degrees centigrade than Tg and preferably not less than 10 and not more than 20 degrees centigrade, under a reduced pressure, for example, not more than 1 Pa or in an inert gas atmosphere, for example, a nitrogen atmosphere, whereby the retardation is stabilized. So, a film which is suitable for stably compensating a viewing angle of a display element for a long period of time is obtained.

Meanwhile, as the material of the retardation film C, in addition, polycarbonate, cycloolefin polymer and the like can be cited.

Hereinafter, the effect of action of this embodiment will be explained.

In this embodiment, as the retardation film arranged between the polarizing film P1 and the polarizing film P2, a plurality of the retardation films A (A1 and A2) and retardation film C are used. These retardation films and the liquid crystal cell L are arranged in the order of L, A1, C and A2. Accordingly, as the retardation film A or the retardation film C, even when a film having a relatively small retardation is used, the light leakage in the dark state can be reduced to obtain a high contrast. Furthermore, leak light in the oblique view can be reduced to secure a wide viewing angle.

Herein, in the conventional optical compensation method including a constitution in International Publication Pamphlet No. 03/032060, since the retardation required for one piece of the retardation film A was large, there have been some restrictions on the material used as the retardation film A, while since there have been restrictions on the thickness of the entire laminate, it was not possible to use a plurality of retardation films A in the laminate.

For example, when a (co)polymer containing poly(4-methylpentene-1) is used as the material of the retardation film A1 or the retardation film A2, and excellent characteristics is indicated as the retardation film A such that photoelasticity is small, the reverse wavelength dispersion property (birefringence is small as the wavelength is shorter) is exhibited, heat resistance is high, the cost is relatively low, environmental load is also small and the like, and on the other hand, to obtain a relatively large retardation exceeding, for example, 90 nm, the thickness of the film is increased, for example, to about 150 $\mu$m or more in some cases. Accordingly, when such a material for the arrangement in the aforementioned International Publication Pamphlet No. 03/032060 of the Background Art is used, an increase in the thickness of the entire laminate is resulted.

Tn response to this, according to the review by the investors of the fourth invention, it was found that the symmetry property to the azimuth angle could be effectively improved because of the arrangement of L, A1, C and A2. According to this arrangement, good symmetry property can be secured to widen the viewing angle of the laminate.

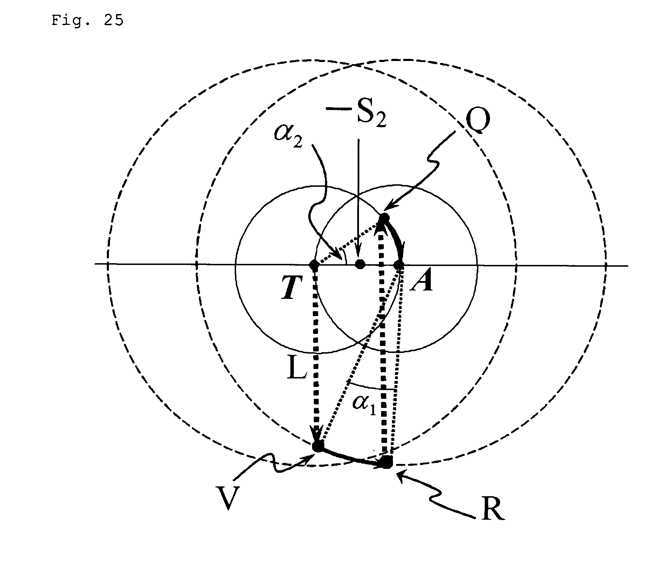

Hereinafter, a high contrast and a wide viewing angle are obtained even when the retardation film A having a small retardation is used because of the arrangement of L, A1, C and A2. The reason is explained taking a case in which a negative type retardation film (a retardation film -A) is used as the retardation films A1 and A2 as an example. Specifically, the change in the polarizing state due to the arrangement of this embodiment will be explained with reference to the projected view on the Poincaré sphere equator illustrated in Fig. 25.

In Fig. 25, the polarizing state is represented by T on the Poincaré sphere equator when light passes through the first polarizing film P1. The polarizing state of the light when passing through the liquid crystal cell L moves to the point V on the southern hemisphere side, and further moves to the point R by rotating the light around the point A counterclockwise as a rotating center just as much as the rotating angle $\alpha 1$ by passing though the retardation film A1. Next, by the retardation film C (-C), the light goes north to the point Q. Furthermore, the light is rotated clockwise around T as a rotating center just as much as the rotating angle $\alpha 2$ when passing through the retardation film A2. Accordingly, the emitted light can be aligned with the point A. Since the point A is the absorption axis direction of the light emitting side polarizer P2, it is possible to completely absorb the transmitted light.

In this way, the retardation films are arranged in the order of A, C and A after light passes through the liquid crystal cell L, and the light is rotated when the rotating radius VA of the point V is large, whereby the distance becomes great even when the rotation angle (retardation) is small. Thus, the retardation film A having a small retardation can also move the final polarizing state from the point T to the point A. Since the point A on the Poincaré sphere is a point on the absorption axis of the light emitting side polarizing film P2, the light passing through A2 is completely absorbed. Accordingly, in the laminate 2110, it is possible to reduce leak light in the oblique viewing angle. Accordingly, black is deepened so that the contrast can be improved.

Incidentally, improvement of the contrast and the viewing angle due to the constitution of this embodiment will be illustrated in further detail in Examples to be described below.

Furthermore, in the laminate 2110, the retardation film is arranged in the order of the retardation film A, the retardation film C and the retardation film A toward the polarizing film P2 from the liquid crystal cell L. Thus, since the symmetry property becomes good by the introduction of the retardation film A2 as compared to the aforementioned AC type compensation in the Background Art, the compensation effect at a high viewing angle can be improved and viewing angle characteristics can be enhanced.

In this embodiment, like the (co)polymer of poly(4-methylpentene-1), a sufficiently high contrast and a wide viewing angle are obtained even when the retardation is relatively small, for example, not more than 30. The retardation in case a thickness of from about 50 to 80 $\mu$m is suitable for a case in which the laminate is used for the liquid crystal panel of the liquid crystal display element. Accordingly, the constitution is suitable for the use of such a material, and is capable of achieving both an entire thin device and improvement in the device characteristics.

Furthermore, in this embodiment, the retardation film A is constituted to exhibit the reverse wavelength dispersion, whereby a color shift can be further reduced. At this time, specifically, at least one piece of the retardation film A1 and the retardation film A2 is constituted to satisfy the above formulae (4-4) and (4-5).

Hereinafter, this point will be described.

In general, a retardation film having a retardation of about 140 nm is widely used. Examples thereof include a polycarbonate retardation film, a cycloolefin based retardation film and the like.

However, this film has a property of so-called positive wavelength dispersion property such that the retardation is increased as the wavelength is shorter. The function exhibiting the retardation can be represented by the aforementioned formula,

$$\text{Rotation angle } \Gamma = (2\pi/\lambda)\text{Re}$$

According to the above formula, when Re has a constant value or the positive wavelength dispersion regardless of the wavelength, the rotation angle $\Gamma$ is increased by the wavelength.

Accordingly, viewing angle characteristics are only improved at a certain specific wavelength. That is, when a liquid crystal element displaying black is viewed from an oblique direction, the transmittance at a specific wavelength is reduced so that the viewing angle is widened. However, since the transmittance other than the specific wavelength is increased and light is leaked, there has been room for improvement from the fact that black is colored and viewed as such.

In order to solve this problem, it is preferable to use a retardation film having so-called reverse wavelength dispersion characteristics such that the retardation becomes small as the wavelength is shorter. As the film having this reverse wavelength dispersion property, there has been known a retardation film using the aforementioned specific polycarbonate or the like.

In these materials, however, since the photo-elastic coefficient is large or the absolute value of the retardation is small, there have been restrictions on the range of applications when such materials have been put into practical use.

Furthermore, as the retardation film having a small photo-elastic coefficient, there has been known a cycloolefin based retardation film, but there has been room for improvement from the fact that reverse wavelength dispersion characteristics are not achieved.

In response to this, in this embodiment, reverse wavelength dispersion is achieved in a region of light strongly felt by eyes almost in a visible light region due to the constitution illustrating the above formulae (4-4) and (4-5), thus giving a retardation film useful almost in a whole region of the wavelength which is important for display.

Meanwhile, the change in the polarizing state almost in a whole region of the wavelength which is important for display (for example, from 400 to 700 nm) is almost constant. From the viewpoint of a much ideal constitution as a retardation film, the in-plane retardation Re(450) at a wavelength of 450 nm, the in-plane retardation Re(550) at a wavelength of 550 nm and the in-plane retardation Re(650) at a wavelength of 650 nm of the retardation film A may be constituted to satisfy the relationships of,

$$\text{Re}(450)/\text{Re}(550) < 0.82$$

$$\text{Re}(650)/\text{Re}(550) > 1.12$$

The in-plane retardation Re (450) at a wavelength of 450 nm, the in-plane retardation Re(550) at a wavelength of 550 nm and the in-plane retardation Re(650) at a wavelength of 650 nm of the retardation film A1 or A2 may be constituted to satisfy the relationship of,

$$0.70 \leq \text{Re}(450)/\text{Re}(550) < 0.90$$

In this way, the retardation film A can be constituted to exhibit reversible wavelength in a short wavelength side. Accordingly, a color shift in a short wavelength side can be further effectively suppressed.

Furthermore, from the viewpoint of further effectively suppressing a color shift in a long wavelength side, it is preferable that the retardation film A is constituted to exhibit reversible wavelength in a long wavelength side. Specifically, the retardation film A can be constituted to satisfy,

$$1.05 < Re(650)/Re(550) < 1.20.$$

Meanwhile, in the laminate 2110, the absolute value of the in-plane retardation Re(550) at a wavelength of 550 nm of the retardation film A1 or A2 may be within a range of,

$$10 \ nm \leq |Re(550)| \leq 80 \ nm$$

In this case, there is no need to employ expensive fluorenyl group-containing polycarbonate or the like as the retardation film A, while the retardation film A can be constituted with poly-4-methylpentene-1 or its copolymer which is at relatively low cost, stable and easily handled.

Furthermore, in the laminate 2110, the absolute value of the in-plane retardation Re(550) at a wavelength of 550 nm of the retardation film A1 or A2 may be within a range of,

$$15 \ nm \leq |Re(550)| \leq 45 \ nm$$

The retardation film A is constituted with a material having a small retardation such as poly-4-methylpentene-1 or the like as long as such retardation is small and a stretching ratio of poly-4-methylpentene-1 can be further decreased. So, there is no need to stretch poly-4-methylpentene-1 with a technically high hurdle and at high magnifications. Accordingly, as the retardation film A, it is possible to employ a material making the production much easier, and the production efficiency of the whole laminate 2110 can be enhanced.

Furthermore, in this embodiment, any of the retardation films A1 and A2 may have negative birefringence. In this way, the intensity of leak light in the dark state can be greatly reduced.

In the following embodiment, points different from the first embodiment will be mainly explained. Incidentally, unless otherwise particularly mentioned, preferred embodiments of the first embodiment can also be applied to the following embodiments as preferred embodiments.

(Second Embodiment)

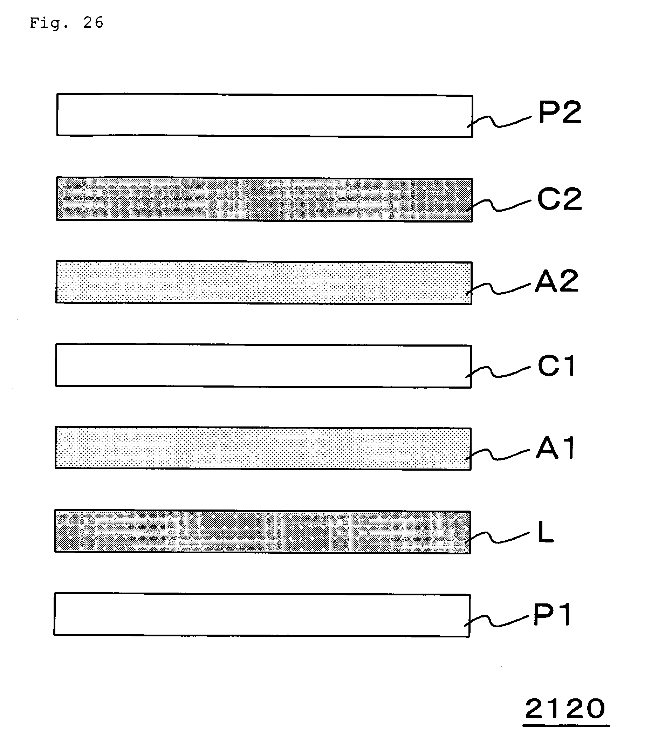

This embodiment is a modified example of the laminate of the first embodiment. Fig. 26 is a cross-sectional view schematically illustrating the constitution of a laminate according to this embodiment. The basic constitution of the laminate 2120 illustrated in Fig. 26 is the same as the laminate (first embodiment) illustrated in Fig. 24, but the retardation film C2 satisfying the following formula (4-8) is further included in addition to the retardation film C1 satisfying the above formula (4-3) as the retardation film C,

$$nz > nx \geq ny \quad (4-8)$$

The retardation film C2 functions as a +C type retardation film. As the retardation film C1, there can be used those cited above as the retardation film C in the first embodiment.

Furthermore, as the material of the retardation film C2, there can be exemplified, for example, a VA type liquid crystal in which the liquid crystal is vertically aligned in a glass substrate having the same retardation as the liquid crystal cell L.

The laminate 2120 contains two pieces of the retardation films C (C1 and C2) and two pieces of the retardation films A (A1 and A2), while the liquid crystal cell L, the retardation films A1 and A2, and the retardation films C1 and C2 are arranged in the order of L, A1, C1, A2 and C2. Incidentally, this arrangement is not restricted to a case in which adjacent portions of L, A1, C1, A2 and C2 are actually physically adhered, but includes a case in which a layer substantially free from the retardation may be intervened between L and A1, A1 and C1, C1 and A2, or A2 and C2.

Incidentally, in Fig. 26, the arrangement in the order of P1, L, A1, C, A2, C2 and P2 is exemplified, but P1 and P2 may be reversely arranged.

In this arrangement, the effect of action is obtained in the same manner as in the first embodiment.

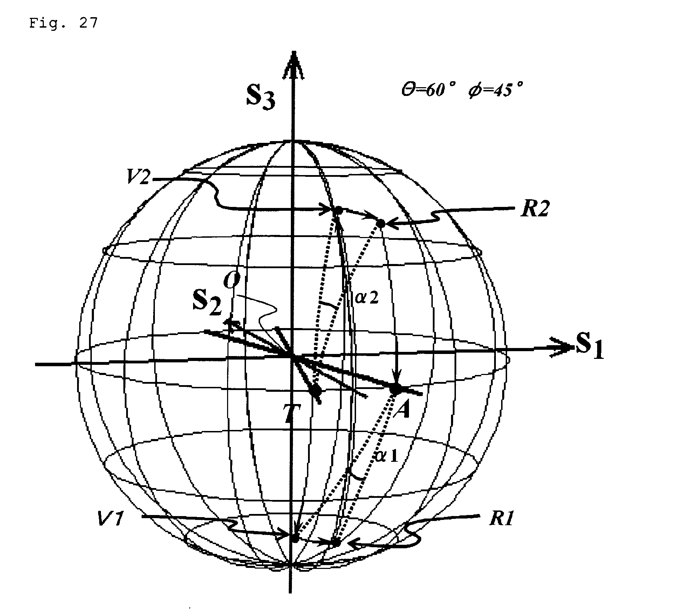

Fig. 27 is a view illustrating the change in the polarizing state in the laminate 2120. Fig. 27 is a view representing the Poincaré sphere taking the viewing angle of θ=60° and the azimuth angle of φ=45° as an example.

In Fig. 27, the polarizing state is represented by T on the Poincaré sphere equator when light passes through the first polarizing film P1. The light moves to the point V1 on the arctic side by passing through the liquid crystal cell L, and further moves to the point R1 by rotating the light counterclockwise around OA as a rotating center just as much as the rotating angle α1 by the first retardation film A1. Next, the light goes north to the point of symmetry V2 interposed between R1 and the equator, and positioned at the northern hemisphere side by the retardation film C1 (-C). Furthermore, the light is rotated around OT as a rotating center just as much as the rotating angle α2 by the retardation film A2 to rotate clockwise to R2. Finally, the light goes down south to the equator and is aligned with the point A that is the absorption direction of the polarizing film P2 by the retardation film C2 (+C).

In this way, viewing angle characteristics can be further enhanced by making the movement of the polarizing state to be symmetrical movement sandwiching the equatorial plane even when the viewing angle is large.

Furthermore, in the laminate 2120, the retardation film is arranged in the order of the retardation film A, the retardation film C, the retardation film A and the retardation film C toward the polarizing film P from the liquid crystal cell L. Thus, in addition to the laminate 2110 illustrated in Fig. 24, since any of rotating radius (point A-point V1 and point T-point V2) on the Poincaré sphere in the retardation films A1 and A2 is further large, the retardation of the retardation film A necessary for compensation can be made smaller. Accordingly, the degree of freedom for the selection of the material of the retardation film A can be enhanced. Furthermore, since the thickness of the retardation film A can be further reduced, the thickness of the entire laminate can be reduced.

In this way, the laminate 2120 exhibits high symmetry property of the locus of the polarizing state by sandwiching an equator on the Poincaré sphere and the locus moves with good symmetry property with respect to a meridian passing through the center between the points A and T as well, excellent characteristics with low intensity of leak light even at a high viewing angle can be further expected.

Incidentally, in this embodiment, for example, of the retardation films, any of the retardation film A1 and the retardation film A2 may have negative birefringence. In this way, the intensity of leak light in the dark state can be greatly reduced.

Also, in this embodiment, at least one of the retardation film A1 and the retardation film A2 is constructed to exhibit reverse wavelength dispersion, whereby a color shift can be further decreased in the same manner as in the first embodiment.

(Third Embodiment)

This embodiment relates to a liquid crystal display element equipped with the laminate as described in the above embodiment. Hereinafter, a case using the laminate of the second embodiment is explained as an example.

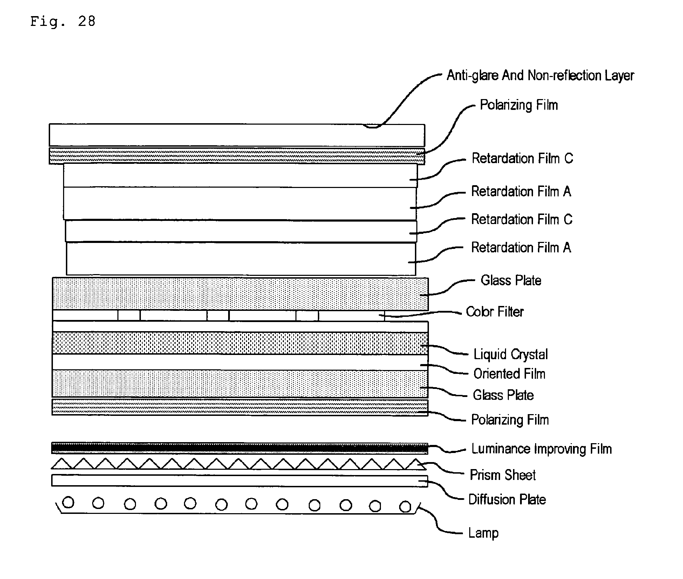

Fig. 28 is a view illustrating the constitution of a liquid crystal display element according to this embodiment. The liquid crystal display element illustrated in Fig. 28 is, for example, a transmittance liquid crystal display element, and provided with a laminate 2120, a backlight, a color filter, a voltage application means (not illustrated) and the like.

The liquid crystal display element illustrated in Fig. 28 is further specifically constructed such that a lamp, a diffusion plate, a prism sheet, a luminance improving film, a polarizing film, a glass plate, an oriented film, a liquid crystal, a color filter, a glass plate, the retardation film A, the retardation film C, the retardation film A, the retardation film C, a polarizing film, and an anti-glare and non-reflection layer are laminated in this order from the bottom. The laminate 2120 is constructed with the liquid crystal, the retardation film A, the retardation film C, the retardation film A and the retardation film C.

The liquid crystal cell L is, for example, a vertically aligned (VA) type liquid crystal cell. At this time, in the liquid crystal layer in the liquid crystal cell L, a long axis of the liquid crystal molecule is oriented practically in a direction perpendicular to a surface of the substrate of the liquid crystal cell L when a voltage is not applied. However, the liquid crystal cell L is not restricted to a VA-type liquid crystal cell, and it may be, for example, an iPS (In-Plane Switching) type liquid crystal cell and the like.

When the liquid crystal cell L is a VA-type liquid crystal cell, at least one piece of the retardation film -C must be used in order to compensate the retardation of the liquid crystal caused at an oblique viewing angle from the fact that the VA liquid crystal is equivalent to the retardation film +C. When the constitution of the laminate in the aforementioned embodiment is applied to the VA-type liquid crystal cell L, there is a merit that the function of this retardation film -C can be effectively used for labor saving.

The backlight is arranged facing the polarizing film P1 or the polarizing film P2 in the laminate 2120, and provided with a light source (a lamp) and a light-guiding plate (a diffusion plate or a prism sheet).

The color filter is arranged between the polarizing film P1 or the polarizing film P2 and the liquid crystal cell L.

The voltage application means applies voltage to electrodes formed on the substrate constituting the liquid crystal cell L in the laminate 2120.

Incidentally, in Fig. 28, the constitution of the laminate 2120 (second embodiment) illustrated in Fig. 26 is exemplified, but the liquid crystal display element according to this embodiment may be constructed to have the laminate 2110 (first embodiment) illustrated in Fig. 24. Furthermore, the liquid crystal display element may be any of a transmittance type, a reflection type or a semi-transmittance type.

Also, in this embodiment, at least one piece of the retardation films A is constructed to exhibit reverse wavelength dispersion, whereby a color shift can be further decreased in the same manner as in the first embodiment.

As described above, embodiments of the fourth invention have been described with reference to the drawings, but they are examples of the fourth invention and various constitutions other than those described above can also be adopted.

The present invention can have the following embodiments:

(1-1) a method of compensating the wavelength dependence of birefringence of an optical element (B) which comprises using a film (a) made of a (co) polymer ($\alpha$) obtained from at least one olefin selected among 4-methyl-1-pentene, 3-methyl-1-pentene and 3-methyl-1-butene as a (co)monomer ingredient;

(1-2) the method of compensating the wavelength dependence of birefringence as set forth in (1-1), in which the aforementioned optical part (B) is a light-transmitting film (b1);

(1-3) the method of compensating the wavelength dependence of birefringence as set forth in (1-2), in which the aforementioned film (a) made of a (co)polymer ($\alpha$) and the aforementioned light-transmitting film (b1) are directly laminated or laminated through an adhesive layer;

(1-4) the method of compensating the wavelength dependence of birefringence as set forth in (1-2) or (1-3), in which the aforementioned light-transmitting film (b1) is a polarizing plate protective film;

(1-5) the method of compensating the wavelength dependence of birefringence as set forth in (1-2) or (1-3), in which the aforementioned light-transmitting film (b1) is a retardation plate;

(1-6) the method of compensating the wavelength dependence of birefringence as set forth in (1-2) or (1-3), in which the aforementioned light-transmitting film (b1) is an optical compensation film;

(1-7) the method of compensating the wavelength dependence of birefringence as set forth in (1-1), in which the aforementioned optical part (B) is a liquid crystal panel (b2);

(1-8) the method of compensating the wavelength dependence of birefringence as set forth in (1-7), in which the aforementioned film (a) made of a (co)polymer ($\alpha$) and the aforementioned liquid crystal panel (b2) are directly laminated or laminated through an adhesive layer;

(1-9) a display device obtained by using the method of compensating the wavelength dependence of birefringence as set forth in any one of (1-1) to (1-8);

(1-10) an optical element comprising at least one layer of the film (a) made of a (co) polymer ($\alpha$) obtained from at least one olefin selected among 4-methyl-1-pentene, 3-methyl-1-pentene and 3-methyl-1-butene as a (co)monomer ingredient;

(1-11) the optical element as set forth in (1-10), wherein the aforementioned optical element is a retardation plate;

(1-12) an elliptical polarizing plate or a circular polarizing plate, comprising the retardation plate as set forth in (1-11) and a polarizing plate;

(1-13) the elliptical polarizing plate or the circular polarizing plate as set forth in (1-12), further comprising an adhesive resin layer;

(1-14) the optical element as set forth in (1-10), wherein the optical element is an anti-reflection film, a transparent conductive substrate, a diffusion sheet, a light collection sheet, an optical compensation film or a polarizing plate;

(1-15) an display device having the optical element a set forth in any one of (1-10), (1-11) and (1-14),

(2-1) a copolymer of 4-methyl-1-pentene with $\alpha$-olefin having not less than 10 and not more than 14 carbon atoms other than the aforementioned 4-methyl-1-pentene, wherein the proportion of the structural unit derived from the aforementioned $\alpha$-olefin to the total copolymer is from not less than 1 and not more than 9 % by mole;

(2-2) a film comprising the copolymer as set forth in (2-1);

(2-3) the film as set forth in (2-2), wherein the film is molded by a melt extrusion molding method and then obtained by stretching and aligning;

(2-4) the film as set forth in (2-2) or (2-3), wherein the film is used for optical purposes;

(2-5) the film as set forth in any one of (2-2) to (2-4), wherein the film is a retardation plate;

(2-6) the film as set forth in (2-5), wherein the retardation $R_{50}(590)$ at a wavelength of 590 nm per a thickness of 50 $\mu$m of the aforementioned retardation plate satisfies the following condition,

$$R_{50}(590) \leq -22 \text{ nm;}$$

(2-7) the film as set forth in (2-5) or (2-6), wherein the aforementioned retardation plate is a retardation film satisfying the following characteristics,

$$R(450)/R(590) \leq 0.9$$

wherein, in the above formula, R(450) and R(590) each represent the retardation of the aforementioned retardation film at wavelengths of 450 nm and 590 nm; and
(2-8) the film as set forth in any one of (2-2) to (2-5), wherein the film is a polarizing protective film or an optical compensation film.

EXAMPLES

The present invention is now illustrated in detail below with reference to Examples and Comparative Examples. Incidentally, the present invention is not restricted to these Examples illustrated below in any sense.
In the following Examples A1 to A3, Comparative Examples A1 and A2, the retardation of the film was measured by using a measurement device, RETS-100, a product of Otsuka Electronics Co., Ltd. In the device, using a polarization optical system, the retardation (retardation at an oblique angle of 0°) of a sample was obtained by performing polarization analysis after passing through the sample.

(Preparation of $\lambda/4$ plate composed of 4-methyl-1-pentene copolymer)

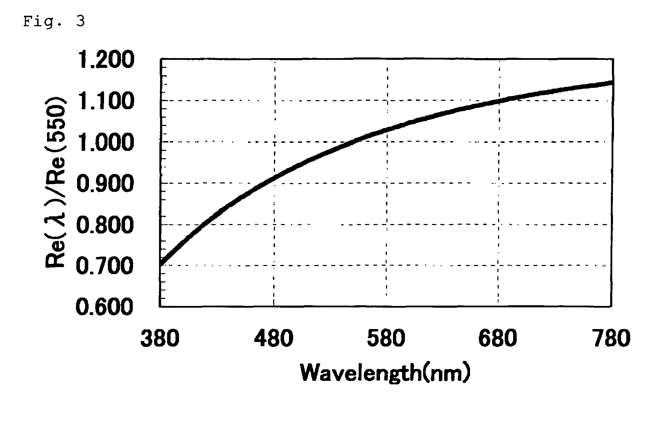

Using a TPX resin (name: MX020, MFR: 23 to 30 g/10 min, refractive index: 1.463, melting point: 230 degrees centigrade) manufactured by Mitsui Chemicals, Inc. that was a copolymer obtained from 4-methyl-1-pentene, melt extrusion molding was carried out under the condition of a cylinder temperature of 300 degrees centigrade with a single screw extruder (diameter: 40 mm) to prepare a film having a film thickness of 640 $\mu$m. The wavelength dependence of the in-plane retardation of this film was measured and as a result, the retardation Re(550) at a wavelength of 550 nm was normalized to 1 and shown in Fig. 3.
From Fig. 3, R(450)/R(590) was 0.85.
Subsequently, this film was stretched by 2 times in the transverse direction (TD direction) of the film using a drawing machine, whereby a uniaxially stretched film having a film thickness of 320 $\mu$m was prepared. The stretching temperature was adjusted such that the in-plane retardation at a wavelength of 589 nm of the uniaxially stretched film obtained at this time was to be $\lambda/4$ (589 nm/4 = 147 nm) and as a result, 148 nm of the retardation at a stretching temperature of 180 degrees centigrade was obtained.
The retardation at each wavelength of this film is shown in Table 1.
Furthermore, the retardation of this film was as follows.
In-plane retardation at a wavelength of 550 nm: $|R_{550}|$ = 132 nm

$$R(450)/R(590) = 0.6$$

wherein, R(450) and R(590) were each the in-plane retardations at wavelengths of 450 nm and 590 nm.
In-plane retardation at a wavelength of 590 nm per a thickness of 50 $\mu$m: $|R_{50}(590)|$ = 23 nm

(Preparation of $\lambda/4$ plate composed of cyclic polyolefin)

Using an APEL resin (name: 8008T, MFR: 15 g/10 min, refractive index: 1.54, Tg: 70 degrees centigrade) manufactured by Mitsui Chemicals, Inc. that was cyclic polyolefin, melt extrusion molding was carried out under the condition of a cylinder temperature of 260 degrees centigrade with a single screw extruder (diameter: 40 mm) to prepare a film having a film thickness of 150 $\mu$m.
Subsequently, this film was stretched by 3 times in the transverse direction (TD direction) of the film using a drawing machine, whereby a uniaxially stretched film having a film thickness of 50 $\mu$m was prepared. The stretching temperature was adjusted such that the in-plane retardation at a wavelength of 589 nm of the uniaxially stretched film obtained at this time was to be λ/4 (589 nm/4 = 147 nm) and as a result, 148 nm of the retardation at a stretching temperature of 80 degrees centigrade was obtained. The retardation at each wavelength of this film is shown in Table 1.

Example A1

Two pieces of polarizing plates were prepared, and the transmission axes were repeatedly set to be orthogonal to each other. Next, one λ/4 plate composed of a 4-methyl-1-pentene copolymer and one λ/4 plate composed of cyclic polyolefin were each repeatedly set to be parallel to each other to construct a λ/2 plate which was subsequently interposed between polarizing plates such that the phase lag axis became 45° to the transmission axis of the polarizing plate. These plates were put on a planar light source and the transmitted light was observed and as a result, it was white. The retardation at each wavelength of the λ/2 plate used in this Example is shown in Table 1.

Comparative Example A1

A λ/4 plate composed of cyclic polyolefin was interposed instead of the λ/4 plate composed of the 4-methyl-1-pentene (co)polymer of Example A1. The transmitted light was observed in the same manner and as a result, it was pale yellow. The retardation at each wavelength of the λ/2 plate used in this Comparative Example is shown in Table 1.

Comparative Example A2

A λ/4 plate composed of polycarbonate (a product of Teijin Chemicals Ltd., PURE-ACE kind: T-138) was interposed instead of the λ/4 plate composed of the 4-methyl-1-pentene (co)polymer of Example A1. The transmitted light was observed in the same manner and as a result, it was pale yellow green. The retardation at each wavelength of the λ/2 plate used in this Comparative Example is shown in Table 1.

[Table 1]

| Wavelength | 656 nm ($n_C$) | 589 nm ($n_D$) | 486 nm ($n_F$) |
|---|---|---|---|
| λ/4 plate composed of 4-methyl-1-pentene | 169 nm | 148 nm | 97 nm |
| λ/4 plate composed of cyclic polyolefin | 148 nm | 148 nm | 149 nm |
| λ/4 plate composed of polycarbonate | 135 nm | 138 nm | 146 nm |
| λ/2 value of each wavelength (reference value) | 328 nm | 295 nm | 243 nm |
| Example A1 | 317 nm | 296 nm | 246 nm |
| Comparative Example A1 | 295 nm | 296 nm | 297 nm |
| Comparative Example A2 | 283 nm | 286 nm | 294 nm |

Example A2

Using a homopolymer of 4-methyl-1-pentene (MFR: 40 to 50 g/10 min, refractive index: 1.463, melting point: 238 degrees centigrade), melt extrusion molding was carried out under the condition of a cylinder temperature of 300 degrees centigrade with a single screw extruder (diameter: 20 mm) to prepare a film having a film thickness of 184 μm. Subsequently, this film was stretched by 6 times in the machine direction (MD direction) of the film at a stretching temperature of 220 degrees centigrade using a drawing machine, whereby a uniaxially stretched film having a film thickness of 31 μm was prepared.

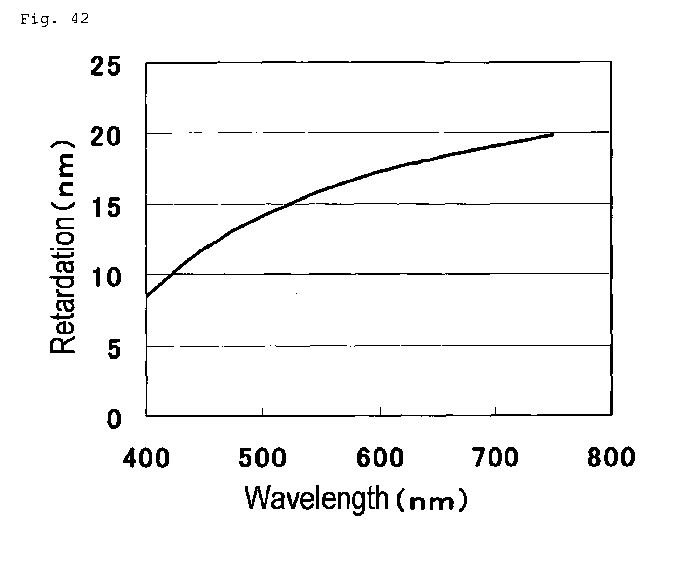

The absolute value of the retardation at each wavelength of this film is shown in Fig. 42. Incidentally, "retardation" in the figure refers to the absolute value of the retardation.

Furthermore, the retardation of this film was as follows.

Absolute value of in-plane retardation at a wavelength of 550 nm: $|R_{550}| = 16$ nm

$$R(450)/R(590) = 0.69$$

wherein, R(450) and R(590) were each the in-plane retardations at wavelengths of 450 nm and 590 nm.

Absolute value of in-plane retardation at a wavelength of 590 nm per a thickness of 50 $\mu$m: $|R_{50}(590)| = 27$ nm

The film had large absolute value of the retardation caused by birefringence as the wavelength was longer and was suitable for compensating the wavelength dependence of birefringence of the optical element.

(Example A3)

Using a homopolymer of 4-methyl-1-pentene (MFR: 40 to 50 g/10 min, refractive index: 1.463, melting point: 238 degrees centigrade), melt extrusion molding was carried out under the condition of a cylinder temperature of 300 degrees centigrade with a single screw extruder (diameter: 20 mm) to prepare a film having a film thickness of 184 $\mu$m. Subsequently, this film was stretched by 5 times in the machine direction (MD direction) of the film at a stretching temperature of 160 degrees centigrade using a drawing machine, whereby a uniaxially stretched film having a film thickness of 35 $\mu$m was prepared.

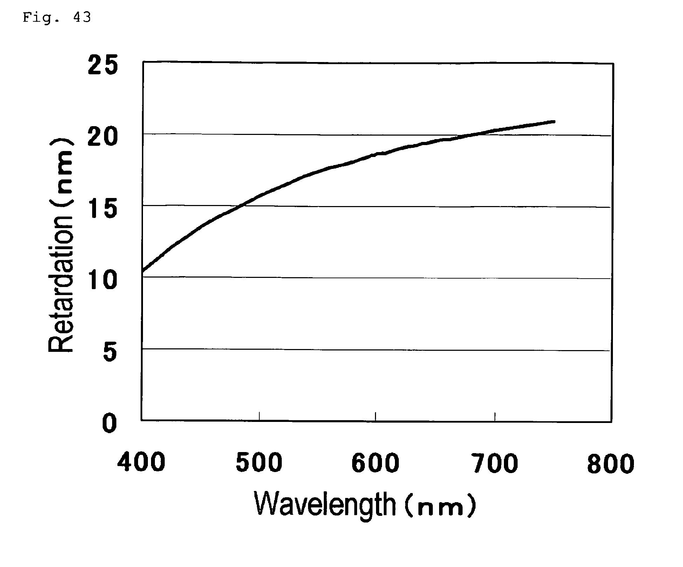

The absolute value of the retardation at each wavelength of this film is shown in Fig. 43. Incidentally, "retardation" in the figure refers to the absolute value of the retardation.

Furthermore, the retardation of this film was as follows.

Absolute value of in-plane retardation at a wavelength of 550 nm: $|R_{550}| = 17$ nm

$$R(450)/R(590) = 0.74$$

wherein R(450) and R(590) were each the in-plane retardations at wavelengths of 450 nm and 590 nm.

Absolute value of in-plane retardation at a wavelength of 590 nm per a thickness of 50 $\mu$m: $|R_{50}(590)| = 26$ nm

The film had large absolute value of the retardation caused by birefringence as the wavelength was longer and was suitable for compensating the wavelength dependence of birefringence of the optical element.

In the following Examples and Reference Examples, general characteristics of the obtained films were measured in the following manner.

Composition of copolymer:

Quantitative analysis of the content of 4-methyl-1-pentene and $\alpha$-olefin was measured under the following conditions using a nuclear magnetic resonance apparatus, Mercury-400 model, manufactured by Varian, Inc.

Solvent: mixed solvent of deuterated benzene/o-dichlorobenzene

Sample concentration: 50 to 100 g/l-solvent

Inter pulse period: 5.5 seconds

Integration frequency: 6,000 to 16,000 times

Measurement temperature: 120 degrees centigrade

Composition of 4-methyl-1-pentene and $\alpha$-olefin was quantitatively analyzed by $^{13}$C-NMR spectra measured under the above conditions.

Intrinsic viscosity [$\eta$] of copolymer: Using a moving viscometer (Type VNR053U Model manufactured by Rigo Co., Ltd.), the specific viscosity of a sample, which was obtained by dissolving 0.25 to 0.30 g of a resin in 25 ml of decalin, was measured at 135 degrees centigrade in accordance with ASTM J1601, and the concentration was extrapolated to 0 to determine the ratio of the specific viscosity to the concentration as the intrinsic viscosity [$\eta$].

Melting point (Tm) and amount of melting heat of copolymer: The melting point (Tm) was measured under a $N_2$ (nitrogen) atmosphere using DSC-220C, a product of Seiko Instruments Inc. The copolymer was heated from room temperature to 270 degrees centigrade at a temperature increase rate of 50 degrees centigrade/min and then allowed to stand for 5 minutes, and subsequently cooled to -50 degrees centigrade at a temperature decrease rate of 10 degrees centigrade/min and allowed to stand for 5 minutes. A temperature of an endothermic peak was obtained when the temperature was elevated to 270 degrees centigrade at a temperature increase rate of 10 degrees centigrade/min. The amount of melting heat per the unit weight was obtained from the endothermic peak area.

Film thickness: The film thickness of the film was measured using a micrometer.

Retardation of film: The retardation of the film was measured by using a measurement device, RETS-100, a product of Otsuka Electronics Co., Ltd. In the device, using a polarization optical system, the retardation (retardation at an oblique angle of 0°) of a sample was obtained by performing polarization analysis after passing through the sample.

Example B1

(Preparation of solid titanium catalyst component)

A solid titanium catalyst component used for polymerization of a poly-4-methyl-1-pentene resin composition of this Example was prepared in the following manner.

750 g of anhydrous magnesium chloride, 2,800 g of decane and 3,080 g of 2-ethylhexyl alcohol were reacted under heating at 130 degrees centigrade for 3 hours to give a homogeneous solution. Then, to the solution was added 220 ml of 2-isobutyl-2-isopropyl-1,3-dimethoxypropane, and the mixture was stirred at 100 degrees centigrade for 1 hour. The homogeneous solution thus obtained was cooled to room temperature and the total amount of 3,000 ml of the homogeneous solution was added dropwise to 800 ml of titanium tetrachloride, which was kept at -20 degrees centigrade, under stirring over a period of 45 minutes. After completion of the dropwise addition, the temperature of the resulting mixture was elevated to 110 degrees centigrade over a period of 4.5 hours. When the temperature reached 110 degrees centigrade, to the mixture was added 5.2 ml of 2-isobutyl-2-isopropyl-1,3-dimethoxypropane, which was then maintained under stirring for 2 hours at the same temperature. After completion of the 2-hour reaction, the mixture was hot filtered to separate a solid. The solid was resuspended in 1,000 ml of titanium tetrachloride, and the resulting suspension was again heated at 110 degrees centigrade for 2 hours to carry out a reaction. After completion of the reaction, the mixture was again hot filtered to separate a solid. The solid was thoroughly washed with decane and hexane at 90 degrees centigrade until no free titanium compound was detected in the wash liquid. The solid titanium catalyst component prepared by the above process was stored as a decane slurry, but a part thereof was dried for the purpose of examining the catalyst composition. The catalyst component thus obtained had a composition comprising 3.0 % by weight of titanium, 17.0 % by weight of magnesium, 57 % by weight of chlorine, 18.8 % by weight of 2-isobutyl-2-isopropyl-1,3-dimethoxypropane and 1.3 % by weight of 2-ethylhexyl alcohol.

(Preparation method of 4-methyl-1-pentene copolymer)

To a polymerization reactor with a capacity of 130 L were added 100 L of decane, 27 kg of 4-methyl-1-pentene, 1,300 g of DIALEN 124 (a mixture of 1-dodecene and 1-tetradecene, a product of Mitsubishi Chemical Corp.), 6.75 L of hydrogen, 67.5 mmol of triethylaluminum and 2.7 mmol (in terms of titanium atom) of the catalyst obtained by preliminarily polymerizing 3-methyl-1-pentene at room temperature. The temperature of the polymerization reactor inside was elevated to 60 degrees centigrade for maintaining the temperature. After completion of the polymerization for 6 hours, powders were taken out from the polymerization reactor, filtered, and then washed with hexane to obtain a powder-like poly-4-methyl-1-pentene copolymer. The yield of the obtained polymer was 26 kg.

In the obtained copolymer, the content of the structural unit derived from the comonomer, i.e., DIALEN 124 was 2.5 % by mole, the intrinsic viscosity [η] was 2.4 dl/g, the melting point was 229 degrees centigrade, and the amount of melting heat was 32.0 J/g.

A conventionally known neutralizing agent and a phenol based anti-oxidant were added to the resulting powder-like poly-4-methyl-1-pentene copolymer obtained by the above-mentioned polymerization, mixed using a Henschel mixer and melt-kneaded using an extruder at 290 degrees centigrade to obtain pellets. The resulting pellets had a melt flow rate of 29 g/10 min.

Using these pellets, melt extrusion molding was carried out under the conditions of a cylinder temperature at 300 degrees centigrade and a cast roll temperature at 30 degrees centigrade with a single screw extruder (diameter: 40 mm) to prepare a film having a film thickness of 150 μm. Subsequently, this film was stretched by about 3 times in the transverse direction (TD direction) of the film at a temperature of 160 degrees centigrade using a drawing machine, whereby a uniaxially stretched film having a film thickness of 50 μm was prepared.

The evaluation results of optical characteristics of the resulting uniaxially stretched film are shown in Table 2 along with the copolymer composition.

Example B2

A copolymer and a film having a thickness of 50 μm were prepared in accordance with Example B1 by taking 1-decene for a comonomer.

In the resulting copolymer, the comonomer content was 1.8 % by mole, the intrinsic viscosity [η] was 2.5 dl/g, the melting point was 235 degrees centigrade, and the amount of melting heat was 36.1 dl/g. The evaluation results of optical characteristics of the resulting uniaxially stretched film are shown in Table 2 along with the copolymer composition.

Example B3

A copolymer and a film having a thickness of 50 $\mu$m were prepared in accordance with Example B1 by taking 1-decene for a comonomer.
In the resulting copolymer, the comonomer content was 3.5 % by mole, MFR was 31 g/10 min, the refractive index (nD) was 1.463, the intrinsic viscosity [$\eta$] was 2.6 dl/g, the melting point was 231 degrees centigrade, and the amount of melting heat was 31.9 J/g. The evaluation results of optical characteristics of the resulting uniaxially stretched film are shown in Table 2 along with the copolymer composition.

Example B4

A copolymer and a film having a thickness of 50 $\mu$m were prepared in accordance with Example B1 by taking 1-decene for a comonomer.
In the resulting copolymer, the comonomer content was 4.1 % by mole, the intrinsic viscosity [$\eta$] was 2.6 dl/g, the melting point was 228 degrees centigrade, and the amount of melting heat was 30.5 J/g. The evaluation results of optical characteristics of the resulting uniaxially stretched film are shown in Table 2 along with the copolymer composition.

Example B5

A copolymer and a film having a thickness of 50 $\mu$m were prepared in accordance with Example B1 by taking 1-decene for a comonomer.
In the resulting copolymer, the comonomer content was 7.2 % by mole, the intrinsic viscosity [$\eta$] was 2.6 dl/g, the melting point was 226 degrees centigrade, and the amount of melting heat was 23.0 dl/g. The evaluation results of optical characteristics of the resulting uniaxially stretched film are shown in Table 2 along with the copolymer composition.

Example B6

4-methyl-1-pentene free from a comonomer and a film having a thickness of 50 $\mu$m using 4-methyl-1-pentene were prepared in accordance with Example B1.
In the resulting polymer, the intrinsic viscosity [$\eta$] was 2.0 dl/g, the melting point was 240 degrees centigrade, and the amount of melting heat was 45.1 J/g. The evaluation results of optical characteristics of the resulting uniaxially stretched film are shown in Table 3 along with the copolymer composition.

Example B7

A copolymer and a film having a thickness of 50 $\mu$m were prepared in accordance with Example B1 by taking 1-octene for a comonomer.
In the resulting copolymer, the comonomer content was 5.0 % by mole, the intrinsic viscosity [$\eta$] was 2.4 dl/g, the melting point was 231 degrees centigrade, and the amount of melting heat was 38.1 J/g. The evaluation results of optical characteristics of the resulting uniaxially stretched film are shown in Table 3 along with the copolymer composition.

Example B8

A copolymer and a film having a thickness of 50 $\mu$m were prepared in accordance with Example B1 by taking 1-octene for a comonomer.
In the resulting copolymer, the comonomer content was 10.0 % by mole, the intrinsic viscosity [$\eta$] was 2.2 dl/g, the melting point was 220 degrees centigrade, and the amount of melting heat was 32.9 J/g. The evaluation results of optical characteristics of the resulting uniaxially stretched film are shown in Table 3 along with the copolymer composition.

Example B9

A copolymer and a film having a thickness of 50 $\mu$m were prepared in accordance with Example B1 by taking DIALEN168 (a mixture of 1-hexadecene and 1-octadecene, a product of Mitsubishi Chemical Corp.) for a comonomer.
In the resulting copolymer, the comonomer content was 2.4 % by mole, the intrinsic viscosity [$\eta$] was 2.2 dl/g, the melting point was 224 degrees centigrade, and the amount of melting heat was 34.7 J/g. The evaluation results of optical characteristics of the resulting uniaxially stretched film are shown in Table 3 along with the copolymer composition.

Example B10

A copolymer and a film having a thickness of 50 $\mu$m were prepared in accordance with Example B1 by taking 1-decene for a comonomer.
In the resulting copolymer, the comonomer content was 15.0 % by mole, the intrinsic viscosity [η] was 2.5 dl/g, the melting point was 209 degrees centigrade, and the amount of melting heat was 2.5 J/g. The evaluation results of optical characteristics of the resulting uniaxially stretched film are shown in Table 3 along with the copolymer composition.
[Table 2]

|  | Example B1 | Example B2 | Example B3 | Example B4 | Example B5 |
|---|---|---|---|---|---|
| Comonomer | DIALEN124 | 1-decene | 1-decene | 1-decene | 1-decene |
| Content (% by mole) | 2.5 | 1.8 | 3.5 | 4.1 | 7.2 |
| Intrinsic viscosity [η] (dl/g) | 2.4 | 2.5 | 2.6 | 2.6 | 2.6 |
| DSC-Tm (°C) | 229 | 235 | 231 | 228 | 226 |
| Amount of melting heat (J/g) | 32.0 | 36.1 | 31.9 | 30.5 | 23.0 |
| $Re_{50}(590)$ | -24 | -24 | -25 | -30 | -28 |
| R(450)/R(590) | 0.85 | 0.76 | 0.80 | 0.82 | 0.83 |
| R(650)/R(590) | 1.08 | 1.08 | 1.05 | 1.04 | 1.04 |

[Table 3]

|  | Example B6 | Example B7 | Example B8 | Example B9 | Example B10 |
|---|---|---|---|---|---|
| Comonomer | - | 1-octene | 1-octene | DIALEN168 | 1-decene |
| Content (% by mole) | - | 5.0 | 10.0 | 2.4 | 15.0 |
| Intrinsic viscosity [η] (dl/g) | 2.0 | 2.4 | 2.2 | 2.2 | 2.5 |
| DSC-Tm (°C) | 240 | 231 | 220 | 224 | 209 |
| Amount of melting heat (J/g) | 45.1 | 38.1 | 32.9 | 34.7 | 2.5 |
| $Re_{50}(590)$ | -21 | -20 | -20 | -19 | -13 |
| R(450)/R(590) | 0.94 | 0.80 | 0.86 | 0.81 | 0.76 |
| R(650)/R(590) | 0.94 | 1.05 | 1.08 | 1.03 | 1.05 |

From the results shown in Table 2, all films of Examples B1 to B5 were particularly excellent in a balance of the retardation at 590 nm, R(450)/R(590) and heat resistance, and exhibited particularly sufficient birefringence and reverse wavelength dispersion characteristics. Furthermore, all films of Example B1 to B10 had transparency sufficient for optical applications.
Meanwhile, from Table 3, all films of Examples B1 to B5 exhibited more sufficient birefringence as compared to the film of Example B6 free from α-olefin.
Furthermore, all films of Examples B1 to B5 exhibited more sufficient heat resistance and birefringence as compared to the film of Example B10 having large percentage of α-olefin.
Further, all films of Examples B1 to B5 exhibited more sufficient birefringence as compared to the films of Examples B7 and B8 with 8 carbon atoms of α-olefin.
Further, all films of Examples B1 to B5 exhibited more sufficient birefringence as compared to the film of Example B9 with 16 and 18 carbon atoms of α-olefin.
The second invention will be described in detail with reference to Examples and Reference Examples below. Incidentally, the second invention is not restricted to the Examples illustrated below in any sense.

(Film (A))

Using a copolymer (Molar ratio = 95:5, MFR: 27 g/10 min, melting point: 230 degrees centigrade, glass transition temperature: 15 degrees centigrade, average refractive index: 1.46, and water absorption percentage: less than 0.01%) of 4-methyl-1-pentene with monomers having 12 carbon atoms and 14 carbon atoms (Molar ratio: 12 carbon atoms:14 carbon atoms = 50:50), melt extrusion molding was carried out under the conditions of a cylinder temperature of 300 degrees centigrade and a cast roll temperature of 30 degrees centigrade with a single screw extruder (diameter: 40 mm) to prepare a film having a film thickness of 200 $\mu$m. Subsequently, this film was longitudinally uniaxially stretched at a temperature at 160 degrees centigrade using a drawing machine to give a film (A) having a film thickness of 100 $\mu$m.

(Film (B))

Using a random copolymer (Molar ratio = 94:6, MFR: 22 g/10 min, melting point: 230 degrees centigrade, glass transition temperature: 10 degrees centigrade, average refractive index: 1.46, water absorption percentage: less than 0.01%) of 4-methyl-1-pentene with monomers having 16 carbon atoms and 18 carbon atoms (Molar ratio: 16 carbon atoms:18 carbon atoms = 50:50), melt extrusion molding was carried out under the conditions of a cylinder temperature of 300 degrees centigrade and a cast roll temperature of 30 degrees centigrade with a single screw extruder (diameter: 40 mm) to prepare a film having a film thickness of 200 $\mu$m. Subsequently, this film was longitudinally uniaxially stretched at a temperature of 160 degrees centigrade using a drawing machine to give a film (B) having a film thickness of 100 $\mu$m.

(Film (C))

A ZEONOR film (name: ZF14, film thickness: 100 $\mu$m) manufactured by Zeon Corp. was taken as a film (C).

(Film (D))

A TAC film (Film thickness: 80 $\mu$m) manufactured by Fujifilm Corp. was taken as a film (D).

(Film (E))

A ZEONOR film (name: ZF14, film thickness: 100 $\mu$m) manufactured by Zeon Corp. was longitudinally uniaxially stretched at a temperature at 150 degrees centigrade using a drawing machine to give a film (E) having a film thickness of 80 $\mu$m.

(Film (F))

A polycarbonate film (name: PURE-ACE, film thickness: 100 $\mu$m) manufactured by Teijin Chemicals Ltd. was longitudinally uniaxially stretched at a temperature at 180 degrees centigrade using a drawing machine to give a film (F) having a film thickness of 80 $\mu$m.

(Film (G))

Using a copolymer (Molar ratio = 95:5, MFR: 27 g/10 min, melting point: 230 degrees centigrade, glass transition temperature: 15 degrees centigrade, average refractive index: 1.46, water absorption percentage: less than 0.01%) of 4-methyl-1-pentene with monomers having 12 carbon atoms and 14 carbon atoms (Molar ratio: 12 carbon atoms:14 carbon atoms = 50:50), melt extrusion molding was carried out under the conditions of a cylinder temperature of 300 degrees centigrade and a cast roll temperature of 30 degrees centigrade with a single screw extruder (diameter: 40 mm) to give a film (G) having a film thickness of 60 $\mu$m.

(Measurement method of retardation)

Retardations R(450) and R(590) at wavelengths of 450 nm and 590 nm of the films (A) to (G) were measured by falling the measurement light at an incident angle of 0° on a plane of the sample at measurement wavelengths of 450 nm and 590 nm using a retardation measuring device, KOBRA, manufactured by Oji Scientific Instruments. Furthermore, the film was allowed to stand at a constant temperature and humidity chamber at 60 degrees centigrade and 90% relative humidity (RH) for 240 hours, and then the change in R(590) of the film was observed. When it was less than 5%, it was indicated as AA, while when it was 5% or more, it was indicated as CC.
The results are shown in Table 4.

(Measurement of water absorption percentage)

The water absorption percentage was measured in accordance with the JIS K7209 method. At first, a sample was dried at a blower type dryer set to 50 degrees centigrade for 24 hours and cooled down to room temperature in a desiccator. The resulting sample was weighed (W1), immersed in pure water in an atmosphere of 25 degrees centigrade for 24 hours, and then water was thoroughly wiped out with a dustcloth. The sample was weighed (W2). The water absorption percentage was obtained from the weights W1 and W2 according to the following formula.

$$\texttt{Water absorption percentage (\%) = (W2-W1)/W1×100}$$

Incidentally, the measurement was carried out with the sample number of n=3 and an arithmetic average was taken as the water absorption percentage of the resin. The measurement results of water absorption percentage of the films (A) to (G) are shown in Table 4.

(Measurement of adhesion)

Adhesion was measured at a sample width of 1 cm, a pulling rate of 100 mm/min and a pulling angle of 90° by a universal test machine (STROGRAPH) manufactured by Toyo Seiki Seisaku-sho, Ltd. The results of measured adhesion of each protective film and polarizer film are shown in Table 5. Incidentally, when adhesion was not less than 300 g/cm, it was indicated as AA, while when adhesion was less than 300 g, it was indicated as CC.

(Check of existence of curling occurrence)

After the protective film was laminated with the polarizer film, existence of curling occurrence was checked. The results are shown in Table 5.

(Magnitude of light leakage of polarizing plate)

Two pieces of the polarizing plates prepared in Example and Reference Example were used to observe light leakage (light dropout) of the polarizing plates. Herein, two pieces of the polarizing plates arranged on the planar light source were respectively arranged in a parallel and crossed Nicol manner and observed from a polar angle of 0° (vertical direction). At this time, the amounts of the transmitted light were respectively 100 and 0. Thereafter, with respect to a set of polarizing plates arranged in a crossed Nicol manner, the amount of the transmitted light was measured from the azimuth angle of 45° (clockwise) and a polar angle of 45° (a polar angle of 0° was the vertical direction) with reference to the change axis of the upper polarizing plate. When the amount of the transmitted light exceeded 2, it was indicated as large light leakage, while when it is less than 2, it was indicated as small light leakage. Incidentally, when two pieces of the polarizing plates were arranged in a parallel and crossed Nicol manner, the film with large R(590) was taken as the inside, while the film with small R(590) was taken as the outside.
The results are shown in Fig. 5.

(Measurement of dimensional change)

The dimensional change was measured by putting normal lines of a width of 100 mm respectively to the longitudinal and lateral directions of the obtained laminated polarizing plates and allowing to stand at a constant temperature and humidity chamber at 60 degrees centigrade and 90% RH for 240 hours, and measuring between the aforementioned normal lines immediately after the plates were taken out.

Example C1

The aforementioned film (A), a PVA film containing iodine that was a polarizer film and the aforementioned film (C) were laminated using a polyurethane based aqueous adhesive agent (Main agent: polyurethane resin (Nonvolatile component: 35%), curing agent: polyisocyanate (Nonvolatile component: 100%), and mixing ratio (wt%) of main agent: curing agent = 100:7) to give a laminated polarizing plate composed of the film (A)/polarizer film/film (C), and subsequently the resulting plate was dried at 80 degrees centigrade for 20 minutes and 60 degrees centigrade for 3 days to prepare a laminated polarizing plate.
Adhesion of the above laminated polarizing plate was measured and as a result, it was good, that is, 590 g/cm.

Furthermore, the above laminated polarizing plate was allowed to stand at a constant temperature and humidity chamber at 60 degrees centigrade and 90% RH for 240 hours, but showy curling was not produced and the dimensional change was less than 0.1%.

Example C2

The aforementioned film (B), a PVA film containing iodine that was a polarizer film and the aforementioned film (C) were laminated using a polyurethane based aqueous adhesive agent (Main agent: polyurethane resin (Nonvolatile component: 35%), curing agent: polyisocyanate (Nonvolatile component: 100%), and mixing ratio (wt%) of main agent: curing agent = 100:7) to give a laminated polarizing plate composed of the film (B)/polarizer film/film (C), and subsequently the resulting plate was dried at 80 degrees centigrade for 20 minutes and 60 degrees centigrade for 3 days to prepare a laminated polarizing plate.
Adhesion of the above laminated polarizing plate was measured and as a result, it was good, that is, 650 g/cm.
Furthermore, the above laminated polarizing plate was allowed to stand at a constant temperature and humidity chamber at 60 degrees centigrade and 90% RH for 240 hours, but showy curling was not produced and the dimensional change was less than 0.1%.

Reference Example C1

The aforementioned film (D), a PVA film containing iodine that was a polarizer film and the aforementioned film (E) were laminated using a polyurethane based aqueous adhesive agent (Main agent: polyurethane resin (Nonvolatile component: 35%), curing agent: polyisocyanate (Nonvolatile component: 100%), and mixing ratio (wt%) of main agent: curing agent = 100:7) to give a laminated polarizing plate composed of the film (D)/polarizer film/film (E), and subsequently the resulting plate was dried at 80 degrees centigrade for 20 minutes and 60 degrees centigrade for 3 days to prepare a laminated polarizing plate.
Adhesion of the above laminated polarizing plate was measured and as a result, it was good, that is, 600 g/cm. However, the above laminated polarizing plate was allowed to stand at a constant temperature and humidity chamber at 60 degrees centigrade and 90% RH for 240 hours and as a result, curling was produced. This was considered because the dimensional change of the film (D) due to water absorption was greater than that of the film (E).

Reference Example C2

The aforementioned film (C), a PVA film containing iodine that was a polarizer film and the aforementioned film (E) were laminated using a polyurethane based aqueous adhesive agent (Main agent: polyurethane resin (Nonvolatile component: 35%), curing agent: polyisocyanate (Nonvolatile component: 100%), and mixing ratio (wt%) of main agent: curing agent = 100:7) to give a laminated polarizing plate composed of the film (C) /polarizer film/film (E), and subsequently the resulting plate was dried at 80 degrees centigrade for 20 minutes and 60 degrees centigrade for 3 days to prepare a laminated polarizing plate.
Adhesion of the above laminated polarizing plate was measured and as a result, it was small, that is, 50 g/cm, resulting in bad adhesion. Bad adhesion was caused by the adhesive agent that was not sufficiently dried.

Reference Example C3

The aforementioned film (D), a PVA film containing iodine that was a polarizer film and the aforementioned film (F) were laminated using a polyurethane based aqueous adhesive agent (Main agent: polyurethane resin (Nonvolatile component: 35%), curing agent: polyisocyanate (Nonvolatile component: 100%), and mixing ratio (wt%) of main agent: curing agent = 100:7) to give a laminated polarizing plate composed of the film (D)/polarizer film/film (F), and subsequently the resulting plate was dried at 80 degrees centigrade for 20 minutes and 60 degrees centigrade for 3 days to prepare a laminated polarizing plate.
Adhesion of the above laminated polarizing plate was measured and as a result, it was good, that is, 610 g/cm. However, the above laminated polarizing plate was allowed to stand at a constant temperature and humidity chamber at 60 degrees centigrade and 90% RH for 240 hours and as a result, curling was produced. This was considered because the dimensional change of the film (D) due to water absorption was greater than that of the film (F).

Reference Example C4

The aforementioned film (G), a PVA film containing iodine that was a polarizer film and the aforementioned film (C) were laminated using a polyurethane based aqueous adhesive agent (Main agent: polyurethane resin (Nonvolatile component: 35%), curing agent: polyisocyanate (Nonvolatile component: 100%), and mixing ratio (wt%) of main agent: curing agent = 100:7) to give a laminated polarizing plate composed of the film (G)/polarizer film/film (C), and subsequently the resulting plate was dried at 80 degrees centigrade for 20 minutes and 60 degrees centigrade for 3 days to prepare a laminated polarizing plate.

Adhesion of the above laminated polarizing plate was measured and as a result, it was good, that is, 580 g/cm. Furthermore, the above laminated polarizing plate was allowed to stand at a constant temperature and humidity chamber at 60 degrees centigrade and 90% RH for 240 hours, but showy curling was not produced. However, when light leakage of the polarizing plates was observed, it was large. Incidentally, for the purpose of comparison with Example C1 herein, the film (G) was taken as the inside.

In this way, in the film (G), the retardation was insufficient for combining with the function of the retardation plate so that the number of elements in the liquid crystal display element could not be reduced accordingly.

[Table 4]

| Film | R(590) | R(450)/R(590) | Water absorption percentage | Change in R(590) after constant temperature and humidity test |
|------|--------|---------------|-----------------------------|---------------------------------------------------------------|
| (A) | 64 nm | 0.7 | < 0.01% | AA |
| (B) | 57 nm | 0.7 | < 0.01% | AA |
| (C) | 8 nm | 1.0 | < 0.01% | AA |
| (D) | 8 nm | 0.9 | 4.4% | CC |
| (E) | 59 nm | 1.0 | < 0.01% | AA |
| (F) | 63 nm | 1.2 | 0.2% | CC |
| (G) | 4 nm | 0.8 | < 0.01% | AA |

[Table 5]

| | Adhesion | Curling after constant temperature and humidity test | Magnitude of light leakage of polarizing plate |
|---|----------|----------------------------------------------------|------------------------------------------------|
| Example C1 | AA: 590 g/cm | No | Small |
| Example C2 | AA: 650 g/cm | No | Small |
| Reference Example C1 | AA: 600 g/cm | Yes | Large |
| Reference Example C2 | CC: < 50 g/cm | Could not continue test due to short adhesion | Could not continue test due to short adhesion |
| Reference Example C3 | AA: 610 g/cm | Yes | Large |
| Reference Example C4 | AA: 580 g/cm | No | Large |

Example D1

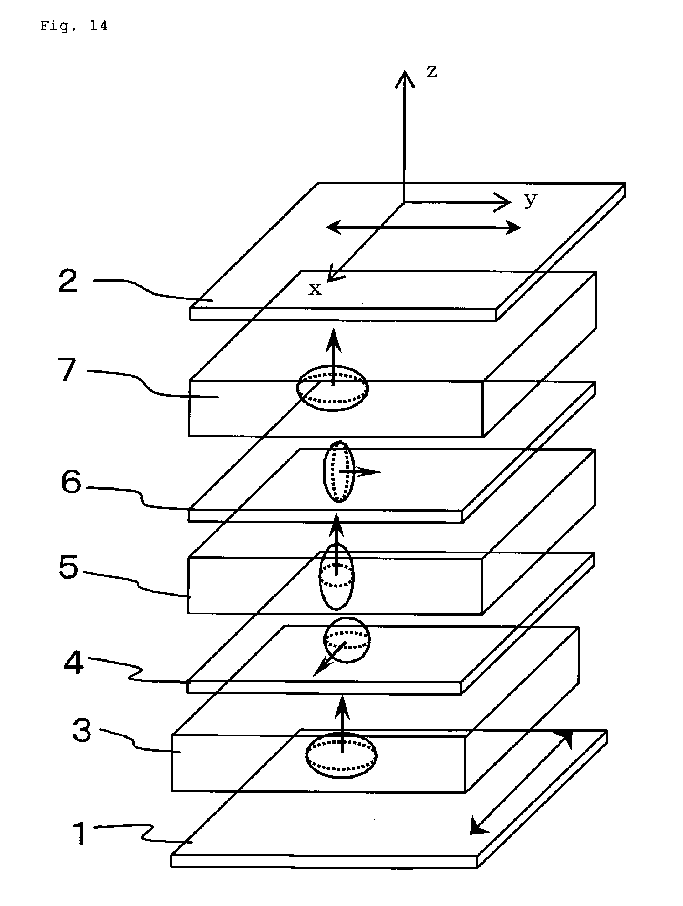

In this Example, a laminate in the arrangement of -C, -A, L and -A was prepared, and evaluated.

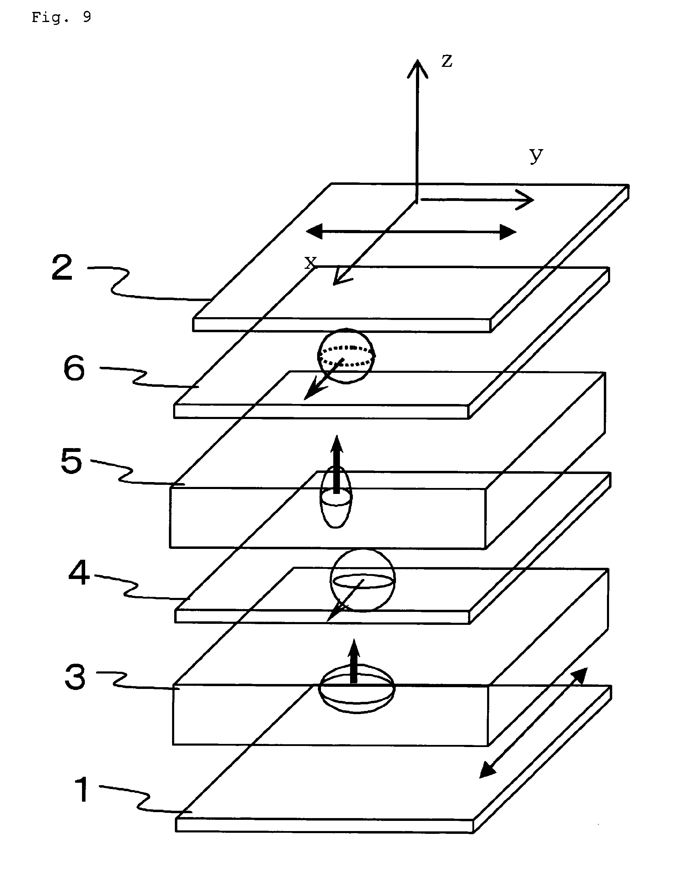

Fig. 9 is a view illustrating the constitution of a laminate according to this Example. In the laminate illustrated in Fig. 9, a backlight side polarizing film 1, a first retardation film C3, a first retardation film A4, a liquid crystal cell (liquid crystal layer, LC) 5, a second retardation film A6 and a light emitting side polarizing film 2 were laminated in this order from the bottom. In Fig. 9, both of the first retardation film A4 and the second retardation film A6 were -A plates satisfying the above formula (3-2), while the first retardation film C3 was a -C plate satisfying the above formula (3-3).
In this Example, with respect to the observation coordinates in which orthogonal x-y axes were within the plane of the film and the film vertical axis was the z axis, the backlight side polarizing film 1 was arranged such that its absorption axis direction was aligned with the x axis, while the light emitting side polarizing film 2 was arranged such that its absorption axis was aligned with the y axis.
Incidentally, in Fig. 9 and Fig. 14 to be described later, the absorption axis direction of the polarizing film was represented by an arrow.

Meanwhile, the first retardation film C (-C plate) was arranged on the backlight side polarizing film 1, while the first retardation film A (-A plate) 4 was arranged such that its optical axis direction (abnormal light refractive index direction), i.e., the stretching direction was aligned with the x axis.

Next, the interposed liquid crystal cell 5 was arranged on the glass substrate, the second retardation film A (-A plate) 6 was arranged such that its optical axis direction was aligned with the y axis, and the light emitting side polarizing film 2 was arranged such that its absorption axis was aligned with the y axis.

As the backlight side polarizing film 1 and the light emitting side polarizing film 2, a commercial iodine based polarizing film (G1220DU, a product of Nitto Denko Corp.) was used. Incidentally, in any of the polarizing films, the protective film (TAC: triacetylcellulose) of the polarizing film caused extra retardation so that the polarizing film was used without the protective film.

Furthermore, as the liquid crystal cell 5, a VA liquid crystal having a cell thickness of 3 $\mu$m and K of 310 nm was used.

As for the first retardation film C3, ARTON manufactured by JSR Corp. was dissolved in methylene chloride to prepare a dope solution of a solid concentration of 18 % by weight. A cast film was prepared from this dope solution and was biaxially stretched by 2 times at 180 degrees centigrade to obtain a film. The birefringence in the thickness direction at a wavelength of 550 nm of the obtained first retardation film C3 was K = -341 nm.

Incidentally, the retardation at a wavelength of 550 nm was measured by falling the measurement light at an incident angle of 0° on a plane of the sample using a retardation measuring device (model: RETS-100) manufactured by Otsuka Electronics Co., Ltd. with a rotating analyzer method.

Furthermore, the birefringences in the thickness direction at wavelengths of 450 nm and 650 nm of the first retardation film C3 were K(450) = -344 nm and K(650) = -340 nm.

The first retardation film A4 and the second retardation film A6 were subjected to melt extrusion molding under the conditions of a cylinder temperature of 300 degrees centigrade and a cast roll temperature of 30 degrees centigrade with a single screw extruder (diameter: 40 mm) by using a copolymer (Molar ratio = 95:5, MFR: 27 g/10 min, melting point: 230 degrees centigrade, glass transition temperature: 15 degrees centigrade, average refractive index: 1.46, and water absorption percentage: less than 0.01%) of 4-methyl-1-pentene with monomers having 12 carbon atoms and 14 carbon atoms (Molar ratio: 12 carbon atoms: 14 carbon atoms = 50:50) to prepare a film having a film thickness of 200 $\mu$m. Subsequently, this film was longitudinally uniaxially stretched at a temperature at 160 degrees centigrade using a drawing machine to give a retardation film A having a film thickness of 112 $\mu$m. The obtained retardation film A became a so-called negative retardation film A having a low refractive index in the extending direction, and the in-plane retardation at a wavelength of 550 nm was Re = -30.6 nm.

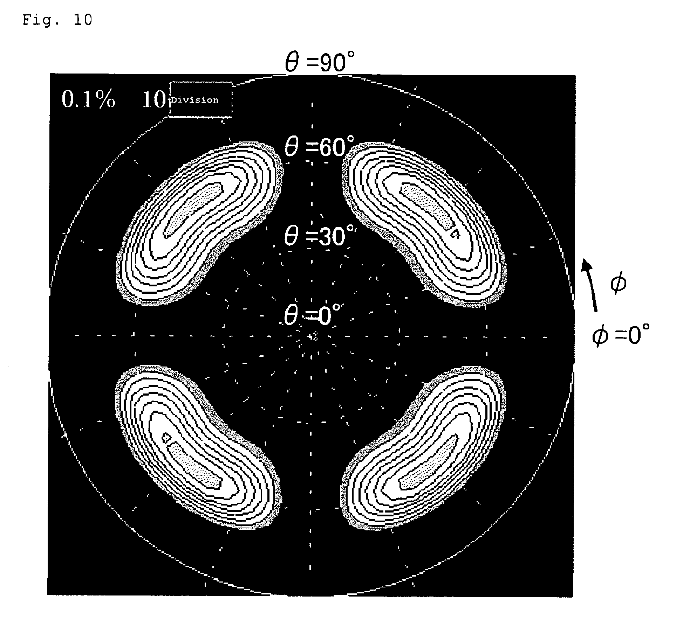

Using these films, the laminate (liquid crystal panel) illustrated in Fig. 9 was prepared to observe the viewing angle dependence in the dark state at a wavelength of 550 nm. The results are shown in Fig. 10.

Incidentally, in Fig. 10, and Fig. 13, Fig. 16 and Fig. 18 to be described below, the viewing angle $\theta$ represented the difference in the angle of the emitted light from the vertical incidence ($\theta$=0°). In the figures, the center of the concentric circle was 0°, respective concentric circles represented $\theta$=30°, $\theta$=60° and $\theta$=90° facing the outside from the center.

Furthermore, in Fig. 10 and Fig. 13, Fig. 16 and Fig. 18 to be described below, the azimuth angle $\varphi$ represented the difference in the angle to the absorption axis ($\varphi$=0°) of the backlight side polarizing film 1. In the dotted line of the diameter direction of the figures, the right end was $\varphi$=0°, while $\varphi$ was increased counterclockwise by 22.5°.

From Fig. 10, it was found that the obtained laminate had the transmittance even in a state of an oblique view of not more than 0.1% and effectively functioned for a high contrast.

In the following Example, the points different from Example D1 will be mainly explained.

Example D2

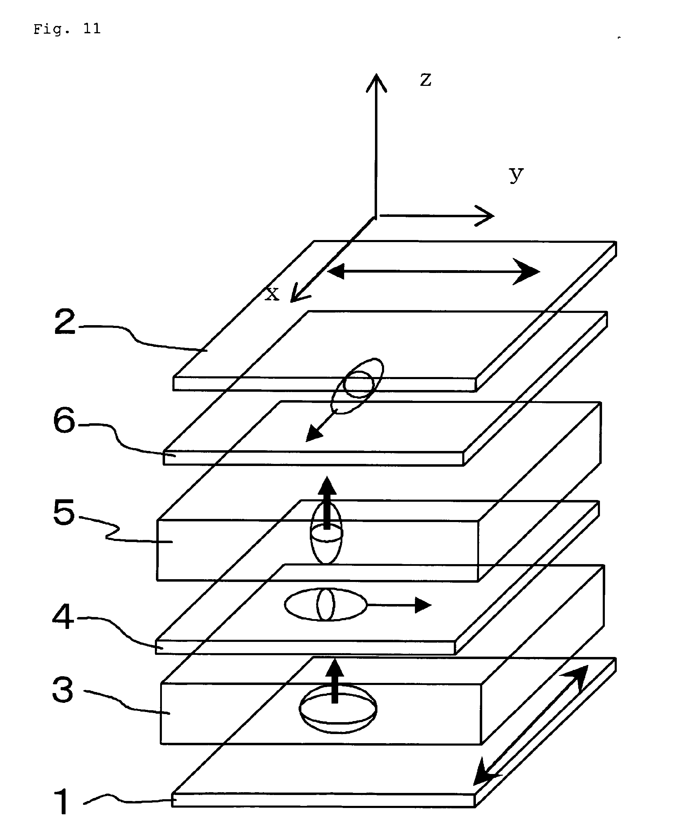

In the laminate illustrated in Example D1, a retardation film -A was used as the retardation film A, but the arrangement of C, A, L and A could be realized not only with the retardation film -A, but also with the retardation film +A having so-called positive birefringence in which a refractive index in the stretching direction became high. Fig. 11 is a view illustrating the constitution of the laminate realized by using the retardation film +A satisfying the above formula (3-1) in this Example.

As shown in Fig. 11, in this Example, a laminate in the arrangement of -C, +A, L and +A was prepared, and evaluated.

The order of laminating each member in the laminate illustrated in Fig. 11 was the same as that of Fig. 9 (Example D1). However, differently from Example D1, in Fig. 11, the first retardation film A (+A film) 4 and the second retardation film A6 were arranged adjacent to the liquid crystal cell 5. The first retardation film A4 was arranged such that the optical axis direction thereof (abnormal light refractive index axis direction) shown by an arrow was aligned with the y axis, and the second retardation film A (+A film) 6 was arranged such that its optical axis direction (abnormal light refractive index axis) was aligned with the x axis direction.

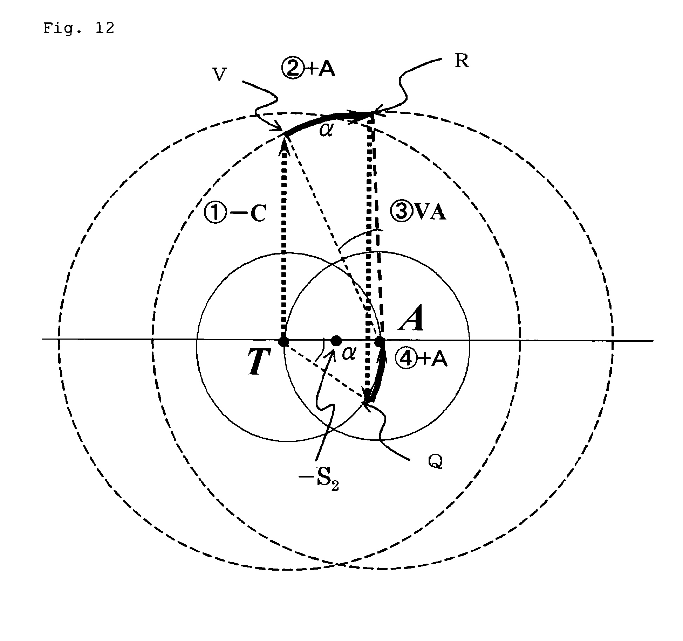

By such an arrangement, the fact that the axis could be corrected even by using the retardation film +A will be described with reference to Fig. 12. In Fig. 12, the polarizing state of the linear polarized light passing through the first polarizing film 1 at an oblique viewing angle of θ=60° and φ=45° was represented by T on the Poincaré sphere.

The light further moved to the point V on the arctic side by passing through the retardation film C (-C film) 3, and further moved to the point R by rotating A that was the absorption axis direction of the light emitting side polarizing film 2 clockwise as a rotating center just as much as the rotating angle α by the first retardation film A (+A film) 4. Then, the light went down south to the point Q by the liquid crystal cell 5 (+C retardation) . Furthermore, the light was rotated clockwise around T as a rotating center just as much as the rotating angle α by the second retardation film A (+A film) 6 to be aligned with the point A. The axis could be corrected by such an arrangement.

In this Example, as the backlight side polarizing film 1 and the light emitting side polarizing film 2, a commercial iodine based polarizing film (G1220DU, a product of Nitto Denko Corp.) was used. Incidentally, in any of the polarizing films, the protective film (TAC: triacetylcellulose) of the polarizing film caused extra retardation so that the polarizing film was used without the protective film.
Furthermore, as the liquid crystal cell 5, a VA liquid crystal having a cell thickness of 3 μm and K of 310 nm was used.

As for the first retardation film C (-C film) 3, ARTON manufactured by JSR Corp. was dissolved in methylene chloride to prepare a dope solution of a solid concentration of 18 % by weight. A cast film was prepared from this dope solution and was biaxially stretched by 2 times at 180 degrees centigrade to obtain a film. The retardation at a wavelength of 550 nm of the obtained first retardation film C3 was measured by falling the measurement light at an incident angle of 0° on a plane of the sample using a retardation measuring device (model: RETS-100) manufactured by Otsuka Electronics Co., Ltd. with a rotating analyzer method. As a result, K was -251 nm.

As for the first retardation film A and the second retardation film A6, ARTON manufactured by JSR Corp. was dissolved in methylene chloride to prepare a dope solution of a solid concentration of 18 % by weight. A cast film was prepared from this dope solution and was uniaxially stretched by 2 times at 180 degrees centigrade to obtain a film. In the obtained retardation film A, the refractive index in the stretching direction was greater than that of the orthogonal direction. Furthermore, this retardation film A became a so-called positive retardation film A (+A), the in-plane retardation at a wavelength of 550 nm was Re = +32.1 nm.

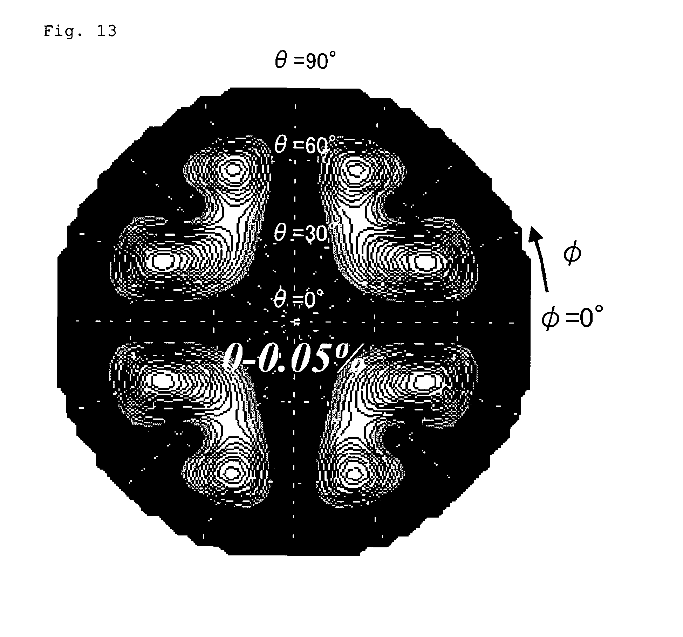

Using these films, the laminate (liquid crystal panel) illustrated in Fig. 11 was prepared to observe the viewing angle dependence in the dark state at a wavelength of 440 nm. The results are shown in Fig. 13.
Meanwhile, it was found that the obtained laminate had the transmittance even in a state of an oblique view of not more than 0.08% and effectively functioned for a high contrast.


Example D3

In this Example, a laminate in the arranged of -C, -A, L, -A and -C was prepared, and evaluated.
Fig. 14 is a view illustrating the constitution of the laminate according to this Example. In the laminate illustrated in Fig. 14, a backlight side polarizing film 1, a first retardation film C3, a first retardation film A4, LC (a liquid crystal layer, a liquid crystal cell) 5, a second retardation film A6, a second retardation film C7 and a light emitting side polarizing film 2 were laminated in this order from the bottom. In Fig. 14, both of the first retardation film A4 and the second retardation film A6 were -A plates, while both of the first retardation film C3 and the second retardation film C7 were -C plates.

In this Example, with respect to the observation coordinates in which orthogonal x-y axes were within the plane of the film and the film vertical axis was the z axis, the backlight side polarizing film 1 was arranged such that its absorption axis direction was aligned with the x axis, while the light emitting side polarizing film 2 was arranged such that its absorption axis was aligned with the y axis. In Fig. 14, the absorption axis direction of the polarizing film was represented by an arrow.

Meanwhile, the first retardation film C (-C plate) was arranged on the backlight side polarizing film 1, while the first retardation film A4 (-A plate) was arranged such that its optical axis direction (abnormal light refractive index direction), i.e., the stretching direction was aligned with the x axis.
Next, the interposed liquid crystal cell 5 was arranged on the glass substrate, and the second retardation film A (-A plate) 6 was arranged such that its optical axis direction was aligned with the y axis. Furthermore, the second retardation film C (-C plate) 7 was arranged.

As the backlight side polarizing film 1 and the light emitting side polarizing film 2, a commercial iodine based polarizing film (G1220DU, a product of Nitto Denko Corp.) was used. Incidentally, in any of the polarizing films, the protective film (TAC: triacetylcellulose) of the polarizing film caused extra retardation so that the polarizing film was used without the protective film.
Furthermore, as the liquid crystal cell 5, a VA liquid crystal having a cell thickness of 3 μm and K of 310 nm was used.

As for the first retardation film C3, ARTON manufactured by JSR Corp. was dissolved in methylene chloride to prepare a dope solution of a solid concentration of 18 % by weight. A cast film was prepared from this dope solution and was triaxially stretched by 2 times at 180 degrees centigrade to obtain a film. The birefringence in the thickness direction at a wavelength of 550 nm of the obtained film was measured in accordance with Example D1 and as a result, K was -157 nm.

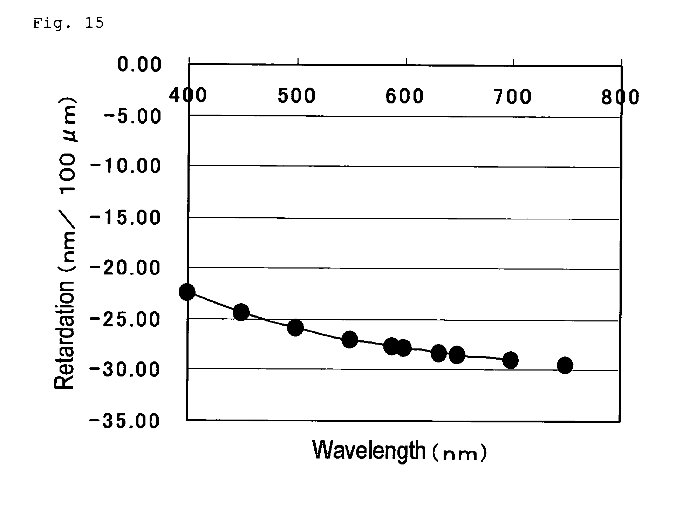

As for the first retardation film A4 and the second retardation film A6, a film having a thickness of 92 μm obtained by uniaxially stretching poly-4-methyl-1-pentene at a temperature of 160 degrees centigrade was used. This film became a so-called negative retardation film having a low refractive index in the extending direction, and the in-plane retardation at a wavelength of 550 nm was Re = -24.7 nm. The measurement results of the wavelength dependence of the in-plane retardation Re of the retardation film -A used in this Example are shown in Fig. 15. From Fig. 15, it was found that the retardation film -A used in this Example exhibited so-called reverse wavelength dispersion property in which the absolute value of the retardation became smaller as the wavelength was shorter.

Meanwhile, the values exhibiting the reverse wavelength dispersion property of the obtained retardation film -A were,

$$Re(450)/Re(550)=0.88$$

$$Re(650)/Re(550)=1.06$$

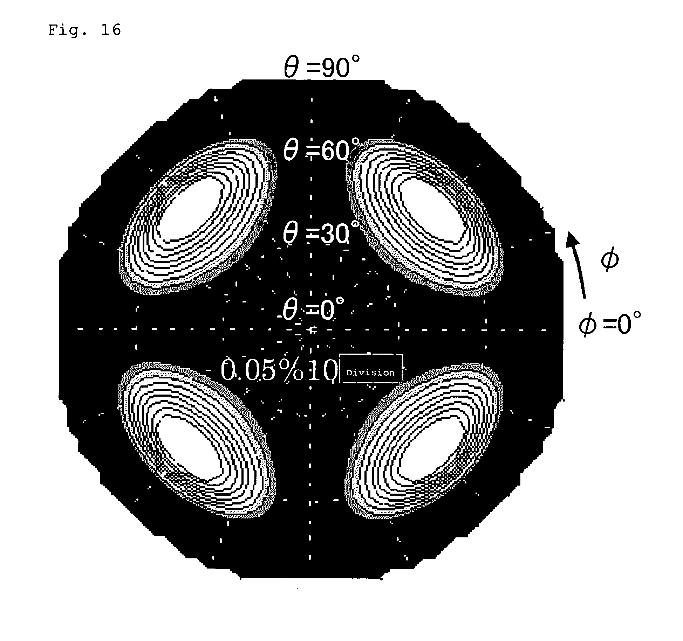

Using these films, the laminate (liquid crystal panel) illustrated in Fig. 14 was prepared to observe the viewing angle dependence in the dark state at a wavelength of 550 nm. The results are shown in Fig. 16.

Meanwhile, it was found that the obtained laminate had the transmittance even in a state of an oblique view of not more than 0.08% and effectively functioned for a high contrast.

Example D4

In this Example, in the same laminate as in Example D3 illustrated in Fig. 14, an Example will be described using a film having stronger reverse wavelength dispersion property of the retardation film -A used in Example D3 as the retardation film -A.

As the first retardation film A4 and the second retardation film A6, using a 4-methyl-1-pentene homopolymer, melt extrusion molding was carried out under the conditions of a cylinder temperature of 300 degrees centigrade and a cast roll temperature of 80 degrees centigrade with a single screw extruder (diameter: 40 mm) to prepare a film having a film thickness of 200 μm. Subsequently, this film was longitudinally uniaxially stretched at a temperature at 160 degrees centigrade using a drawing machine to give a retardation film A having a film thickness of 95 μm.

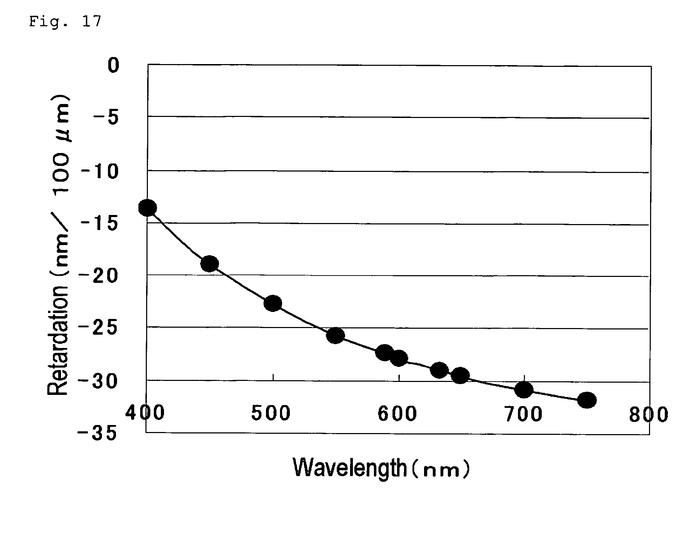

The wavelength dependence of the in-plane retardation Re of the obtained retardation film -A was measured. The results are shown in Fig. 17. From Fig. 17, it was found that the film exhibited so-called reverse wavelength dispersion property in which the absolute value of the retardation became smaller as the wavelength was shorter.

Meanwhile, the values exhibiting the reverse wavelength dispersion property of the obtained retardation film -A were,

$$Re(450)/Re(550) = 0.74$$

$$Re(650)/Re(550) = 1.15$$

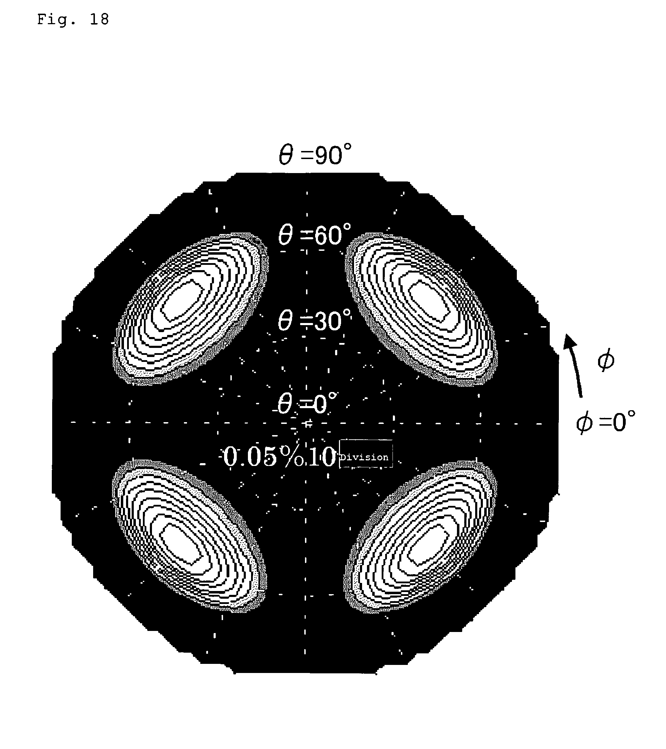

Such a retardation film -A was used as the first retardation film A4 and the second retardation film A6 to prepare the same laminate as in Fig. 14 to observe the viewing angle dependence at a wavelength of 550 nm in the dark state. The results are shown in Fig. 18.

Meanwhile, in this Example, it was found that the intensity of the transmitted light in the dark state could be further reduced by about 30% from that of Example D3.

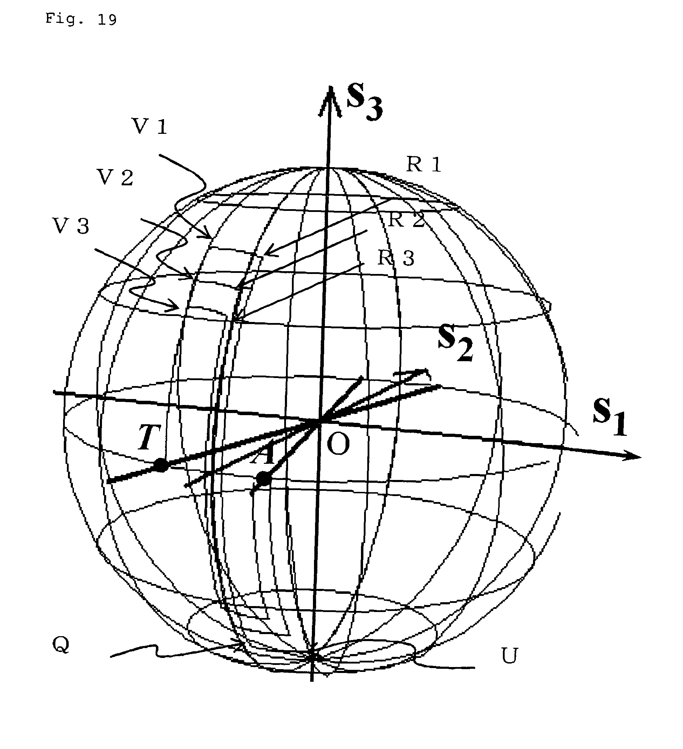

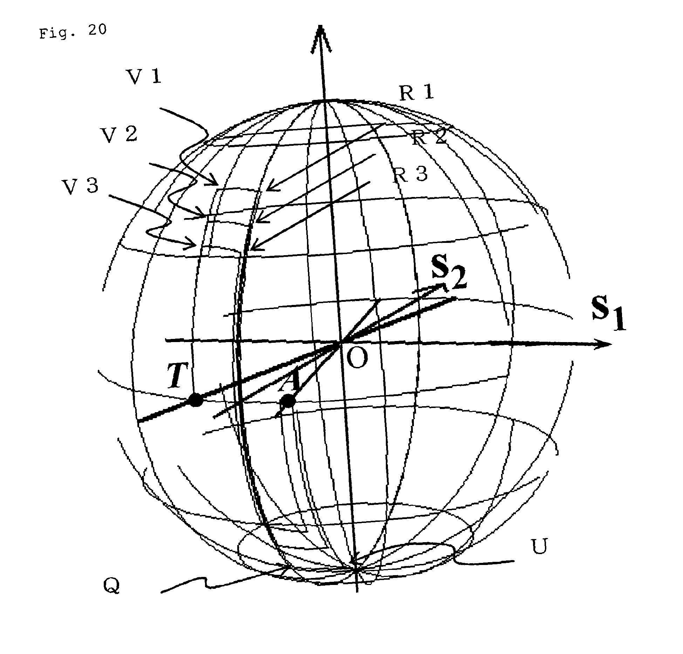

With respect to the reason why the dispersion property could be improved by using reverse wavelength dispersion rather than ideal reverse wavelength dispersion, the change in the polarizing state on the Poincaré sphere would be described by comparing Fig. 19 (ideal reverse wavelength dispersion) to Fig. 20 (reverse wavelength dispersion).

Fig. 19 is a view illustrating the change in the polarizing state on the Poincaré sphere.

T indicated a state of the light passing through the backlight side polarizing film 1, and the lights at wavelengths of 450 nm, 550 nm and 650 nm respectively moved to the points V1, V2 and V3 after respectively passing through the first retardation film C (-C plate) 3.

Herein, the difference was caused at different wavelengths because the retardation K in the retardation film -C did not change depending on the wavelength or K was increased when the wavelength became short, exhibiting so-called positive wavelength dispersion. In case of the light having a short wavelength (450 nm), since a rotation angle ($2\pi K/\lambda$) surrounding the S1 axis became large, the light was shifted to the arctic side (V1). Furthermore, the light having a long wavelength of 650 nm moved to V3.

Next, the light passed through the first retardation film A (-A plate) 4. At this time, if the retardation film -A had ideal reverse wavelength dispersion property, the rotation angle $\alpha$ centering on T became a specified angle irrespective of the wavelength, and lights at wavelengths of 450 nm, 550 nm and 650 nm were respectively rotated up to R1, R2 and R3. However, since the rotating radius was different depending on the wavelength of the light, the difference in the longitude of R1, R2 and R3 was caused.

Furthermore, when the light went down south to the point Q on the meridian at the liquid crystal cell 5 and was further rotated around the point A as a center at the second retardation film A (-A plate) 6, on the same reason as the phenomenon in the northern hemisphere, the difference in the meridian on the point U was further enlarged. Accordingly, the light was rotated surrounding the S1 axis at the second retardation film C (-C plate) 7, but the difference from the point A that was the absorption axis of the emitting side polarizing film 2 was enlarged due to the wavelength and the transmittance was different due to the wavelength, thus causing the color shift.

On the other hand, when reverse wavelength dispersion characteristics of the retardation film -A were ideal reverse wavelength dispersion properties, that is, stronger dispersion characteristics than Re(450nm)/Re(550nm) = 0.82 and Re(650nm)/Re(550nm) = 1.18, as shown in Fig. 20, the meridian of the points R1, R2 and R3 after passing through the first retardation film -A could be almost aligned with one another.

In the same manner, it was found that, in Fig. 20, the difference at the U meridian position of the southern hemisphere side was reduced due to the wavelength. Accordingly, the difference became extremely small due to the wavelength when moved onto the equator at the second retardation film C (-C plate) 7.

As described above, in this Example, by using the retardation film -A having stronger reverse wavelength dispersion properties than ideal reverse wavelength dispersion, a display device excellent in viewing angle characteristics with much smaller color shift could be realized.

Example E1

In this Example, a laminate in the arrangement of L, -A, -C and -A was prepared, and evaluated.

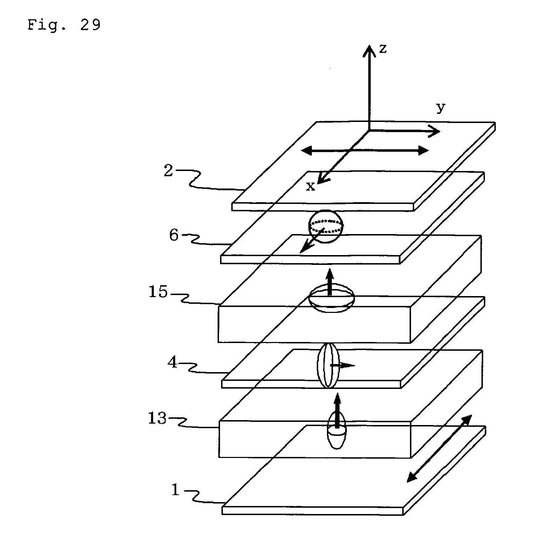

Fig. 29 is a view illustrating the constitution of a laminate according to this Example. In the laminate illustrated in Fig. 29, a backlight side polarizing film 1, a liquid crystal cell (liquid crystal layer, LC) 3, a first retardation film A4, a first retardation film C15, a second retardation film A6 and a light emitting side polarizing film 2 were laminated in this order from the bottom. In Fig. 29, both of the first retardation film A4 and the second retardation film A6 were -A plates satisfying the above formula (4-2), while the first retardation film C3 was a -C plate satisfying the above formula (4-3).

In this Example, with respect to the observation coordinates in which orthogonal x-y axes were within the plane of the film and the film vertical axis was the z axis, the backlight side polarizing film 1 was arranged such that its absorption axis direction was aligned with the x axis, while the light emitting side polarizing film 2 was arranged such that its absorption axis was aligned with the y axis.
Incidentally, in Fig. 29, the absorption axis direction of the polarizing film was represented by an arrow.

Meanwhile, the liquid crystal cell (liquid crystal layer, LC) 3 was arranged on the backlight side polarizing film 1, while the first retardation film A (-A plate) 4 was arranged such that its optical axis direction (abnormal light refractive index direction), i.e., the stretching direction was aligned with the y axis.
Next, the retardation film C (-C) 5 was arranged, the second retardation film A (-A plate) 6 was arranged such that its optical axis direction was aligned with the x axis, and the light emitting side polarizing film 2 was arranged such that its absorption axis was aligned with the y axis.

As the backlight side polarizing film 1 and the light emitting side polarizing film 2, a commercial iodine based polarizing film (G1220DU, a product of Nitto Denko Corp.) was used. Incidentally, in any of the polarizing films, the protective film (TAC: triacetylcellulose) of the polarizing film caused extra retardation so that the polarizing film was used without the protective film.
Furthermore, as the liquid crystal cell 13, a VA liquid crystal having a cell thickness of 3 $\mu$m and K of 310 nm was used.

As for the first retardation film C15, ARTON manufactured by JSR Corp. was dissolved in methylene chloride to prepare a dope solution of a solid concentration of 18 % by weight. A cast film was prepared from this dope solution and was biaxially stretched by 2 times at 180 degrees centigrade to obtain a film. The retardation in the thickness direction at a wavelength of 550 nm of the obtained first retardation film C15 was K = -332 nm.
Incidentally, the retardation at a wavelength of 550 nm was measured by falling the measurement light at an incident angle of 0° on a plane of the sample using a retardation measuring device (model: RETS-100) manufactured by Otsuka Electronics Co., Ltd. with a rotating analyzer method.

Furthermore, the retardations in the thickness direction at wavelengths of 450 nm and 650 nm of the first retardation film C15 were K(450) = -335 nm and K(650) = -330 nm.

The first retardation film A4 and the second retardation film A6 were subjected to melt extrusion molding under the conditions of a cylinder temperature of 300 degrees centigrade and a cast roll temperature of 30 degrees centigrade with a single screw extruder (diameter: 40 mm) by using a copolymer (Molar ratio = 95:5, MFR: 27 g/10 min, melting point: 230 degrees centigrade, glass transition temperature: 15 degrees centigrade, average refractive index: 1.46, and water absorption percentage: less than 0.01%) of 4-methyl-1-pentene with monomers having 12 carbon atoms and 14 carbon atoms (Molar ratio: 12 carbon atoms: 14 carbon atoms = 50:50) to prepare a film having a film thickness of 200 μm. Subsequently, this film was longitudinally uniaxially stretched at a temperature of 160 degrees centigrade using a drawing machine to give a retardation film A having a film thickness of 112 μm.

The obtained retardation film A became a so-called negative retardation film A having a low refractive index in the extending direction, and the in-plane retardation at a wavelength of 550 nm was Re = -27.8 nm.

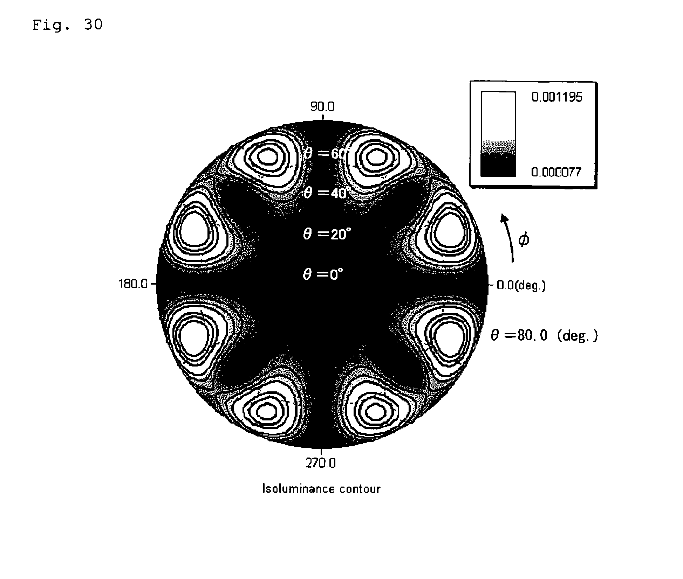

Using these films, the laminate (liquid crystal panel) illustrated in Fig. 29 was prepared to observe the viewing angle dependence in the dark state at a wavelength of 550 nm. The results are shown in Fig. 30. Incidentally, Fig. 30, and Fig. 36 and Fig. 38 to be described later represented the relative luminance to the viewing angle by the transmitted light of an LC panel (without a color filter) when the luminance of the backlight alone was taken as 1, while eight isoluminance contours were sketched between the maximum and minimum luminance values, as shown by a solid line within a circle. Furthermore, in Fig. 30, Fig. 36 and Fig. 38, the axis in the radial direction of the concentric circle represented the incident angle θ. The concentric circle was represented at an interval of 20° from the center of the circle (θ=0°), and the outermost circumferential circle represented θ=80°.

Furthermore, it was found that the isoluminance contour even in the state of an oblique view in the obtained laminate was smaller than 0.0012 and effectively functioned for a high contrast.

In the following Example, the points different from Example E1 will be mainly explained.

Example E2

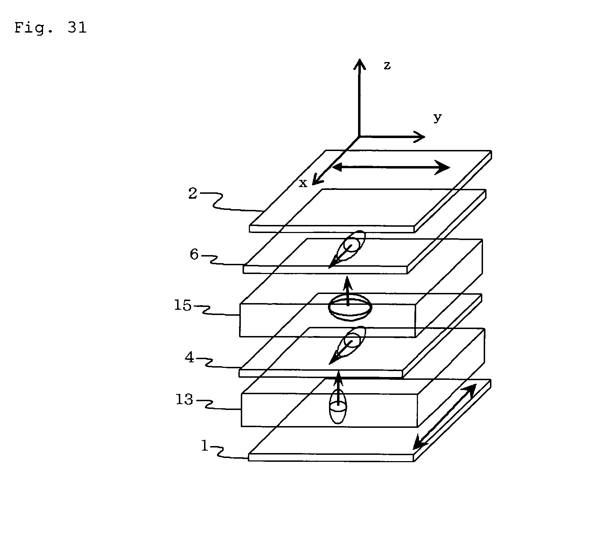

In the laminate illustrated in Example E1, a retardation film -A was used as the retardation film A, but the arrangement of L, A, C and A could be realized not only with the retardation film -A, but also with the retardation film +A having so-called positive birefringence in which the refractive index in the stretching direction became high. Fig. 31 is a view illustrating the constitution of a laminate realized by using the retardation film +A satisfying the above formula (4-1) in this Example.

As shown in Fig. 31, in this Example, a laminate in the arrangement of L, +A, -C and +A was prepared, and evaluated.

The order of laminating each member in the laminate illustrated in Fig. 31 was the same as that of Fig. 29 (Example E1). However, differently from Example E1, in Fig. 31, the first retardation film A (+A film) 4 and the second retardation film A (+A film) 6 were arranged such that the retardation film C5 was sandwiched therebetween after the liquid crystal cell 13. The first retardation film A4 was arranged such that its optical axis direction thereof (abnormal light refractive index axis direction) shown by an arrow was aligned with the x axis, and the second retardation film A (+A film) 6 was arranged such that its optical axis direction (abnormal light refractive index axis) was also aligned with the x axis direction.

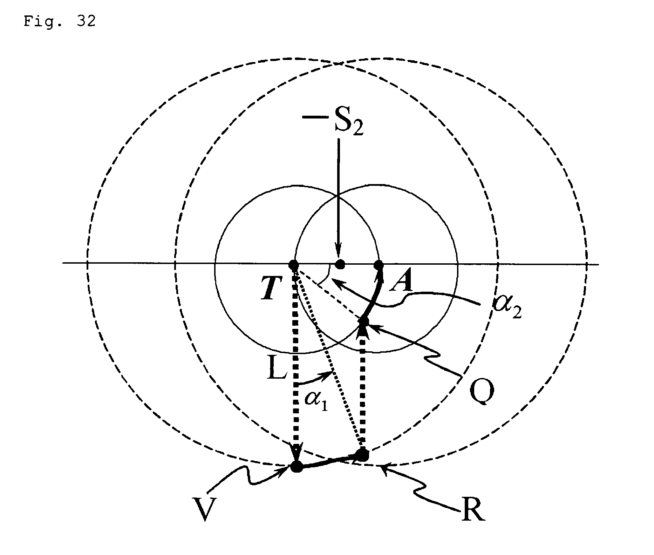

By such an arrangement, the fact that the axis could be corrected even by using the retardation film +A will be described with reference to a projected view on the Poincaré sphere equator illustrated in Fig. 32. In Fig. 32, the polarizing state of the linear polarized light passing through the first polarizing film 1 was described as T on the Poincaré sphere.

The linear polarized light passing through the first polarizing film 1 passed through the liquid crystal cell 13 (equivalent to +C film), whereby the polarizing state moved to the point V on the southern hemisphere side, and further moved to the point R by rotating T that was the absorption axis direction of the backlight side polarizing film 2 counterclockwise as a rotating center just as much as the rotating angle α1 by the first retardation film A (+A film) 4. Next, by the retardation film C (-C retardation), the light went north to the point Q. Furthermore, the light was rotated counterclockwise around T as a rotating center just as much as the rotating angle α2 by the second retardation film A (+A film) 6, thus enabling to be aligned with the point A. It was found that the axis could be corrected by such an arrangement.

In this Example, as the backlight side polarizing film 1 and the light emitting side polarizing film 2, a commercial iodine based polarizing film (G1220DU, a product of Nitto Denko Corp.) was used. Incidentally, in any of the polarizing films, the protective film (TAC: triacetylcellulose) of the polarizing film caused extra retardation so that the polarizing film was used without the protective film.

Furthermore, as the liquid crystal cell 13, a VA liquid crystal having a cell thickness of 3 μm and K of 310 nm was used.

As for the retardation film C (-C film) 15, ARTON manufactured by JSR Corp. was dissolved in methylene chloride to prepare a dope solution of a solid concentration of 18 % by weight. A cast film was prepared from this dope solution and was biaxially stretched by 4 times at 180 degrees centigrade to obtain a film. The retardation in the thickness direction at a wavelength of 550 nm of the obtained retardation film C5 was measured by falling the measurement light at an incident angle of 0° on a plane of the sample using a retardation measuring device (model: RETS-100) manufactured by Otsuka Electronics Co., Ltd. with a rotating analyzer. As a result, K was -261 nm.

As for the first retardation film A4 and the second retardation film A6, ARTON manufactured by JSR Corp. was dissolved in methylene chloride to prepare a dope solution of a solid concentration of 18 % by weight. A cast film was prepared from this dope solution and was uniaxially stretched by 4 times at 180 degrees centigrade to obtain a film. The obtained retardation film A had larger refractive index in the stretching direction than the refractive index in the orthogonal direction. Further, this retardation film A became a so-called positive retardation film A (+A), while the in-plane retardation Re at a wavelength of 550 nm was +30.3 nm.

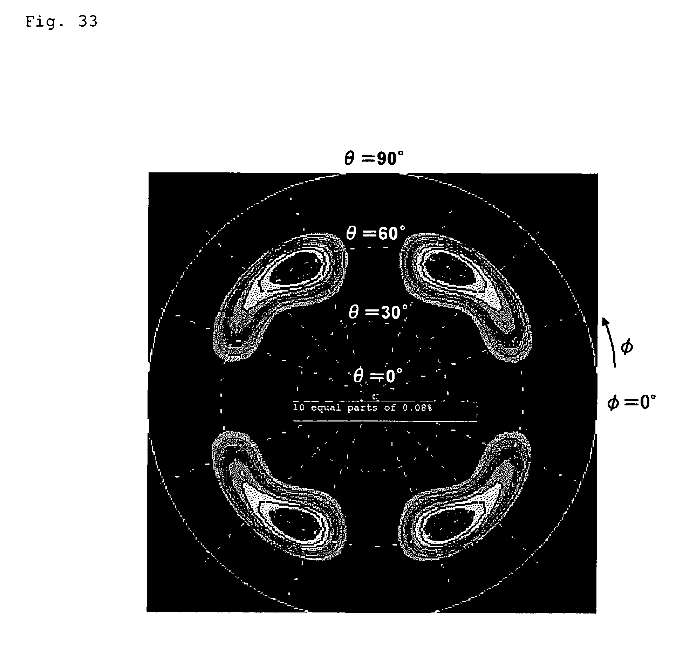

Using these films, a laminate (liquid crystal panel) as illustrated in Fig. 31 was prepared to observe the viewing angle dependence of the transmittance in the dark state at a wavelength of 550 nm. A contour map represented by equally dividing 0.08% of the transmittance into 10 is shown in Fig. 33.

Meanwhile, it was found that the obtained laminate had the transmittance even in a state of an oblique view of not more than 0.08% and effectively functioned for a high contrast.

Example E3

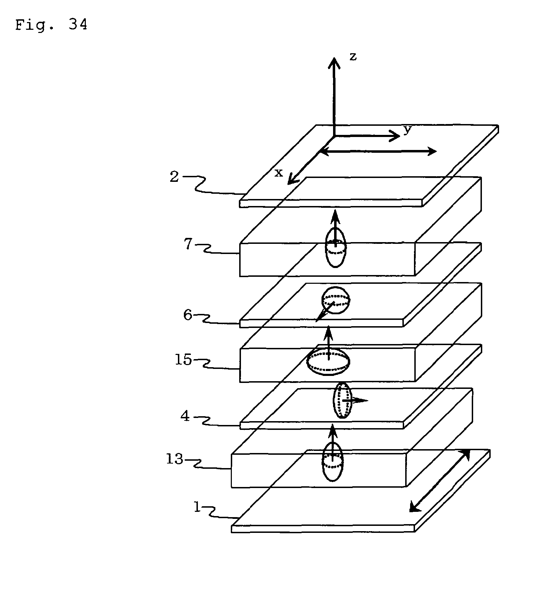

In this Example, a laminate in the arrangement of L, -A, -C, -A and +C was prepared, and evaluated. Fig. 34 is a view illustrating the constitution of a laminate according to this Example. In the laminate illustrated in Fig. 34, a backlight side polarizing film 1, LC (a liquid crystal layer, a liquid crystal cell) 13, a first retardation film A4, a first retardation film C15, a second retardation film A6, a second retardation film C7 and a light emitting side polarizing film 2 were laminated in this order from the bottom. In Fig. 34, both of the first retardation film A4 and the second retardation film A6 were -A plates satisfying the above formula (4-2), the first retardation film C15 was a -C plate satisfying the above formula (4-3), and the second retardation film C7 was a +C plate satisfying the above formula (4-8).

In this Example, with respect to the observation coordinates in which orthogonal x-y axes were within the plane of the film and the film vertical axis was the z axis, the backlight side polarizing film 1 was arranged such that its absorption axis direction was aligned with the x axis, while the light emitting side polarizing film 2 was arranged such that its absorption axis was aligned with the y axis. In Fig. 34, the absorption axis direction of the polarizing film was represented by an arrow.

Meanwhile, the liquid crystal cell 13 sandwiched between glass substrates was arranged on the backlight side polarizing film 1, while the first retardation film A4 (-A plate) was arranged such that its optical axis direction (abnormal light refractive index direction), i.e., the stretching direction was aligned with the y axis.

Next, the first retardation film C15 (-C plate) was arranged, and the second retardation film A (-A plate) 6 was arranged such that its optical axis direction was aligned with the x axis. Further, the second retardation film C (+C plate) 7 was arranged.

As the backlight side polarizing film 1 and the light emitting side polarizing film 2, a commercial iodine based polarizing film (G1220DU, a product of Nitto Denko Corp.) was used. Incidentally, in any of the polarizing films, the protective film (TAC: triacetylcellulose) of the polarizing film caused extra retardation so that the polarizing film was used without the protective film.

Furthermore, as the liquid crystal cell 13, a VA liquid crystal having a cell thickness of 3 $\mu$m and K of 310 nm was used.

As for the first retardation film C15, ARTON manufactured by JSR Corp. was dissolved in methylene chloride to prepare a dope solution of a solid concentration of 18 % by weight. A cast film was prepared from this dope solution and was biaxially stretched by 4 times at 180 degrees centigrade to obtain a film. The retardation in the thickness direction at a wavelength of 550 nm of the obtained film was measured in accordance with Example E1 and as a result, K was -660 nm.

As for the second retardation film C7, a vertically aligned liquid crystal was used between two pieces of glass substrates. The retardation K in the thickness direction was K = 310 nm at a wavelength of 550 nm.

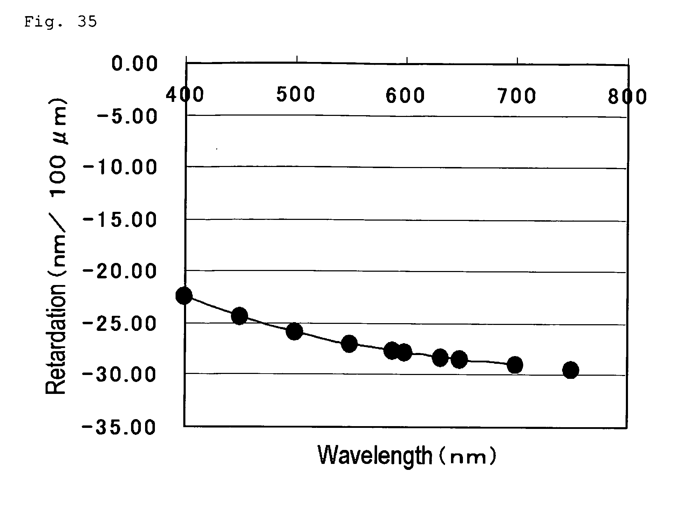

As for the first retardation film A4 and the second retardation film A6, a film having a thickness of 60 $\mu$m obtained by uniaxially stretching poly-4-methyl-1-pentene at a temperature of 160 degrees centigrade was used. This film became a so-called negative retardation film having a low refractive index in the extending direction, and the in-plane retardation at a wavelength of 550 nm was Re = -16.4 nm. The measurement results of the wavelength dependence of the in-plane retardation Re of the retardation film -A used in this Example are shown in Fig. 35. From Fig. 35, it was found that the retardation film -A used in this Example exhibited so-called reverse wavelength dispersion property in which the absolute value of the retardation became smaller as the wavelength was shorter.

Meanwhile, the values exhibiting the reverse wavelength dispersion property of the obtained retardation film -A were,

$$Re(450)/Re(550)=0.88$$

$$Re(650)/Re(550)=1.06$$

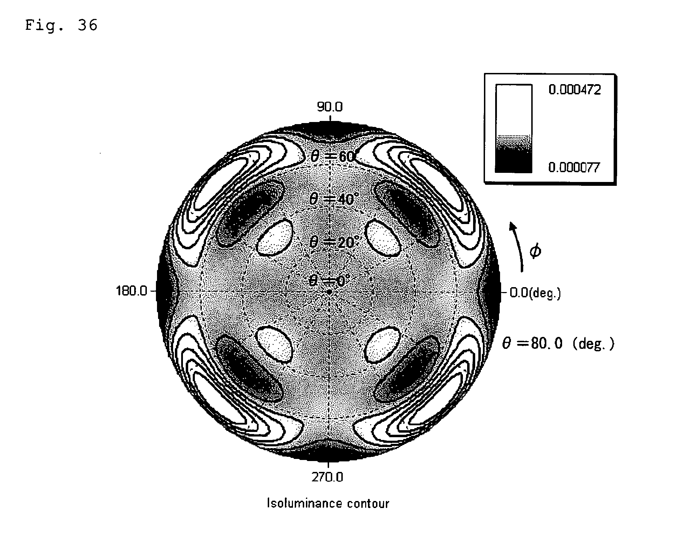

Using these films, the laminate (liquid crystal panel) illustrated in Fig. 34 was prepared to observe the viewing angle dependence in the dark state at a wavelength of 550 nm. An isoluminance contour map obtained by the measurement is shown in Fig. 36.
Furthermore, it was found that the isoluminance contour even in the state of an oblique view in the obtained laminate was smaller than 0.0005, and effectively functioned for a high contrast.

Reference Example E1

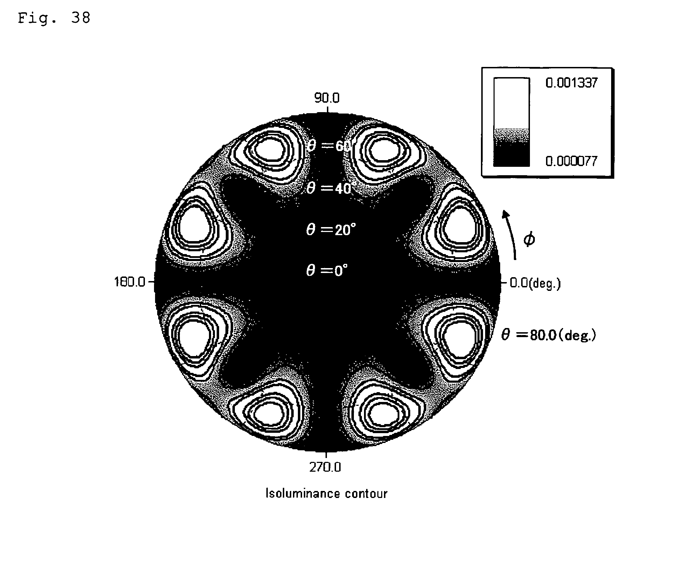

In this Reference Example, a laminate in the arrangement of L, -A and -C was prepared, and evaluated.

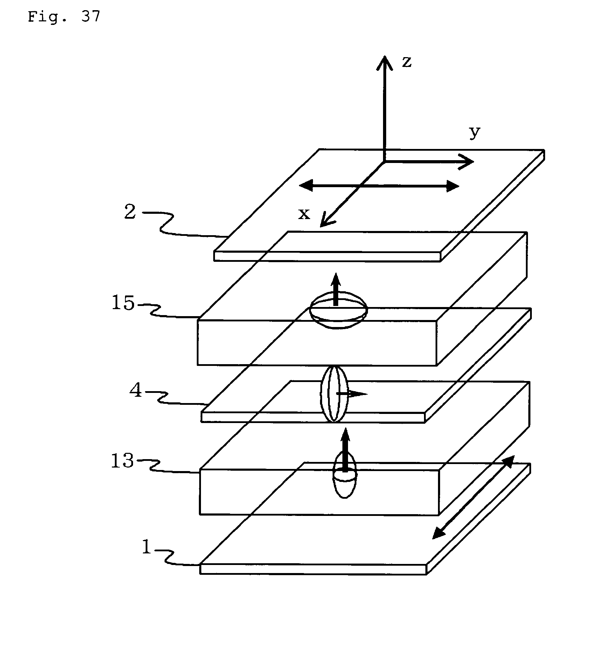

Fig. 37 is a view illustrating the constitution of a laminate according to this Reference Example. In the laminate illustrated in Fig. 37, a backlight side polarizing film 1, a liquid crystal cell (liquid crystal layer, LC) 13, a retardation film A4, a first retardation film C15 and a light emitting side polarizing film 2 were laminated in this order from the bottom. In Fig. 37, the retardation film A4 was an -A plate satisfying the above formula (4-2), while the first retardation film C15 was a -C plate satisfying the above formula (4-3).
In this Reference Example, with respect to the observation coordinates in which orthogonal x-y axes were within the plane of the film and the film vertical axis was the z axis, the backlight side polarizing film 1 was arranged such that its absorption axis direction was aligned with the x axis, while the light emitting side polarizing film 2 was arranged such that its absorption axis was aligned with the y axis.
Incidentally, in Fig. 37, the absorption axis direction of the polarizing film was represented by an arrow.
Meanwhile, the liquid crystal cell 13 (+C plate) sandwiched between glass substrates was arranged on the backlight side polarizing film 1, while the retardation film A (-A plate) 4 was arranged such that its optical axis direction (abnormal light refractive index direction), i.e., the stretching direction was aligned with the y axis.
Next, the retardation film C (-C plate) was arranged, and the light emitting side polarizing film 2 was arranged such that its absorption axis was aligned with the y axis.
As for the backlight side polarizing film 1 and the light emitting side polarizing film 2, a commercial iodine based polarizing film (G1220DU, a product of Nitto Denko Corp.) was used. Incidentally, in any of the polarizing films, the protective film (TAC: triacetylcellulose) of the polarizing film caused extra retardation so that the polarizing film was used without the protective film.
Furthermore, as the liquid crystal cell 13, a VA liquid crystal having a cell thickness of 3 $\mu$m and K of 310 nm was used.
As for the retardation film C15, ARTON manufactured by JSR Corp. was dissolved in methylene chloride to prepare a dope solution of a solid concentration of 18 % by weight. A cast film was prepared from this dope solution and was biaxially stretched by 2 times at 180 degrees centigrade to obtain a film. The retardation in the thickness direction at a wavelength of 550 nm of the obtained retardation film C15 was K = -295 nm.
Incidentally, the retardation at a wavelength of 550 nm was measured by falling the measurement light at an incident angle of 0° on a plane of the sample using a retardation measuring device (model: RETS-100) manufactured by Otsuka Electronics Co., Ltd. with a rotating analyzer method.
Furthermore, the retardations in the thickness direction at wavelengths of 450 nm and 650 nm of the retardation film C15 were K(450) = -298 nm and K(650) = -293 nm.
The retardation film A4 was subjected to melt extrusion molding under the conditions of a cylinder temperature of 300 degrees centigrade and a cast roll temperature of 30 degrees centigrade with a single screw extruder (diameter: 40 mm) by using a copolymer (Molar ratio = 95:5, MFR: 27 g/10 min, melting point: 230 degrees centigrade, glass transition temperature: 15 degrees centigrade, average refractive index: 1.46, and water absorption percentage: less than 0.01%) of 4-methyl-1-pentene with monomers having 12 carbon atoms and 14 carbon atoms (Molar ratio: 12 carbon atoms:14 carbon atoms = 50:50) to prepare a film having a film thickness of 200 $\mu$m. Subsequently, this film was longitudinally uniaxially stretched at a temperature of 160 degrees centigrade using a drawing machine to give a retardation film A having a film thickness of 112 $\mu$m.
The obtained retardation film A became a so-called negative retardation film A having a low refractive index in the extending direction, and the in-plane retardation at a wavelength of 550 nm was Re = -32 nm.
Using these films, the laminate (liquid crystal panel) illustrated in Fig. 37 was prepared to observe the viewing angle dependence in the dark state at a wavelength of 550 nm. The results are shown in Fig. 38.

From Fig. 38, the maximum transmission luminance in a state of an oblique view in the obtained laminate was about 0.13% (0.0013). Further, it was found that the intensity of light leakage greatly varied by the azimuth angle $\varphi$ at an incident angle of $\theta=60°$ or more as compared to Examples of the fourth invention. Accordingly, there is a problem such that the color shift became also large due to the change in the viewing angle.

**Claims**

1. A method of compensating the wavelength dependence of birefringence of an optical part (B) which comprises using a film (a) made of a (co)polymer ($\alpha$) obtained from at least one olefin selected among 4-methyl-1-pentene, 3-methyl-1-pentene and 3-methyl-1-butene as a (co)monomer ingredient.

2. The method as set forth in claim 1, in which said film (a) is laminated to said optical part (B), and the wavelength dependence of the laminate of said optical part (B) and said film (a) on the retardation (angle conversion) caused by the birefringence is smaller than that of said optical part (B) alone.

3. The method as set forth in claim 1, in which a polarizing plate (P) is further used, said film (a) is arranged between said optical part (B) and said polarizing plate (P), and an optical part other than said film (a) having the in-plane retardation is not practically present between said optical part (B) and said polarizing plate (P).

4. The method as set forth in claim 1, in which said optical part (B) is a light-transmitting film (b1).

5. The method as set forth in claim 4, in which said film (a) and said light-transmitting film (b1) are directly laminated or laminated through an adhesive layer.

6. The method as set forth in claim 4 or 5, in which said light-transmitting film (b1) is a polarizing plate protective film.

7. The method as set forth in claim 4 or 5, in which said light-transmitting film (b1) is a retardation plate.

8. The method as set forth in claim 4 or 5, in which said light-transmitting film (b1) is an optical compensation film.

9. The method as set forth in claim 1, in which said optical part (B) is a liquid crystal panel (b2).

10. The method as set forth in claim 9, in which said film (a) and said liquid crystal panel (b2) are directly laminated or laminated through an adhesive layer.

11. The method as set forth in any one of claims 1 to 10, in which the in-plane retardation $R_{550}$ at a wavelength of 550 nm of said film (a) satisfies the following condition,

$$|R_{550}| < 30 \ (nm)$$

12. The method as set forth in any one of claims 1 to 10, in which the in-plane retardation $R_{550}$ at a wavelength of 550 nm of said film (a) satisfies the following condition,

$$30 \ (nm) \leq |R_{550}| < 300 \ (nm)$$

13. A display device obtained by using the method as set forth in any one of claims 1 to 12.

14. An optical part comprising at least one layer of the film (a) made of a (co) polymer ($\alpha$) obtained from at least one olefin selected among 4-methyl-1-pentene, 3-methyl-1-pentene and 3-methyl-1-butene as a (co)monomer ingredient.

15. The optical part as set forth in claim 14, wherein said optical part is a retardation plate.

16. An elliptical polarizing plate or a circular polarizing plate, comprising the optical part as set forth in claim 15 and a polarizing plate.

17. The elliptical polarizing plate or the circular polarizing plate as set forth in claim 16, further comprising an adhesive resin layer.

18. The optical part as set forth in claim 14, wherein the optical part is an anti-reflection film, a transparent conductive substrate, a diffusion sheet, a light collection sheet, an optical compensation film or a polarizing plate.

19. The optical part as set forth in any one of claims 14, 15 and 18, wherein the in-plane retardation $R_{550}$ at a wavelength of 550 nm of said film (a) satisfies the following condition,

$$|R_{550}| < 30 \ (nm)$$

20. The optical part as set forth in any one of claims 14, 15 and 18, wherein the in-plane retardation $R_{550}$ at a wavelength of 550 nm of said film (a) satisfies the following condition,

$$30 \ (nm) \leq |R_{550}| < 300 \ (nm)$$

21. A display device comprising the optical part as set forth in any one of claims 14, 15 and 18.

22. An optical film comprising a (co)polymer ($\alpha$) obtained from at least one olefin selected among 4-methyl-1-pentene, 3-methyl-1-pentene and 3-methyl-1-butene as a (co)monomer ingredient, satisfying the following condition,

$$R(450)/R(590) \leq 0.95$$

wherein, in the above formula, R(450) and R(590) each represent the in-plane retardation at wavelengths of 450 nm and 590 nm of said optical film.

23. The optical film as set forth in claim 22, satisfying the following condition,

$$R(450)/R(590) \leq 0.85$$

24. The optical film as set forth in claim 22 or 23, further satisfying the following condition,

$$|R_{50}(590)| \leq 200 \ nm$$

wherein, in the above formula, $R_{50}(590)$ represents the in-plane retardation at a wavelength of 590 nm per a thickness of 50 $\mu$m.

25. An optical film comprising an organic polymer, wherein the in-plane retardation $R_{50}(590)$ at a wavelength of 590 nm per a thickness of 50 $\mu$m satisfies the following condition (1-1), and the in-plane retardations R(450) and R(590) at wavelengths of 450 nm and 590 nm satisfy the following condition (1-2),

$$10 \ nm \leq |R_{50}(590)| \leq 20 \ nm \quad (1-1)$$

$$R(450)/R(590) \leq 0.95 \qquad (1-2)$$

26. The optical film as set forth in claim 25, comprising a (co)polymer ($\alpha$) obtained from at least one olefin selected among 4-methyl-1-pentene, 3-methyl-1-pentene and 3-methyl-1-butene as a (co)monomer ingredient.

27. The optical film as set forth in claim 25 or 26, wherein the in-plane retardation $R_{550}$ at a wavelength of 550 nm satisfies the following condition,

$$|R_{550}| < 30 \ (nm)$$

28. The optical film as set forth in claim 25 or 26, wherein the in-plane retardation $R_{550}$ at a wavelength of 550 nm satisfies the following condition,

$$30 \ (nm) \leq |R_{550}| < 300 \ (nm)$$

29. A copolymer of 4-methyl-1-pentene with $\alpha$-olefin having not less than 10 and not more than 14 carbon atoms other than said 4-methyl-1-pentene, wherein the proportion of the structural unit derived from said $\alpha$-olefin to the total copolymer is from not less than 1 and not more than 9 % by mole.

30. A film comprising the copolymer as set forth in claim 29.

31. The film as set forth in claim 30, wherein the film is formed by a melt extrusion molding method and then obtained by stretching and aligning.

32. The film as set forth in claim 30 or 31, wherein the film is used for optical purposes.

33. The film as set forth in any one of claims 30 to 32, wherein the film is a retardation plate.

34. The film as set forth in claim 33, wherein the in-plane retardation $R_{50}(590)$ at a wavelength of 590 nm per a thickness of 50 $\mu$m of said retardation plate satisfies the following condition,

$$R_{50}(590) \leq -22 \ nm$$

35. The film as set forth in claim 33 or 34, wherein said retardation plate is a retardation film satisfying the following characteristics,

$$R(450)/R(590) \leq 0.9$$

wherein, in the above formula, R(450) and R(590) each represent the in-plane retardation at wavelengths of 450 nm and 590 nm of said retardation film.

36. The film as set forth in any one of claims 30 to 34, wherein the film is a polarizing protective film or an optical compensation film.

37. A laminated polarizing plate in which a film (b) containing a polymer having a structural unit derived from at least one selected among 4-methyl-1-pentene, 3-methyl-1-pentene and 3-methyl-1-butene is directly or indirectly laminated on one surface of a polarizer (a) and a film (c) containing a polymer having a structural unit derived from cyclic olefin is directed or indirectly laminated on the other surface of said polarizer (a),

wherein the retardation R(590) at a wavelength of 590 nm of said film (b) satisfies the relationship of the following formula (2-1),

$$R(590) \geq 5 \ (nm) \qquad (2-1)$$

**38.** The laminated polarizing plate as set forth in claim 37, wherein the retardation R(450) at a wavelength of 450 nm of said film (b) and the retardation R(590) at a wavelength of 590 nm satisfy the relationship of the following formula (2-2),

$$R(450)/R(590) \leq 1 \qquad (2-2)$$

**39.** The laminated polarizing plate as set forth in claim 37,
wherein said polarizer (a) comprises iodine and/or dichroic dye, and a polyvinyl alcohol resin.

**40.** A liquid crystal display element having the laminated polarizing plate as set forth in any one of claims 37 to 39, and a liquid crystal cell.

**41.** The liquid crystal display element as set forth in claim 40,
wherein said film (b) is arranged at a side of said liquid crystal cell on the basis of said polarizer (a).

**42.** A display device having the laminated polarizing plate as set forth in any one of claims 37 to 39 and/or the liquid crystal display element as set forth in claim 40 or 41.

**43.** A laminate comprising:

first and second polarizing films,
a liquid crystal cell L arranged between said first and second polarizing films, and
a plurality of retardation films containing at least two pieces of retardation films A and at least one piece of retardation film C arranged between said first and second polarizing films,
wherein at least one piece of said retardation film C is arranged adjacent to said first or second polarizing film,
two pieces of said retardation films A and said liquid crystal cell L are arranged in the order of A, L and A, said retardation films A satisfy any of the following formulae (3-1) and (3-2), and at the same time said retardation film C satisfies the following formula (3-3),

$$nx > ny \geq nz \qquad (3-1)$$

$$nz \geq nx > ny \qquad (3-2)$$

$$nx \geq ny > nz \qquad (3-3)$$

wherein, in the above formulae (3-1) to (3-3), nx is the maximum in-plane refractive index of the retardation film; ny is the refractive index in the direction orthogonal to the direction in which the maximum in-plane refractive index of the retardation film occurs; and nz is the vertical refractive index of the retardation film.

**44.** The laminate as set forth in claim 43, wherein said liquid crystal cell L, said retardation film C and two pieces of said retardation films A are arranged in the order of C, A, L and A.

**45.** The laminate as set forth in claim 43, wherein said retardation film comprises two pieces of said retardation films C, and said liquid crystal cell L, two pieces of said retardation films C and two pieces of said retardation films A are arranged in the order of C, A, L, A and C.

46. The laminate as set forth in any one of claims 43 to 45, wherein the in-plane retardation Re(450) at a wavelength of 450 nm of at least one piece of said retardation film A, the in-plane retardation Re(550) at a wavelength of 550 nm and the in-plane retardation Re(650) at a wavelength of 650 nm satisfy the relationships of,

$$Re(450)/Re(550) < 1 \quad (3-4)$$

and

$$Re(650)/Re(550) > 1 \quad (3-5).$$

47. The laminate as set forth in claim 46, wherein the in-plane retardation Re (450) at a wavelength of 450 nm of said retardation film A, the in-plane retardation Re(550) at a wavelength of 550 nm and the in-plane retardation Re(650) at a wavelength of 650 nm satisfy the relationship of $0.70 \leq Re(450)/Re(550) < 0.90$.

48. The laminate as set forth in any one of claims 43 to 47, wherein the absolute value of the in-plane retardation Re (550) at a wavelength of 550 nm of at least one piece of said retardation film A is within the range of $10 \text{ nm} \leq |Re(550)| \leq 80 \text{ nm}$.

49. The laminate as set forth in any one of claims 43 to 48, wherein the retardations K(450), K(550) and K(650) in the thickness direction at wavelengths of 450 nm, 550 nm and 650 nm of at least one piece of said retardation film C satisfy the relationships of,

$$K(450)/K(550) \geq 1 \quad (3-6)$$

and

$$K(650)/K(550) \leq 1 \quad (3-7).$$

50. The laminate as set forth in any one of claims 43 to 49, wherein said retardation film A comprises a layer containing a 4-methyl-1-pentene (co)polymer.

51. A liquid crystal display element comprising the laminate as set forth in any one of claims 43 to 50.

52. A retardation film used as said retardation film A in the laminate as set forth in any one of claims 43 to 50, satisfying any of said formulae (3-1) and (3-2).

53. The retardation film as set forth in claim 52, wherein the absolute value of the in-plane retardation Re (550) at a wavelength of 550 nm satisfies the relationship of $10 \text{ nm} \leq |Re(550)| \leq 80 \text{ nm}$.

54. The retardation film as set forth in claim 52 or 53, comprising a 4-methyl-1-pentene (co)polymer.

55. A laminate comprising:

first and second polarizing films,
a liquid crystal cell L arranged between said first and second polarizing films, and
a plurality of retardation films containing a retardation film A1, a retardation film A2 and a retardation film C1 arranged between said first and second polarizing films,

wherein said retardation film A1, said retardation film A2, said retardation film C1 and said liquid crystal cell L are arranged in the order of L, A1, C1 and A2, said retardation film A1 and said retardation film A2 each independently satisfy any of the following formulae (4-1) and (4-2), and at the same time said retardation film C1 satisfies the following formula (4-3),

$$nx > ny \geq nz \qquad (4-1)$$

$$nz \geq nx > ny \qquad (4-2)$$

$$nx \geq ny > nz \qquad (4-3)$$

wherein, in the above formulae (4-1) to (4-3), nx is the maximum in-plane refractive index of the retardation film; ny is the refractive index in the direction orthogonal to the direction in which the maximum in-plane refractive index of the retardation film occurs; and nz is the vertical refractive index of the retardation film.

56. The laminate as set forth in claim 55, wherein said retardation film further comprises a retardation film C2, said retardation film A1, said retardation film A2, said retardation film C1, said retardation film C2 and said liquid crystal cell L are arranged in the order of L, A1, C1, A2 and C2, and said retardation film C2 satisfies the following formula (4-8),

$$nz > nx \geq ny \qquad (4-8)$$

57. The laminate as set forth in claim 55 or 56, wherein the in-plane retardation Re(450) at a wavelength of 450 nm of said retardation film A1 or said retardation film A2, the in-plane retardation Re(550) at a wavelength of 550 nm and the in-plane retardation Re(650) at a wavelength of 650 nm satisfy the relationships of,

$$Re(450)/Re(550) < 1 \quad (4-4)$$

and

$$Re(650)/Re(550) > 1 \quad (4-5).$$

58. The laminate as set forth in any one of claims 55 to 57, wherein the absolute value of the in-plane retardation Re(550) at a wavelength of 550 nm of said retardation film A1 or said retardation film A2 is within the range of 10 nm $\leq |Re(550)| \leq 80$ nm.

59. The laminate as set forth in any one of claims 55 to 58, wherein the retardations K(450), K(550) and K(650) in the thickness direction at wavelengths of 450 nm, 550 nm and 650 nm of said retardation film C1 or said retardation film C2 satisfy the relationships of,

$$K(450)/K(550) \geq 1 \quad (4-6)$$

and

$$K(650)/K(550) \leq 1 \quad (4-7).$$

**60.** The laminate as set forth in any one of claims 55 to 59, wherein said retardation film A1 or said retardation film A2 comprises a layer containing a 4-methyl-1-pentene (co)polymer.

**61.** A liquid crystal display element comprising the laminate as set forth in any one of claims 55 to 60.

**62.** A retardation film used as said retardation film A1 or said retardation film A2 in the laminate as set forth in any one of claims 55 to 60, satisfying any of said formulae (4-1) and (4-2).

**63.** The retardation film as set forth in claim 62, wherein the absolute value of the in-plane retardation Re(550) at a wavelength of 550 nm satisfies the relationship of 10 nm $\leq$ |Re(550)| $\leq$ 80 nm.

**64.** The retardation film as set forth in claim 62 or 63, comprising a 4-methyl-1-pentene (co)polymer.

Fig. 1

Fig. 2

114
115
116
117
118
119
120

Fig. 3

Fig. 4

P2

A2

L

A1

C

P1

1100

Fig. 5

P2

C2

A2

L

A1

C1

P1

1120

Fig. 6

Anti-glare And Non-reflection Layer

Polarizing Film

Retardation Film C

Retardation Film A

Glass Plate

Color Filter

Liquid Crystal

Oriented Film

Glass Plate

Retardation Film A

Retardation Film C

Polarizing Film

Luminance Improving Film

Prism Sheet

Diffusion Plate

Lamp

Fig. 7

Fig. 8

Fig. 9

Fig. 10

Fig. 11

Fig. 12

Fig. 13

Fig. 14

Fig. 15

Wavelength (nm)

Fig. 16

Fig. 17

Fig. 18

Fig. 19

Fig. 20

Fig. 21

P2

A2

L

C

A1

P1

EP 2 023 168 A1

Fig. 22

104

Fig. 23

Fig. 24

P2

A2

C

A1

L

P1

2110

Fig. 25

Fig. 26

P2

C2

A2

C1

A1

L

P1

2120

Fig. 27

Fig. 28

Anti-glare And Non-reflection Layer
Polarizing Film
Retardation Film C
Retardation Film A
Retardation Film C
Retardation Film A
Glass Plate
Color Filter
Liquid Crystal
Oriented Film
Glass Plate
Polarizing Film
Luminance Improving Film
Prism Sheet
Diffusion Plate
Lamp

Fig. 29

Fig. 30

Isoluminance contour

Fig. 31

Fig. 32

Fig. 33

Fig. 34

Fig. 35

Fig. 36

Isoluminance contour

Fig. 37

Fig. 38

Isoluminance contour

Fig. 39

P2

A2

L

C

A1

P1

EP 2 023 168 A1

Fig. 40

Fig. 41

Fig. 42

Fig. 43

## INTERNATIONAL SEARCH REPORT

| International application No. |
| --- |
| PCT/JP2007/000467 |

A. CLASSIFICATION OF SUBJECT MATTER
*G02B5/30*(2006.01)i, *G02F1/13363*(2006.01)i

According to International Patent Classification (IPC) or to both national classification and IPC

B. FIELDS SEARCHED

Minimum documentation searched (classification system followed by classification symbols)
G02B5/30, G02F1/13363

Documentation searched other than minimum documentation to the extent that such documents are included in the fields searched
Jitsuyo Shinan Koho          1922-1996   Jitsuyo Shinan Toroku Koho   1996-2007
Kokai Jitsuyo Shinan Koho   1971-2007   Toroku Jitsuyo Shinan Koho   1994-2007

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| X Y | JP 4-284402 A  (Asahi Chemical Industry Co., Ltd.), 09 October, 1992 (09.10.92), Par. Nos. [0010], [0011] (Family: none) | 1-42 50-54,60-64 |
| X Y | JP 2004-38148 A  (Eastman Kodak Co.), 05 February, 2004 (05.02.04), Par. No. [0014]; Figs. 5 to 8 & US 2003-193637 A1 | 43-64 46-54,57-64 |
| X Y | JP 2006-503315 A  (Merck Patent GmbH), 26 January, 2006 (26.01.06), Table 1 & WO 2004/36301 A1 | 55-64 57-64 |

[X] Further documents are listed in the continuation of Box C.    [ ] See patent family annex.

| * | Special categories of cited documents: |
| --- | --- |
| "A" | document defining the general state of the art which is not considered   to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search 19 June, 2007 (19.06.07) | Date of mailing of the international search report 03 July, 2007 (03.07.07) |
| --- | --- |
| Name and mailing address of the ISA/ Japanese Patent Office | Authorized officer |
| Facsimile No. | Telephone No. |

Form PCT/ISA/210 (second sheet) (April 2005)

**INTERNATIONAL SEARCH REPORT**

| International application No. |
| --- |
| PCT/JP2007/000467 |

C (Continuation).   DOCUMENTS CONSIDERED TO BE RELEVANT

| Category* | Citation of document, with indication, where appropriate, of the relevant passages | Relevant to claim No. |
| --- | --- | --- |
| Y | WO 2003/32060 A1  (Teijin Ltd.),<br>17 April, 2003 (17.04.03),<br>Page 8, line 31 to page 9, line 12; Figs.<br>1 to 6<br>& EP 1435541 A1          & US 7012663 B2<br>& CN 1491370 A          & CA 2434069 A1 | 46-54,57-64 |

Form PCT/ISA/210 (continuation of second sheet) (April 2005)

## INTERNATIONAL SEARCH REPORT

| International application No. |
|---|
| PCT/JP2007/000467 |

**Box No. II    Observations where certain claims were found unsearchable (Continuation of item 2 of first sheet)**

This international search report has not been established in respect of certain claims under Article 17(2)(a) for the following reasons:

1. ☐ Claims Nos.:
    because they relate to subject matter not required to be searched by this Authority, namely:

2. ☐ Claims Nos.:
    because they relate to parts of the international application that do not comply with the prescribed requirements to such an extent that no meaningful international search can be carried out, specifically:

3. ☐ Claims Nos.:
    because they are dependent claims and are not drafted in accordance with the second and third sentences of Rule 6.4(a).

**Box No. III    Observations where unity of invention is lacking (Continuation of item 3 of first sheet)**

This International Searching Authority found multiple inventions in this international application, as follows:
    Claims 1-42 pertain to an invention in which a film (a) of a (co)polymer (α) obtained from at least one olefin selected among 4-methyl-1-pentene, 3-methyl-1-pentene, and 3-methyl-1-butene as a (co)monomer ingredient is used to compensate the wavelength dependence of birefringence of an optical part (B). Claims 43-64 pertain to an invention relating to the order of retardation films.

1. ☐ As all required additional search fees were timely paid by the applicant, this international search report covers all searchable claims.

2. ☒ As all searchable claims could be searched without effort justifying an additional fee, this Authority did not invite payment of any additional fee.

3. ☐ As only some of the required additional search fees were timely paid by the applicant, this international search report covers only those claims for which fees were paid, specifically claims Nos.:

4. ☐ No required additional search fees were timely paid by the applicant.    Consequently, this international search report is restricted to the invention first mentioned in the claims; it is covered by claims Nos.:

**Remark on Protest**
the

☐ The additional search fees were accompanied by the applicant's protest and, where applicable, payment of a protest fee..

☐ The additional search fees were accompanied by the applicant's protest but the applicable protest fee was not paid within the time limit specified in the invitation.

☐ No protest accompanied the payment of additional search fees.

Form PCT/ISA/210 (continuation of first sheet (2)) (April 2005)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 4284402 A
- JP 2000275433 A
- JP 10068816 A
- JP 2000137116 A
- JP 2002156528 A
- JP 1081957 A
- JP 3032060 A
- JP 59206418 A
- JP 6145248 A
- JP 9268243 A
- JP 11124479 A
- JP 2004177785 A
- JP 2003105022 A
- JP 8043812 A
- JP 2002221619 A
- JP 6033414 A
- WO 03032060 A

**Non-patent literature cited in the description**

- **DENG-KE YANG ; SHIN-TSON WU.** Fundamentals of Liquid Crystal Devices. John & Wiley, 2006, 213-234
- **DENG-KE YANG ; SHIN-TSON WU.** Fundamentals of Liquid Crystal Devices. John Wiley & Sons Inc, 2006, 213-234